# FASCICULE DE BREVET EUROPEEN

(11) **EP 3 172 264 B1**
(45) Date de publication et mention de la délivrance du brevet: **16.06.2021**
(21) Numéro de dépôt: 15766891.4
(22) Date de dépôt: 20.07.2015
(51) Int. Cl.: C08J 5/22, C08G 65/00, C08G 65/48, C08L 71/00, H01B 1/00, H01M 8/02

(54) **NOUVEAUX POLYMERES CONTENANT DES SELS DE LITHIUM OU DE SODIUM DE BIS(SULFONYL)IMIDES GREFFES, LEURS PROCEDES DE PREPARATION ET LEURS UTILISATIONS COMME ELECTROLYTES POUR BATTERIES**
NEUARTIGE POLYMERE MIT GEPFROPFTEN BIS(SULFONYL)IMID-NATRIUM- ODER -LITHIUMSALZEN, VERFAHREN ZUR HERSTELLUNG DAVON UND VERWENDUNGEN DAVON ALS ELEKTROLYTEN FÜR BATTERIEN
NOVEL POLYMERS CONTAINING GRAFTED BIS(SULFONYL)IMIDE SODIUM OR LITHIUM SALTS TO THE METHODS FOR THE PRODUCTION THEREOF, AND TO THE USES OF SAME AS ELECTROLYTES FOR BATTERIES

(30) Priorité: 23.07.2014 FR 1401710
(43) Date de publication de la demande: 31.05.2017
(73) Titulaire: CDP-Innovation, 69007 Lyon (FR); Centre National de la Recherche Scientifique, 75016 Paris (FR); Université d'Aix Marseille, 13007 Marseille (FR)
(72) Inventeur: DESMURS Jean-Roger, 06400 Cannes (FR); DUNACH CLINET Elisabet, 06270 Villeuneuve Loubet (FR); KNAUTH Philippe, 13907 Marseille (FR); MORIZUR Vincent, 29870 Lannilis (FR); OLIVERO Sandra, 06100 Nice (FR)
(74) Mandataire: Macquet, Christophe
(86) Numéro de dépôt international: PCT/FR2015/000154
(87) Numéro de publication internationale: WO 2016/012670

(56) Documents cités:
- EP-A2- 0 574 791
- WO-A1-99/61141
- FR-A1- 2 979 630
- JP-A- 2002 324 559

## Description

La présente invention concerne de nouveaux polymères contenant des sels de lithium ou de sodium de bis(sulfonyl)imides greffés, leurs procédés de préparation et leurs emplois comme électrolyte dans les batteries au lithium ou au sodium.

Plus précisément, la présente invention a pour objet de nouveaux électrolytes polymères obtenus à partir de polymères commercialement disponibles ainsi que de nouvelles batteries de type lithium-polymères ou sodium polymères.

Les batteries au plomb ont été les plus couramment utilisées pendant de nombreuses décennies. Cependant, la technologie au plomb a plusieurs inconvénients liés au poids des batteries, à la toxicité du plomb ainsi qu'à l'utilisation d'un liquide corrosif. Ceci a conduit au développement de batteries alcalines dont les électrodes sont soit à base de nickel et de cadmium (batteries nickel-cadmium), soit, plus récemment, à base de nickel et d'hydrures métalliques (batteries nickel-hydrure), soit à base d'oxyde d'argent couplé à du zinc, du cadmium ou du fer. Toutes ces technologies utilisent une solution de potasse comme électrolyte et présentent comme inconvénient majeur une densité d'énergie massique relativement faible au regard des besoins liés au développement des équipements portables comme les téléphones et les ordinateurs. De plus, le poids de ces batteries constitue un inconvénient pour leur utilisation dans les véhicules électriques.

Les fabricants ont par conséquent développé une nouvelle filière basée sur des batteries au lithium utilisant une électrode négative à base de carbone, dans laquelle le lithium s'insère, et un oxyde métallique, notamment de cobalt, à haut potentiel d'oxydation comme électrode positive. Le principe de fonctionnement est le suivant :
Au cours de la charge électrochimique de la batterie, les ions lithium traversent l'électrolyte qui est un conducteur ionique et isolant électronique et s'intercalent dans le matériau d'électrode négative généralement constituée par du graphite lors de la décharge de la batterie, c'est-à-dire en cours d'utilisation, c'est le phénomène inverse qui s'opère. Les ions lithium se désintercalent.

Dans les batteries, le conducteur ionique ou électrolyte, qui sépare les électrodes, est un élément clé. D'une part, son état, liquide, solide ou gélifié affecte la sûreté du système et d'autre part, sa conductivité détermine la gamme de température de fonctionnement.

Dans les batteries au lithium, les électrolytes liquides à base d'un solvant organique, tel que le diméthylènecarbonate ou l'éthylènecarbonate, et d'un sel dissous, comme l'hexafluorophosphate de lithium LiPF₆ ou le bis(triflorométhanesulfonyl)imidure de lithium (CF₃SO₂)₂NLi, sont couramment utilisés. Cependant, elles ne présentent pas les conditions optimales de sécurité liées à la manipulation d'un liquide corrosif et inflammable. De plus, ces systèmes présentent l'inconvénient de pouvoir former des dendrites lors des charges de la batterie ce qui peut provoquer un court circuit et la destruction de la batterie.

Afin de pallier ces inconvénients majeurs, il a été développé une nouvelle technologie basée sur des électrolytes polymères solides à anode de lithium, d'où l'appellation de « batterie lithium-polymère ». Ainsi, le brevet FR 2853320 décrit des électrolytes obtenus par polymérisation de polyorganosiloxanes par un photo-amorceur en présence d'un sel électrolyte. Outre le fait que l'anion n'est pas immobilisé et migre dans l'électrolyte provoquant des phénomènes de polarisation aux électrodes, cette technique nécessite des catalyseurs du type iodonium qui sont particulièrement toxiques. Ainsi, Chung-Bo Tsai, Yan-Ru Chen, Wen-Hsien Ho, Kuo-Feng Chiu, Shih-Hsuan Su décrivent dans le brevet US 2012/0308899 A1 la sulfonation du PEEK en SPEEK et la préparation du sel de lithium correspondant. Cette technique simple ne permet pas d'avoir une délocalisation suffisante de la charge négative sur la fonction sulfonate et l'ion lithium est trop coordonné à la fonction sulfonate pour atteindre des conductivités très élevées. Plus récemment, une autre approche a été décrite par certains auteurs qui ont tenté d'immobiliser l'anion par polymérisation de monomères lesquels contenaient le sel de lithium servant d'éléctrolyte. Le brevet FR 2979630 et la publication de D. Gigmes et coll. dans Nature Materials, 12, 452-457 (2013)décrivent la synthèse de polymères blocs contenant un électrolyte dont l'anion est fixé au polymère. Les conductivités indiquées sont les meilleures obtenues à cette date pour des batteries lithium-polymères. Dans la synthèse de ce type d'électrolytes, les monomères de départ ne sont pas commerciaux et doivent être préparés en plusieurs étapes. De plus, la technique de polymérisation pour préparer des polymères blocs est onéreuse comparée à d'autres techniques de polymérisation.

Le document WO 99/61141 A1 décrit un procédé de fabrication de polymères réticulés utilisables dans des membranes conductrices d'ions (ICM). Le procédé implique soit (i) la réticulation d'un polymère ayant des groupements halogénure d'acide par réaction avec un agent de réticulation qui se lie à au moins deux fonctions halogénure d'acide, soit (ii) la réticulation d'un polymère ayant des groupements amide par réaction avec un agent de réticulation qui se lie à au moins deux fonctions amide. La conductivité protique de ces membranes réticulées est typiquement comprise entre 0,02 à 0,06 S/cm à température ambiante. Le document EP 0 574 791 A2 divulgue une membrane électrolyte polymère à base d'un polyéther cétone aromatique sulfoné. Les polymères sont réticulés et contiennent à la fois des fonctions sulfonamides et des fonctions sulfoniques. Les membranes obtenues sont utilisées dans des piles à combustible comme membrane protiques. Le document JP 2002 324 559 A décrit des sulfonylimides sur une base perfluorosulfonique ou Nafion. Les polymères préparés sont utilisés dans le domaine des piles à combustible (membranes protiques et non-lithiées), comme capteurs d'humidité ou capteurs de gaz. Ces polymères totalement perfluorés sont excessivement chers. De plus, ces trois documents font intervenir un traitement à l'eau des polymères qui est préjudiciable pour des électrolytes pour des batteries au lithium.

Pour dépasser ces inconvénients, la demanderesse a préféré s'orienter vers des polymères existants, moins onéreux.

La présente invention concerne de nouveaux polymères de formules I , II, III, IV, V, VI, VII, VIII, IX, X, XI, XII, XIII, XIV et XV utilisés comme éléctrolytes pour batteries ou polymères conducteurs. 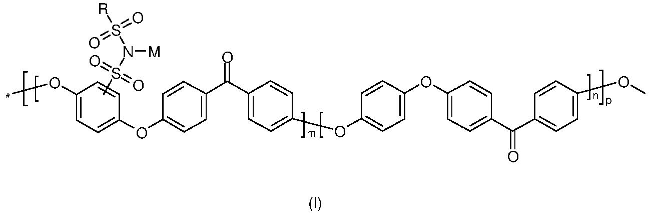 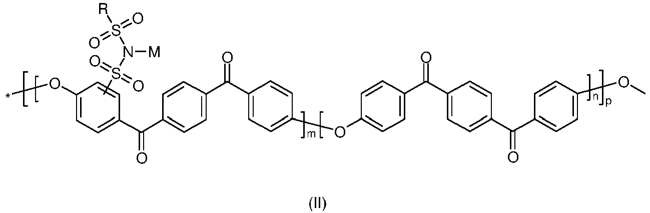 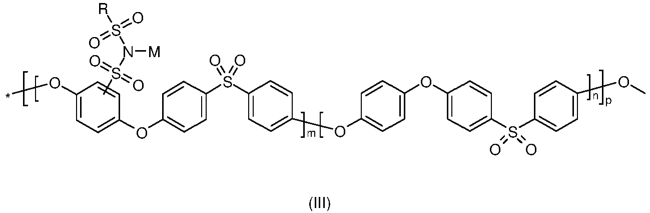 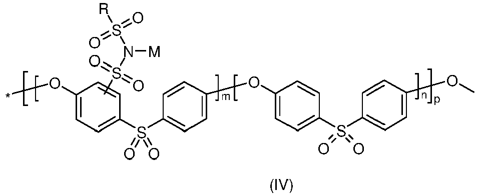 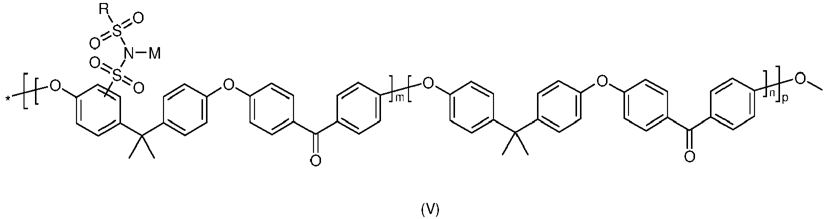 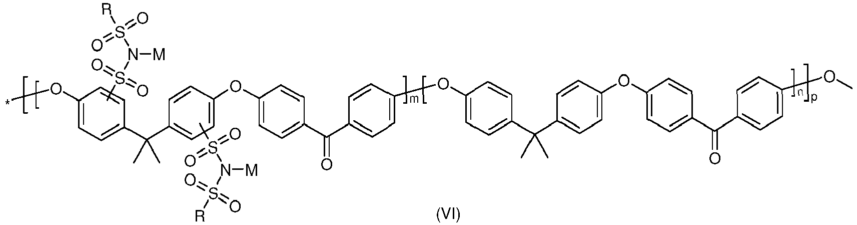 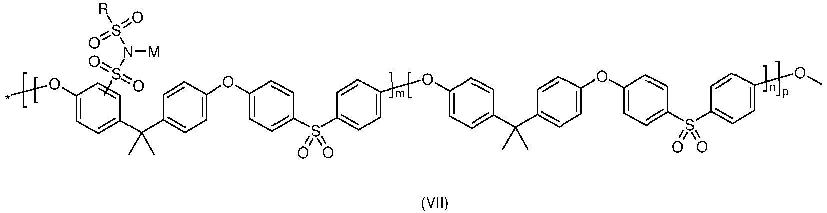 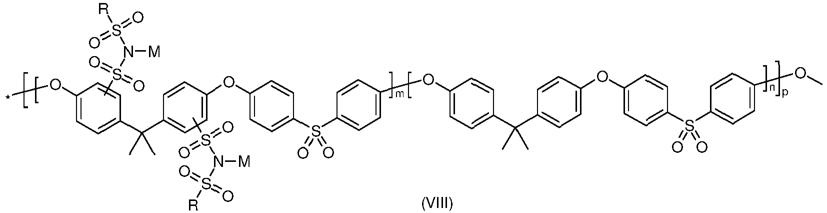 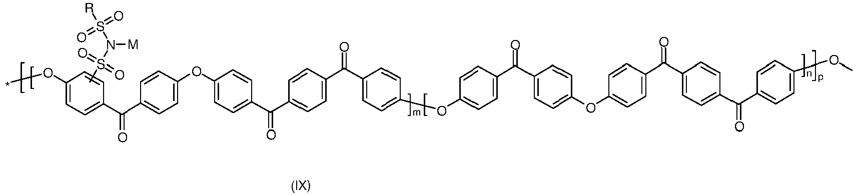 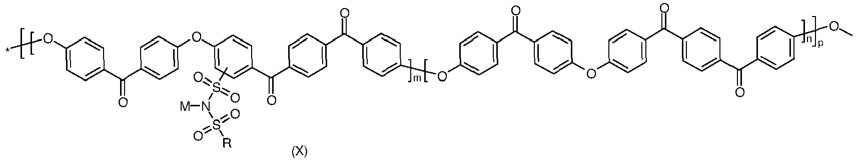 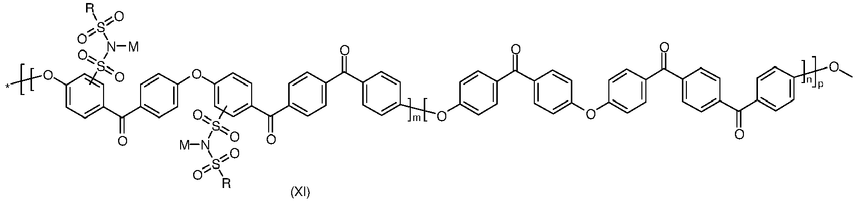 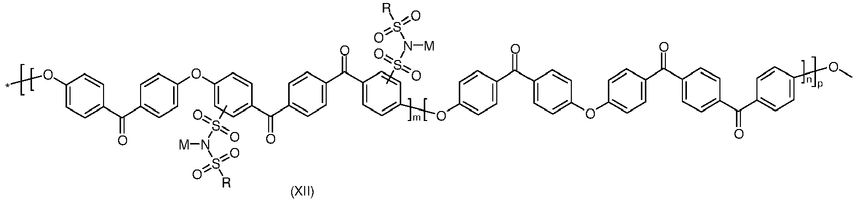 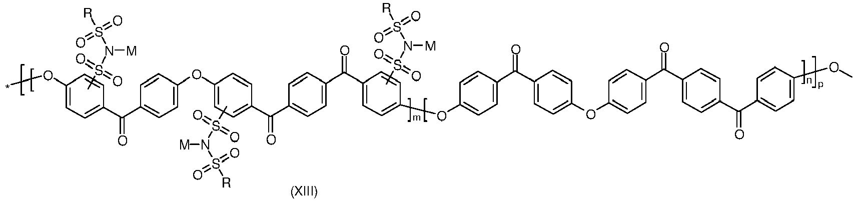 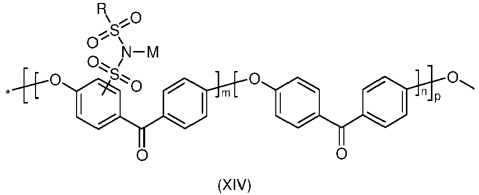 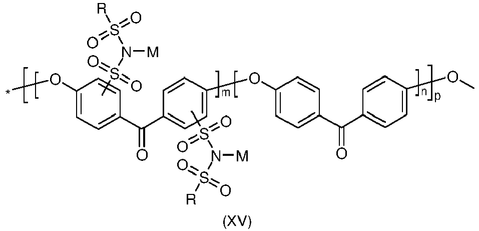 dans lesquelles :
- M représente un atome de lithium ou de sodium
- R représente un groupement ou des groupements différents choisi(s) parmi :
   - un groupement alkyle ou cycloalkyle ayant de 1 à 30 atomes de carbone linéaire ou ramifié éventuellement substitué par un motif cycloalkyle, aryle, perfluoroalkyle, polyfluoroalkyle, mono ou polyéthoxylé ;
   - un groupement perfluoro- ou polyfluoroalkyle éventuellement substitué par des groupes aromatiques ;
   - un groupement aryle ou polyaryliques éventuellement substitué par des motifs alkyles, cycloalkyles, polyfluoro- ou perfluoroalkyles, par des fonctions nitriles, des fonctions alkyl- ou alkylsulfonyles, par des atomes de fluor ;
- m représente le pourcentage d'unités polymériques ayant un motif oxoaryle ou dioxoaryle possédant un sel de bis(sulfonyl)imidure greffé. Ce pourcentage varie entre 50 et 100%, préférentiellement entre 90 et 100%,
- n représente le pourcentage d'unités polymériques ayant aucun motif oxoaryle ou dioxoaryle fonctionnalisé par un motif bis(sulfonyl)imide. Ce pourcentage varie entre 0 et 50%, préférentiellement ente 0 et 10%,
- p représente le nombre d'unités polymériques du polymère ; p varie de 40 à 300, préférentiellement entre 60 et 200.

De manière préférentielle, on choisira les polymères de formules I , II, III, IV, V, VI, VII, VIII, IX, X, XI, XII, XIII, XIV et XV dans lesquelles
- M représente un atome de lithium ou de sodium
- R représente un groupement ou des groupements différents choisi(s) parmi :
   - un groupement alkyle ou cycloalkyle ayant de 1 à 10 atomes de carbone linéaire ou ramifié éventuellement substitué par un motif cycloalkyle, aryle, perfluoroalkyle, polyfluoroalkyle, mono ou polyéthoxylé ;
   - un groupement perfluoro- ou polyfluoroalkyle éventuellement substitué par des groupes aromatiques ;
   - un groupement aryle ou polyaryliques éventuellement substitués par des motifs alkyles, cycloalkyles, polyfluoro- ou perfluoroalkyles, par des fonctions nitriles, des fonctions alkyl- ou alkylsulfonyles, par des atomes de fluor ;
- m représente le pourcentage d'unités polymériques ayant un motif oxoaryle ou dioxoaryle fonctionnalisé par un motif bis(sulfonyl)imide. Ce pourcentage varie entre 90 et 100%.
- n représente le pourcentage d'unités polymériques ayant un motif oxoaryle ou dioxoaryle non fonctionnalisé par un motif bis(sulfonyl)imide. Ce pourcentage varie entre 0 et 10%.
- p représente le nombre d'unités polymériques du polymère ; P varie de 40 à 300.

De manière très préférentielle, on choira les polymères de formules I , II, III, IV, V, VI, VII, VIII, IX, X, XI, XII, XIII, XIV et XV selon la revendication 1 dans lesquelles
- M représente un atome de lithium ou de sodium
- R représente un groupement ou des groupements différents choisi(s) parmi :
   - un alkyle de 1 à 10 atomes de carbone comme les groupes méthyle, éthyle, propyle, butyle, pentyle, hexyle, cyclohexyle, éthylhexyle;
   - un groupe trifluorométhyle, pentafluoroéthyle, nonafluorobutyle, 1,1,2,2-tétrafluoroéthyle ;
   - un groupe aryle de type phényle, tolyle, naphtyle, trifluorométhylphényle, bis(trifluorométhyl)phényle, cyanophényle, alkylsulfonylphényle, arylsulfonylphényle, méthoxyphenyle, butoxyphényle, pentafluorophényle, alkylsulfonylphenyle, fluorophenyle ;
- m représente le pourcentage d'unités polymériques ayant un motif oxoaryle ou dioxoaryle fonctionnalisé par un motif bis(sulfonyl)imide. Ce pourcentage varie entre 90 et 100%.
- n représente le pourcentage d'unités polymériques ayant un motif oxoaryle ou dioxoaryle non fonctionnalisé par un motif bis(sulfonyl)imide. Ce pourcentage varie entre 0 et 10%.
- p représente le nombre d'unités polymériques du polymère; p varie de 60 à 200.

A titre d'exemple, le groupe R est choisi parmi les groupes méthyle, éthyle, propyle, cyclopropyle, butyle, 1-décyle, 1-dodécyle, 1-hexanedécyl, 1-octyldécyle, (7,7-diméthyl-2-oxobicyclo[2.2.1]heptan-1-yl)méthyle, ((1R)-7,7-diméthyl-2-oxobicyclo[2.2.1]heptan-1-yl)méthyle, (1S)-(7,7-diméthyl-2-oxobicyclo[2.2.1]heptan-1-yl)méthyle, cyclohexylméthyle, trifluorométhyle, phényle, tolyle, naphtyle, 4-trifluorométhylphényle, 3,5-bis(trifluorométhyl)phényle, 4-cyanophényle, 1,1,2,2,2-pentafluoroéthanyle, nonafluorobutyle, pentaflurophényle, 2,3,5,6-tétrafluorophényle, 4-fluorophényle, 2,4-difluorophényle, 3,5-difluorophényle, 2,3,4,5,6-pentafluorophényle, 4-cyanophényle, 4-(trifluorométhyl)phényle, 3-(trifluorométhyl)phényle, 2-(trifluorométhyl)phényle, 4-méthylphényle, 1-naphtyle, 2-naphtyle, 3,5-difluorobenzyle, 4-fluorobenzyle, 3-trifluorométhylbenzyle, 4-trifluorométhylbenzyle, 2,5-diméthylbenzyle, 2-phényléthyle, 4-méthoxyphényle, 4-n-butylphényle, 4-t-butylphényle, 4-butoxyphényle, 2-fluoro-5-(trifluorométhyl)phényle, 4-éthylphényle.

L'invention concerne en outre des électrolytes formés des polymères précités, pour batteries, ainsi que des batteries comportant de tels électrolytes.

On notera que les polymères précités selon l'invention ne comportent pas de motifs sulfoniques - SO₃H. Ces motifs forment des fonctions acides dont la force, trop limitée, lie les cations et, notamment, les ions Lithium, de manière trop importante. Les motifs bis(sulfonyl)imides des polymères selon l'invention forment des fonctions acides dont la force, supérieure à celle des motifs sulfoniques, lie les cations et, notamment, les ions Lithium, de manière moins importante, facilitant ainsi leur migration au sein de l'electrolyte.

Selon une première variante, les polymères de formules I, II, III, IV, V, VI, VII, VIII, IX, X, XI, XII, XIII, XIV et XV peuvent être obtenus :
1) en réalisant dans une première étape la chlorosulfonation d'un polymère de formules XVI, XVII, XVIII, XIX, XX, XXI, XXII, XXIII par un mélange d'acide chlorosulfonique, de chlorure de thionyle et d'un formamide selon un mode opératoire optimisé. 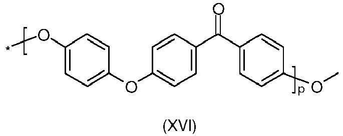 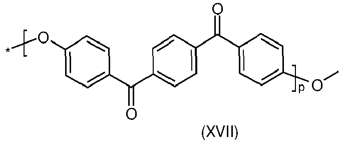 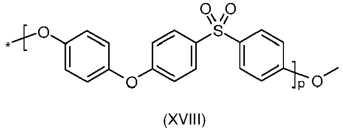 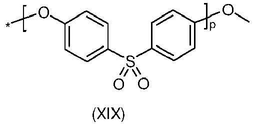 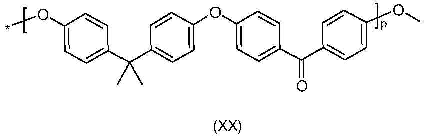 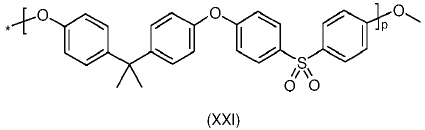 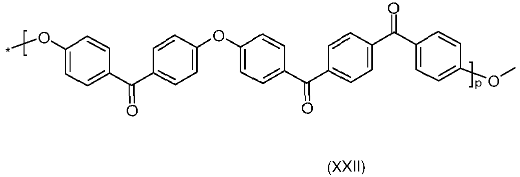 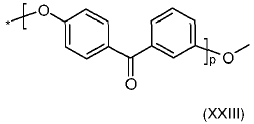 dans lesquelles
   - p représente le nombre d'unités polymériques du polymère; p varie de 40 à 300, préférentiellement entre 60 et 200.

   Pour obtenir les polymères de formules XXIV, XXV, XXVI, XVII, XXVIII, XIX, XXX, XXXI, XXXII, XXXIII, XXXIV, XXXV, XXXVI, XXXVII et XXXVIII 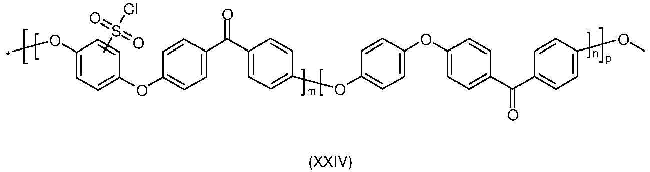 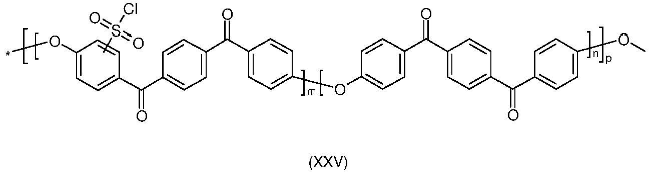 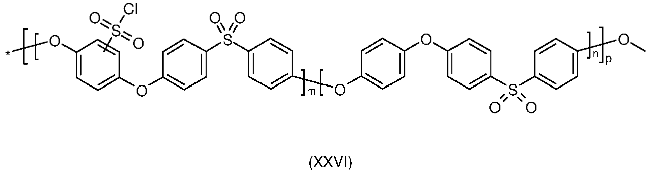 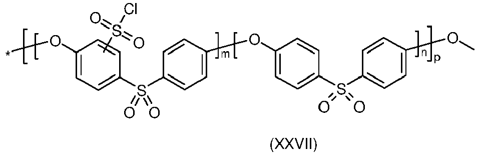 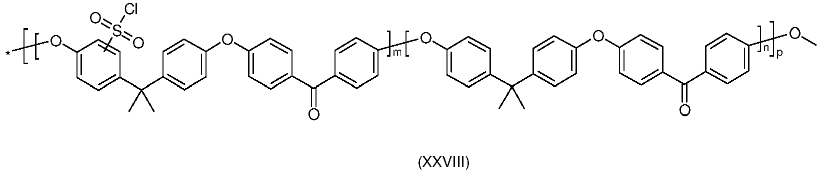 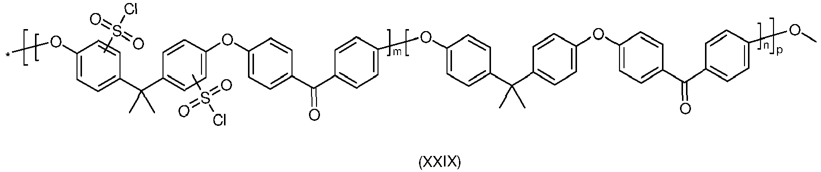 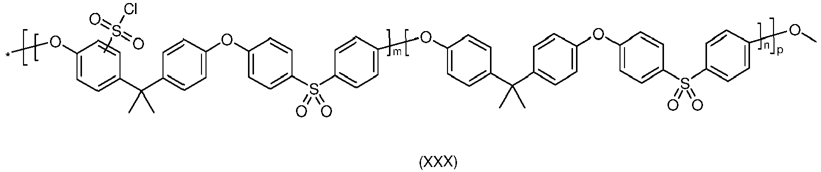 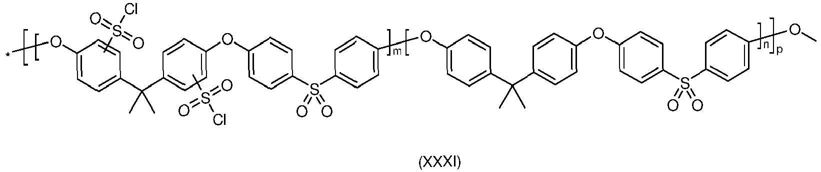 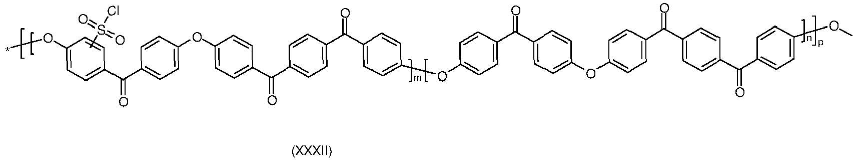 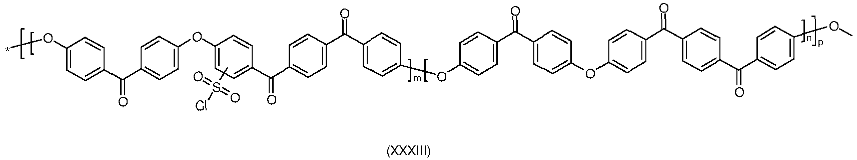 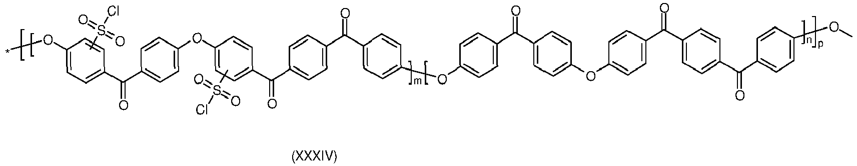 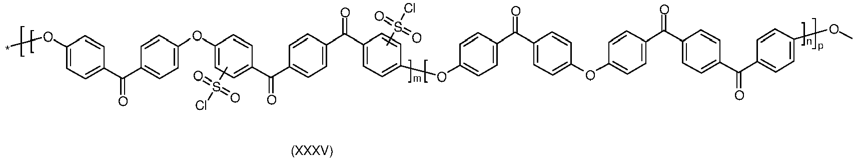 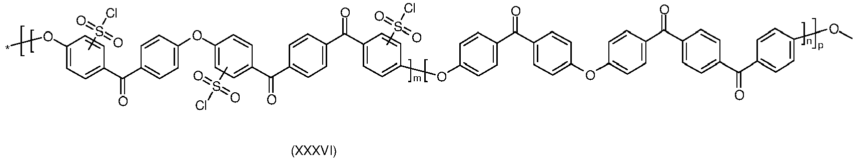 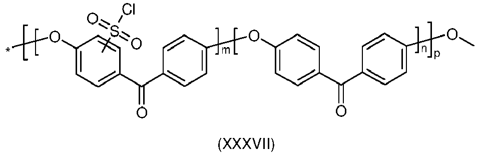 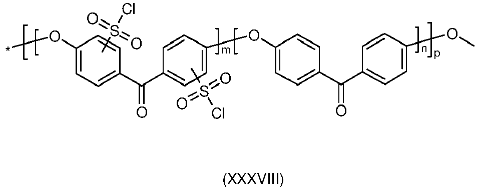 Dans lesquelles :
   - m représente le pourcentage d'unités polymériques ayant un motif oxo aryle ou dioxoaryle fonctionnalisé par un groupement chlorosulfoné. Ce pourcentage varie entre 50 et 100%, préférentiellement entre 90 et 100%.
   - n représente le pourcentage d'unités polymériques ayant un motif dioxoaryle non fonctionnalisé par un groupement chlorosulfoné. Ce pourcentage varie entre 0 et 50%, préférentiellement entre 0 et 10%,
   - p représente le nombre d'unités polymériques du polymère; p varie de 40 à 300, préférentiellement entre 60 et 200.

   Les polymères de départ sont des produits commerciaux. Le polymère de formule XVI est connu commercialement sous le nom de poly(éther éther cétone) ou poly ether ether ketone ou PEEK 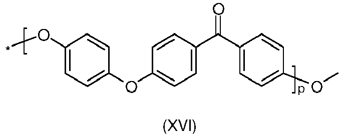 le polymère XVII est connu commercialement sous le nom de poly(éther cétone cétone) ou poly ether ketone ketone ou PEKK 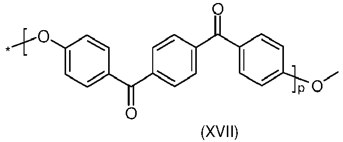 le polymère XVIII est connu commercialement sous le nom de poly(ether ether sulfone) ou PEES 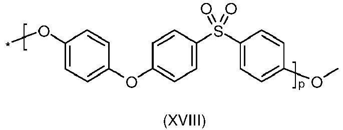 le polymère XIX est connu commercialement sous le nom de poly(ether sulfone) ou PES 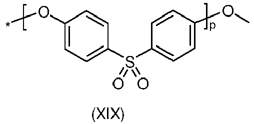 le polymère XX fait partie de la famille des poly(arène éther cétone) et est connu commercialement sous le nom de poly(bisphénol A PAEK) 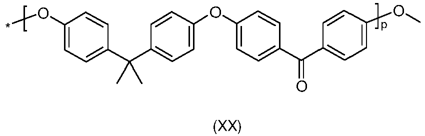 le polymère XXI fait partie de la famille des poly(arène éther sulfone) et est connu commercialement sous le nom de poly(bisphénol A PAES) 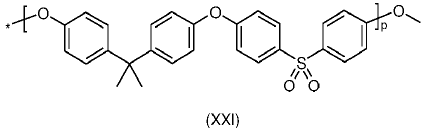 le polymère XXII est connu commercialement sous le nom de poly(éther cétone éther cétone cétone) ou poly(ether ketone ether ketone ketone) ou PEKEKK 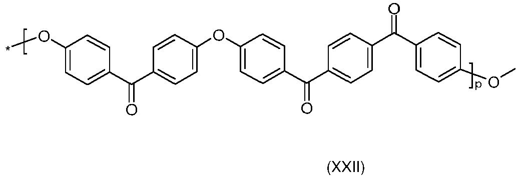 le polymère XXIII est connu commercialement sous le nom de poly(éther cétone) ou poly(ether ketone) ou PEK 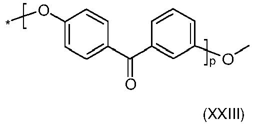
   Cette liste de polymères n'est pas limitative puisqu'il existe un grand nombre d'autres polymères commercialement disponibles ou pas dans les familles des poly(aryl éther cétone), poly(aryl éther sulfone). Selon l'invention, les polymères préférés en raison de leur grande disponibilité sont le PEEK, le PEK, le PES, le PEKK et le PEKEKK.
   La chlorosulfonation est réalisée à une température comprise entre 0° et 80° C avec 1 à 10 équivalents d'acide chlorosulfonique, 1 à 30 équivalents de chlorure de thionyle, 1 à 10 équivalents d'un amide préférentiellement le N,N-diméthylformamide, avec ou sans solvant. Les solvants préférés selon l'invention sont le THF, le méthylTHF, le dichlorométhane, le dichloroéthane. La chlorosulfonation de certains polymères peut conduire à des mélanges de nombreux isomères. Cela est particulièrement vrai pour le polymère XXII ou PEKEKK. Les polymères chlorosulfonés XXXII, XXXIII, XXXIV, XXXV et XXXVI sont donnés à titre d'exemple. D'autres isomères peuvent être formés durant la chlorosulfonation.
2) dans une deuxième étape, on fait réagir sur les polymères de formules XXIV, XXV, XXVI, XVII, XXVIII, XIX, XXX, XXXI, XXXII, XXXIII, XXXIV, XXXV, XXXVI, XXXVII et XXXVIII avec un sulfonamide de formule XXXIX en milieu solvant. 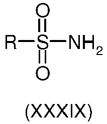 dans laquelle :
   - R représente un groupement ou des groupements différents choisi(s) parmi :
      - un groupement alkyle ou cycloalkyle ayant de 1 à 30 atomes de carbone linéaire ou ramifié éventuellement substitué par un motif cycloalkyle, aryle, perfluoroalkyle, polyfluoroalkyle, mono ou polyéthoxylé ;
      - un groupement perfluoro- ou polyfluoroalkyle éventuellement substitué par des groupes aromatiques ;
      - un groupement aryle ou polyaryliques éventuellement substitués par des motifs alkyles, cycloalkyles, polyfluoro- ou perfluoroalkyles, par des fonctions nitriles, des fonctions alkyl- ou alkylsulfonyles, par des atomes de fluor;
   - m représente le pourcentage d'unités polymériques ayant un motif oxoaryle ou dioxoaryle possédant un sel de bis(sulfonyl)imidure greffé. Ce pourcentage varie entre 50 et 100%, préférentiellement entre 90 et 100%,
en présence d'une base lithiée ou sodée.

A titre d'exemple non limitatif de sulfonamides pouvant être utilisés dans l'invention, nous citerons le méthanesulfonamide, l'éthanesulfonamide, le propanesulfonamide, le butanesulfonamide, le 1-decanesulfonamide, le 1-dodecanesulfonamide, le (7,7-diméthyl-2-oxobicyclo[2.2.1]heptan-1-yl)méthanesulfonamide, le ((1R)-7,7-diméthyl-2-oxobicyclo[2.2.1]heptan-1-yl)méthanesulfonamide, le (1S)-(7,7-diméthyl-2-oxobicyclo[2.2.1]heptan-1-yl)méthanesulfonamide, cyclohexylméthanesulfonamide, , le benzènesulfonamide, les toluènesulfonamide, les naphtalènesulfonamides, les trifluorobenzènesulfonamides, le 3,5-bis(trifluoro)benzenesulfonamide, le 2,5-bis(trifluorométhyl)benzènesulfonamide, 4-cyanobenzenesulfonamide 1,1,2,2,2-pentafluoroéthanesulfonamide, le nonafluorobutanesulfonamide, le pentafluorobenzènesulfonamide, 2,3,5,6-tétrafluorobenzènesulfonamide, 4-fluorobenzènesulfonamide, le 2,4-difluorobenzensulfonamide, 3,5-difluorobenzènesulfonamide, 2,3,4,5,6-pentafluorobenzènesulfonamide, 4-(trifluorométhyl)benzènesulfonamide, 3-(trifluorométhyl)benzènesulfonamide, 2-(trifluorométhyl)benzènesulfonamide, 4-methylbenzènesulfonamide, le 1-naphtalenesulfonamide, le 2-naphtalènesulfonamide, le 3,5-difluorophenylmethanesulfonamide, le 4-fluorophenylmethanesulfonamide, le 3-trifluorométhylphenylmethanesulfonamide, le 4-trifluorométhylphenylmethanesulfonamide, le 2,5-dimethylphenylmethanesulfonamide, le 2-phénylethanesulfonamide, le 4-méthoxybenzènesulfonamide, le 4-n-butylbenzènesulfonamide, le 4-t-butylbenzènesulfonamide, le 4-butoxybenzènesulfonamide, le 2-fluoro-5-(trifluoromethyl)benzènesulfonamide, le 4-éthylbenzènesulfonamide.

Les bases lithiées ou sodées sont choisies préférentiellement parmi la lithine, la soude, le méthylate de lithium, le méthylate de sodium, l'éthylate de lithium, l'éthylate de sodium, l'isopropylate de lithium, l'isopropylate de sodium, le tertiobutylate de lithium, le tertiobutylate de sodium, l'hydrure de lithium, l'hydrure de sodium, le n-butyllithium, le n-butylsodium, le s-butyllithium, le diisopropylamidure de lithium, le tert-butyllithium, le méthyllithium le phényllithium, le phénylsodium, le benzyllithium, le benzylsodium, le dimsylate de lithium, le dimesylate de sodium, le carbonate de lithium, le carbonate de sodium, l'acétate de lithium, l'acétate de sodium. Les bases préférées sont celles qui ne forment pas d'eau lors de la réaction.

Les solvants utilisés pour la réaction de condensation du sulfonamide de formule XXXIX avec les polymères chlorosulfonés de formules XXIV, XXV, XXVI, XVII, XXVIII, XIX, XXX, XXXI, XXXII, XXXIII, XXXIV, XXXV, XXXVI, XXXVII et XXXVIII sont des solvants aprotiques polaires. Les solvants préférés sont le THF, le méthylTHF, le dioxane, le dichlorométhane et le dichloroéthane, le diméthylsulfoxyde.

Selon une seconde variante, les polymères de formules I, II, III, IV, V, VI, VII, VIII, IX, X, XI, XII, XIII, XIV et XV peuvent être obtenus :
1) en réalisant dans une première étape la chlorosulfonation d'un polymère de formules XVI, XVII, XVII, XIX, XX, XXI, XXII et XXIII par un mélange d'acide chlorosulfonique, de chlorure de thionyle et d'un formamide selon un mode opératoire optimisé. 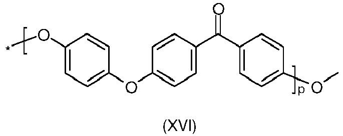 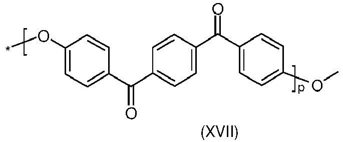 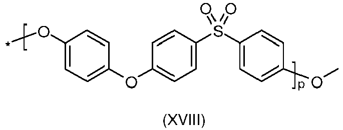 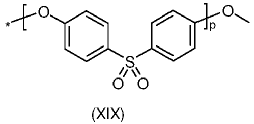 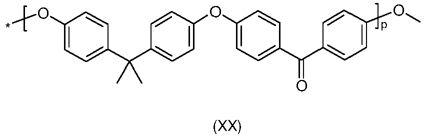 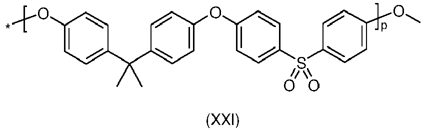 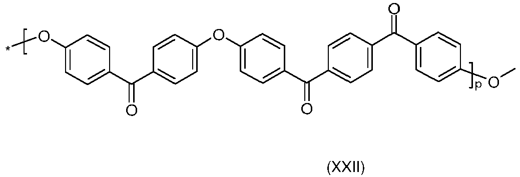 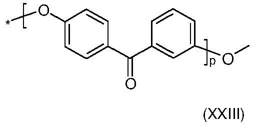 dans lesquelles
   - p représente le nombre d'unités polymériques du polymère; p varie de 40 à 300, préférentiellement entre 60 et 200,
   pour obtenir les polymères de formules XXIV, XXV, XXVI, XXVII, XXVIII, XXIX, XXX, XXXI, XXXII, XXXIII, XXXIV, XXXV, XXXVI, XXXVII et XXXVIII 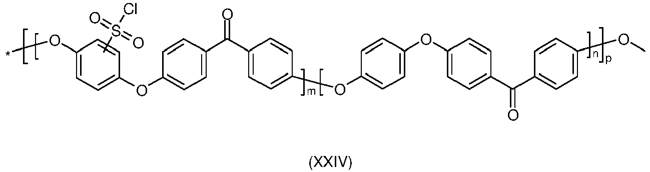 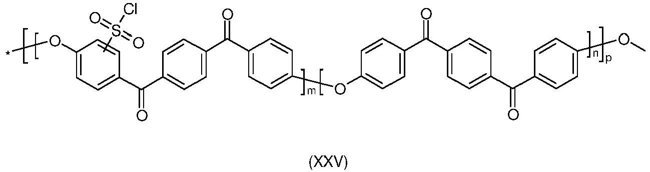 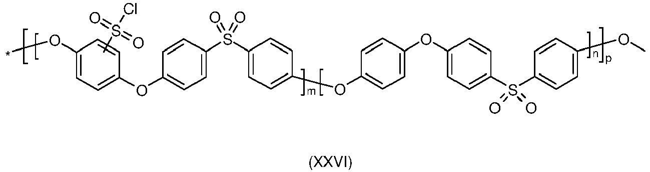 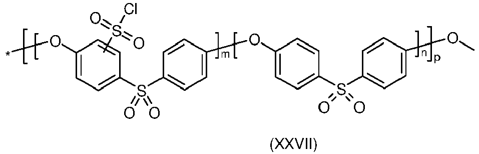 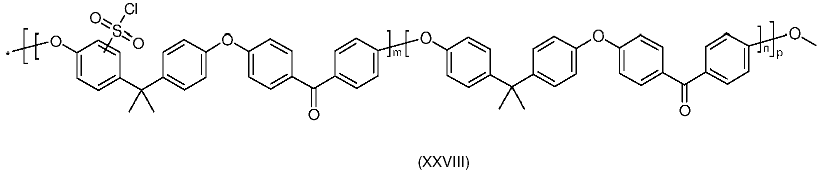 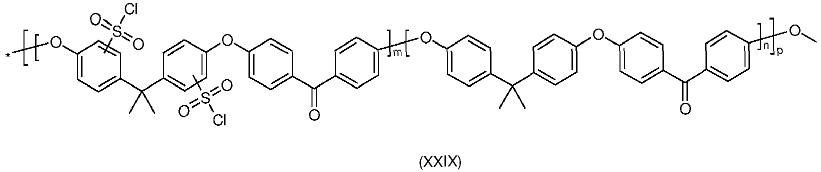 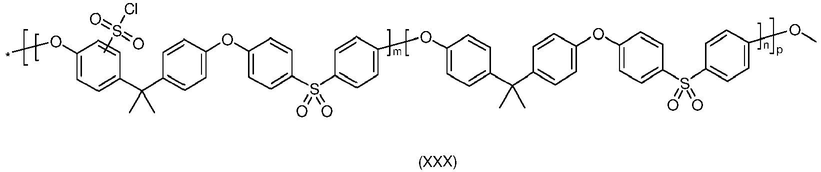 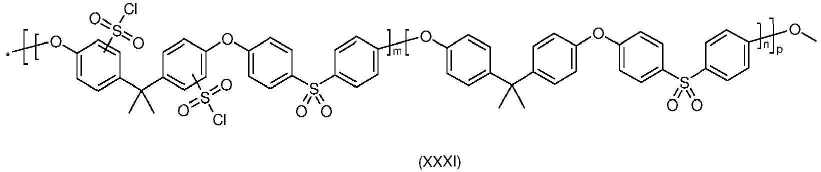 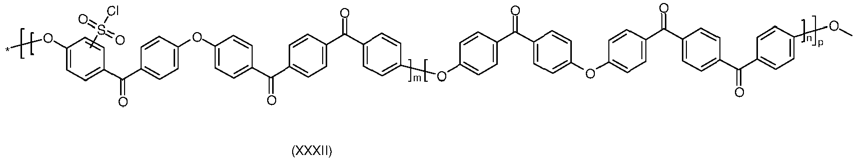 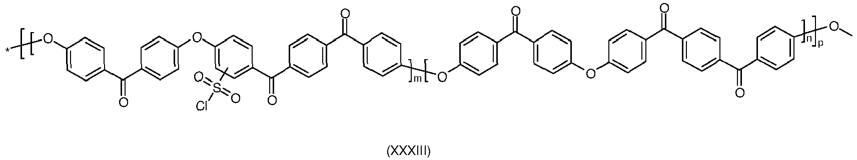 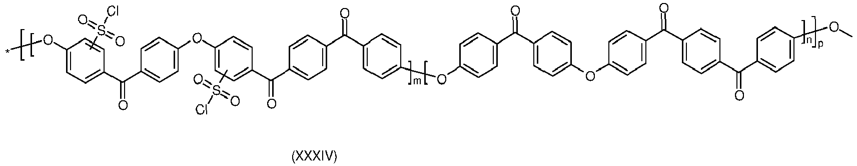 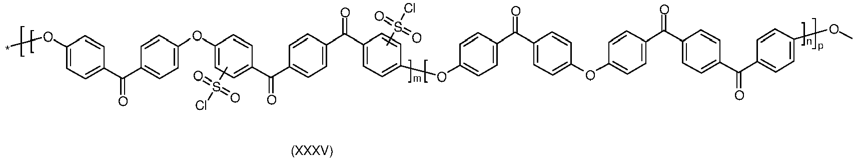 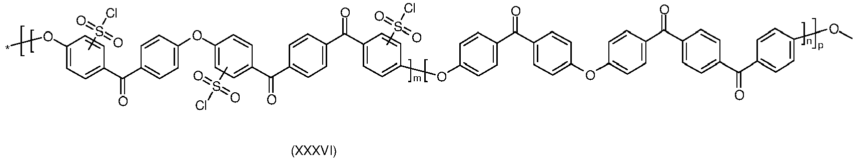 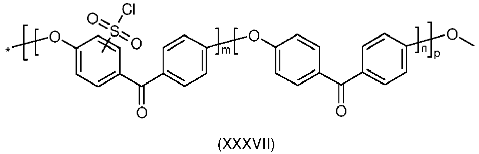 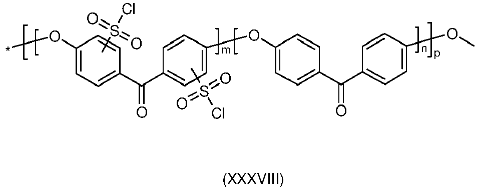 dans lesquelles :
   - m représente le pourcentage d'unités polymériques ayant un motif oxoaryle ou dioxoaryle fonctionnalisé par un groupement chlorosulfoné. Ce pourcentage varie entre 50 et 100%, préférentiellement entre 90 et 100%.
   - n représente le pourcentage d'unités polymériques ayant un motif dioxoaryle non fonctionnalisé par un groupement chlorosulfoné. Ce pourcentage varie entre 0 et 50%, préférentiellement entre 0 et 10%,
   - p représente le nombre d'unités polymériques du polymère; p varie de 40 à 300, préférentiellement entre 60 et 200.

   Les polymères de départ sont des produits commerciaux. Le polymère de formule XVI est connu commercialement sous le nom de poly(éther éther cétone) ou poly ether ether ketone ou PEEK 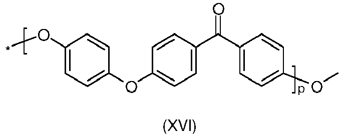 le polymère XVII est connu commercialement sous le nom de poly(éther cétone cétone) ou poly ether ketone ketone ou PEKK 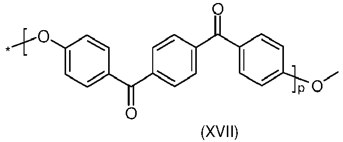 le polymère XVIII est connu commercialement sous le nom de poly(ether ether sulfone) ou PEES 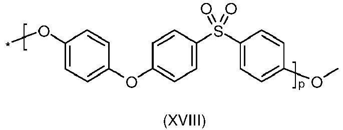 le polymère XIX est connu commercialement sous le nom de poly(ether sulfone) ou PES 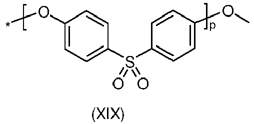 le polymère XX fait partie de la famille des poly(arène éther cétone) et est connu commercialement sous le nom de poly(bisphénol A PAEK) 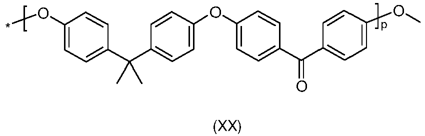 le polymère XXI fait partie de la famille des poly(arène éther sulfone) et est connu commercialement sous le nom de poly(bisphénol A PAES) 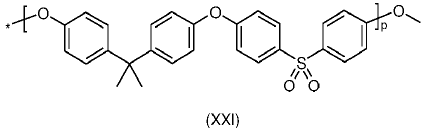 le polymère XXII est connu commercialement sous le nom de poly(éther cétone éther cétone cétone) ou poly(ether ketone ether ketone ketone) ou PEKEKK 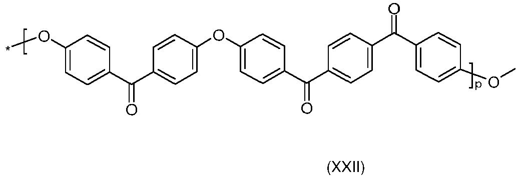 le polymère XXIII est connu commercialement sous le nom de poly(éther cétone) ou poly(ether ketone) ou PEK 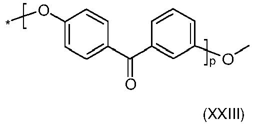
   Cette liste de polymères n'est pas limitative puisqu'il existe un grand nombre d'autres polymères commercialement disponibles ou pas dans les familles des poly(aryl éther cétone), poly(aryl éther sulfone). Selon l'invention, les polymères préférés en raison de leur grande disponibilité sont le PEEK, le PEK, le PES, le PEKK et le PEKEKK.
   La chlorosulfonation est réalisée à une température comprise entre 0° et 80° C. Par rapport aux motifs oxoaryles ou dioxoryles à chlorosulfoner, on introduit avec 1 à 10 équivalents d'acide chlorosulfonique, 1 à 30 équivalents de chlorure de thionyle, 1 à 10 équivalents d'un amide préférentiellement le *N*,*N*-diméthylformamide, avec ou sans un solvant. Les solvants préférés selon l'invention sont le THF, le méthylTHF, le dichlorométhane, le dichloroéthane. La chlorosulfonation de certains polymères peut conduire à des mélanges de nombreux isomères. Cela est particulièrement vrai pour le polymère XXII ou PEKEKK. Les polymères chlorosulfonés XXXI, XXXII, XXXIII, XXXIV, XXXV et XXXVI sont donnés à titre d'exemple. D'autres isomères peuvent être formés durant la chlorosulfonation.
2) dans un deuxième étape, on fait réagir sur les polymères de formules XXIV, XXV, XXVI, XXVII, XXVIII, XIX, XXX, XXXI, XXXII, XXXIII, XXXIV, XXXV, XXXVI, XXXVII et XXXVIII en solution de l'ammoniac gaz ou une solution d'ammoniac pour obtenir les polymères de formules XL, XLI, XLII, XLIII, XLIV, XLV, XLVI, XLVII, XLVIII, XLIX, L, LI, LII, LIII et LIV, 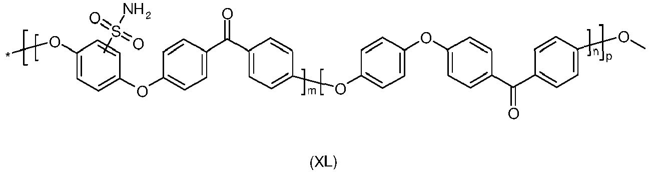 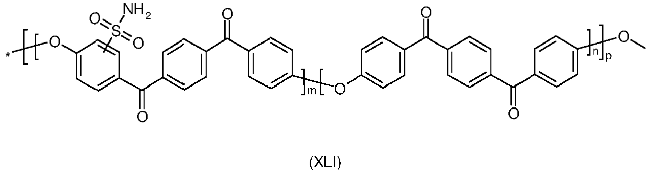 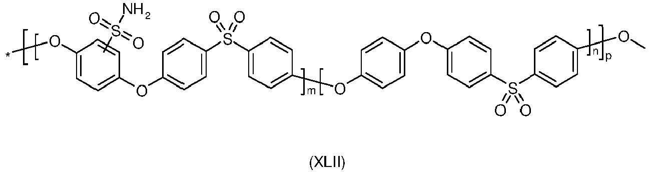 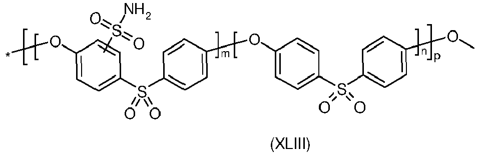 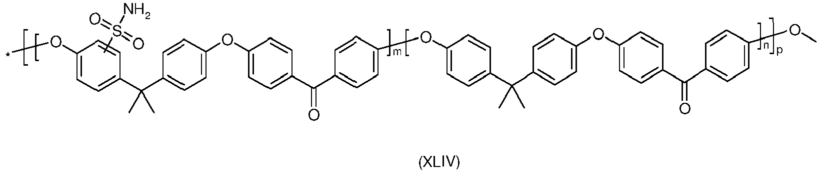 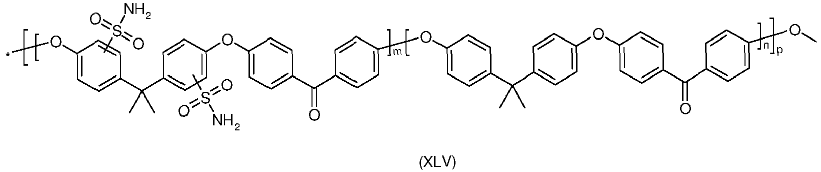 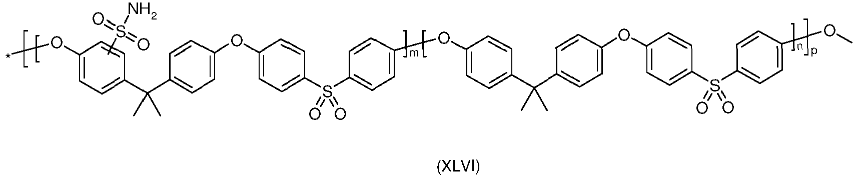 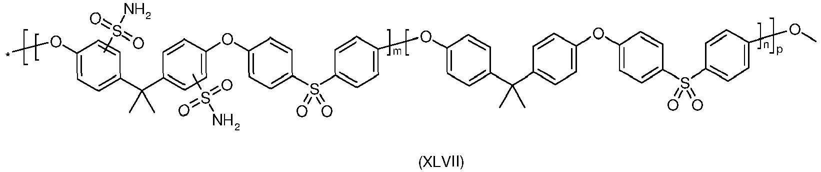 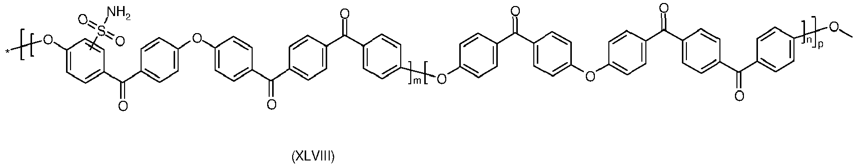 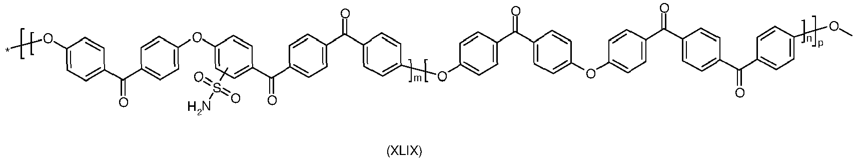 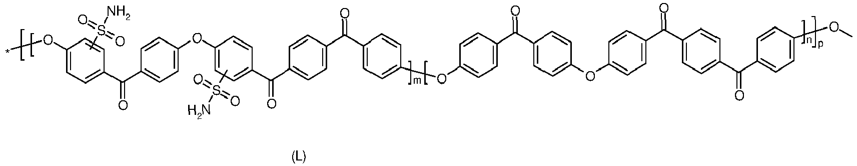 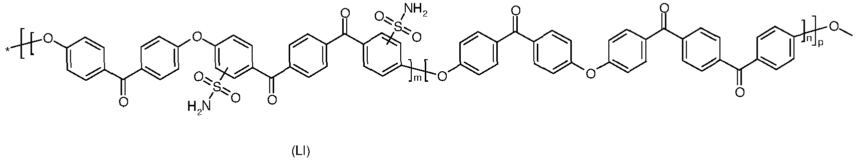 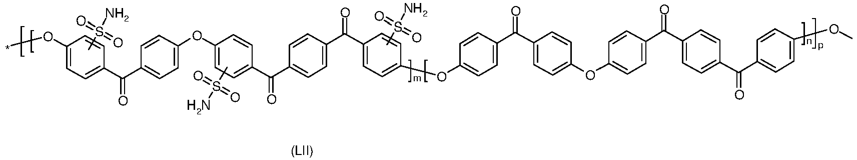 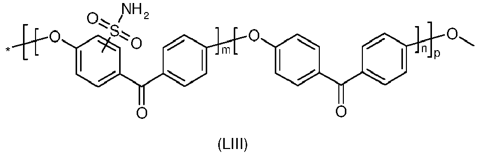 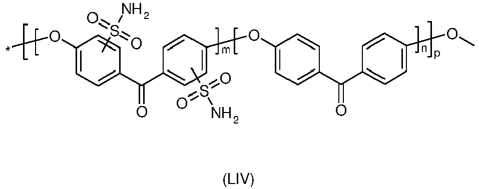 dans lesquelles :
   - m représente le pourcentage d'unités polymériques ayant un motif oxoaryle ou dioxoaryle fonctionnalisé possédant une fonction sulfonamide. Ce pourcentage varie entre 50 et 100%,
   - n représente le pourcentage d'unités polymériques ayant un motif oxoaryle ou dioxoaryle non fonctionnalisé par une fonction sulfonamide. Ce pourcentage varie entre 0 et 50%,
   - p représente le nombre d'unités polymériques du polymère; p varie de 40 à 300, préférentiellement entre 60 et 200.

   Pour réaliser cette réaction avec l'ammoniac, les polymères sont solubilisés dans un solvant tel qu'un éther, un halogénoalcane, un aromatique. L'ammoniac est introduit sous forme de gaz ou de solution dans un solvant de type éther, un halogénoalcane, un aromatique. Les solvants préférés sont le dichlorométhane, le 1,2-dichloroéthane, le THF, le méthylTHF, le diisopropyl éther, le diéthyl éther, l'anisole, le méthanol, le dioxane, l'isopropanol. L'amination des polymères avec l'ammoniac est réalisée à une température comprise entre -20 et 60 °C. Par rapport au nombre de fonction chlorosulfonyle du polymère de formules XXIV, XXV, XXVI, XVII, XXVIII, XIX, XXX, XXXI, XXXII, XXXIII, XXXIV, XXXV, XXXVI, XXXVII et XXXVIII, on introduit 2 à 12 équivalents d'ammoniac, préférentiellement 2 à 5 équivalents d'ammoniac. Les essais sont effectués à une température comprise entre -20°C et 60°C, de manière préférentielle entre 0 et 30 °C.
   Les polymères de formules XL, XLI, XLII, XLIII, XLIV, XLV, XLVI, XLVII, XLVIII, XLIX, L, LI, LII, LIII et LIV sont des intermédiaires nouveaux.
3) dans un troisième temps, on fait réagir sur les polymères de formules XL, XLI, XLII, XLIII, XLIV, XLV, XLVI, XLVII, XLVIII, XLIX, L, LI, LII, LIII et LIV, un halogénure de sulfonyle de formule LV, 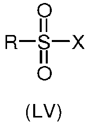 dans laquelle :
   - X représente un atome de fluor ou de chlore ou de brome ou un groupe trifluorométhanesulfonyle ou alkylsulfonyle ou arylsulfonyle;
   - R représente un groupement ou des groupements différents choisi(s) parmi :
      - un groupement alkyle ou cycloalkyle ayant de 1 à 30 atomes de carbone linéaire ou ramifié éventuellement substitué par un motif cycloalkyle, aryle, perfluoroalkyle, polyfluoroalkyle, mono ou polyéthoxylé ;
      - un groupement perfluoro- ou polyfluoroalkyle éventuellement substitué par des groupes aromatiques ;
      - un groupement aryle ou polyaryliques éventuellement substitués par des motifs alkyles, cycloalkyles, polyfluoro- ou perfluoroalkyles, par des fonctions nitriles, des fonctions alkyl- ou alkylsulfonyles, par des atomes de fluor ;
en présence d'une base lithiée ou sodée à une température comprise entre 0 et 80 °C, préférentiellement entre 20 et 60 °C en milieu solvant.

De manière préférentielle, on choisira comme groupement R de l'halogénure de sulfonyle (LV) un groupement alkyle ayant de 1 à 10 atomes de carbone linéaire ou ramifié éventuellement substitué par un motif cycloalkyle, aryle ; un groupement cycloalkyle ; un groupement perfluoro- ou polyfluoroalkyle éventuellement substitué par des groupes aromatiques ; un groupement aryle ou polyarylique éventuellement substitué par des chaînes alkyles, cycloalkyles, polyfluoro- ou perfluoroalkyles, par des fonctions alcoxy, nitriles, des fonctions alkylsulfonyle, par un ou des atomes de fluor.

De manière très préférentielle, l'halogénure est choisi parmi les chlorures, bromures et fluorures de méthyle, éthyle, propyle, cyclopropyle, butyle, 1-décyle, 1-dodécyle, 1-hexanedécyl, 1-octyldécyle, (7,7-diméthyl-2-oxobicyclo[2.2.1]heptan-1-yl)méthyle, ((1R)-7,7-diméthyl-2-oxobicyclo[2.2.1]heptan-1-yl)méthyle, (1S)-(7, 7-diméthyl-2-oxobicyclo [2.2.1]heptan-1-yl)méthyle, cyclohexyleméthyle, trifluorométhyle, phényle, tolyle, naphtyle, 4-trifluorométhylphényle, 3,5-bis(trifluorométhyl)phényle, trifluorophenyle, 4-cyanophényle, 1,1,2,2,2-pentafluoroéthanyle, nonafluorobutyle, pentaflurophényle, 2,3,5,6-tétrafluorophényle, 4-fluorophényle, 2,4-difluorophényle, 3,5-difluorophényle, 2,3,4,5,6-pentafluorophényle, 4-(trifluorométhyl)phényle, 3-(trifluorométhyl)phényle, 2-(trifluorométhyl)phényle, 4-méthylphényle, 1-naphtyle, le 2-naphtyle, 3,5-difluorobenzyle, 4-fluorobenzyle, 3-trifluorométhylbenzyle, 4-trifluorométhylbenzyle, 2,5-diméthylbenzyle, 2-phényléthyle, 4-méthoxyphényle, 4-n-butylphényle, 4-t-butylphényle, 4-butoxyphényle, 2-fluoro-5-(trifluorométhyl)phényle, 4-éthylphényle

Les bases lithiées ou sodées sont choisies préférentiellement parmi la lithine, la soude, le méthylate de lithium, le méthylate de sodium, l'éthylate de lithium, l'éthylate de sodium, l'isopropylate de lithium, l'isopropylate de sodium, le tertiobutylate de lithium, le tertiobutylate de sodium, l'hydrure de lithium, l'hydrure de sodium, le n-butyllithium, le n-butylsodium, le s-butyllithium, le diisopropylamidure de lithium, le tert-butyllithium, le méthyllithium le phényllithium, le phénylsodium, le benzyllithium, le benzylsodium, le dimsylate de lithium, le dimesylate de sodium, le carbonate de lithium, le carbonate de sodium, l'acétate de lithium, l'acétate de sodium. Les bases préférées sont celles qui ne forment pas d'eau lors de la réaction.

Les solvants préférés sont le dichlorométhane, le 1,2-dichloroéthane, le THF, le méthylTHF, le diisopropyl éther, le DMSO.

A titre d'exemple non limitatif d'agents de sulfonylation pouvant être utilisés dans l'invention, nous citerons le chlorure de 4-biphénylsulfonyle, 4-chlorobenzènesulfonyle, le chlorure de méthanesulfonyle, le chlorure d'éthanesulfonyle, le chlorure de 3-fluorobenzènesulfonyle, le chlorure de 4-fluorosulfonyle, le chlorure de 4-butylbenzènesulfonyle, le chlorure de 2-naphtalènesulfonyle, le chlorure de trifluorométhanesulfonyle, le chlorure de 2,3,5,6-tétrafluorobenzènesulfonyle, le chlorure de 4-fluorobenzènesulfonyle, le chlorure de 3,5-difluorobenzènesulfonyle , le chlorure de 2,3,4,5,6-pentafluorobenzènesulfonyle, le chlorure de 4-cyanobenzènesulfonyle, le chlorure de 4-nitrobenzènesulfonyle, le chlorure de 4-(trifluorométhyl)benzènesulfonyle, le chlorure de 3-(trifluorométhyl)benzènesulfonyle, le chlorure de 2-(trifluorométhyl)benzènesulfonyle, le fluorure de trifluorométhanesulfonyle, le fluorure de pentaéthanesulfonyle, le fluorure de nonafluorobutanesulfonyle, le bromure de méthanesulfonyle, l'anhydride triflique, l'anhydride méthanesulfonique, le bromure de 4-méthylbenzènesulfonyle.

Toutes les réactions sont réalisées préférentiellement avec des solvants anhydres, de préférence fraîchement distillés, et sous atmosphère inerte et anhydre. On entend par atmosphère anhydre une atmosphère sous courant d'azote ou d'argon.

Le procédé développé par la demanderesse met en œuvre des produits peu onéreux et conduit à des électrolytes compatibles avec les attentes du marché et dont les performances sont supérieures ou égales aux meilleurs produits.

De manière surprenante et inattendue, il a été constaté que les polymères de formules I , II, III, IV, V, VI, VII, VIII, IX, X, XI, XII, XIII, XIV et XV étaient particulièrement filmogènes ce qui est un net avantage pour l'application visée. Ils peuvent être utilisés pour former des films d'une épaisseur comprise entre 10 µm et 200 pm, qui présentent une bonne résistance mécanique. En pratique, ces films peuvent être manipulés par un opérateur sans être déchirés. On notera que les polymères I, II, III, IV, V, VI, VII, VIII, IX, X, XI, XII, XIII, XIV et XV ne sont pas réticulés dans les films obtenus. Ces polymères selon l'invention sont en effet suffisamment rigides pour l'obtention de films mécaniquement résistants sans réticulation. Les films sont préparés dans des solvants anhydres, de préférence le DMSO.

Ainsi, des films des polymères de formules I , II, III, IV, V, VI, VII, VIII, IX, X, XI, XII, XIII, XIV et XV peuvent être facilement obtenus par évaporation d'une solution de polymère déposée sur une surface d'un matériau tel que du verre, du téflon, du plastique. L'évaporation est réalisée à une température comprise entre 20 et 80°C. L'évaporation du solvant est réalisée par chauffage, par balayage d'un gaz inerte ou par mise sous pression réduite.

Les films des polymères de formules I , II, III, IV, V, VI, VII, VIII, IX, X, XI, XII, XIII, XIV et XV sont de très bons électrolytes. Les conductivités obtenues sont comprises entre 10⁻⁸ et 2 x 10⁻³ S/cm en milieu solvant et sans solvant. Les films des polymères de formules I , II, III, IV, V, VI, VII, VIII, IX, X, XI, XII, XIII, XIV et XV se caractérisent par une très grande plage d'utilisation au niveau des températures allant de 20 à 100 °C. On notera que les polymères selon l'invention ne présentent pas de motifs polyoxyéthylèneglycol. Or, il est connu que ces motifs sont un facteur favorable à la conductivité des ions lithium, et il n'était pas évident, qu'avec des polymères ne contenant pas de motifs polyoxyéthylèneglycols, ni d'ailleurs, nécessairement, de fluor, des conductivités aussi importantes puissent être obtenues.

Les exemples figurant ci-après sont présentés à titre illustratif et non limitatif de l'objet de la présente invention.

### Exemple 1 - Chlorosulfonation du PEEK. Préparation du polymère XXIV

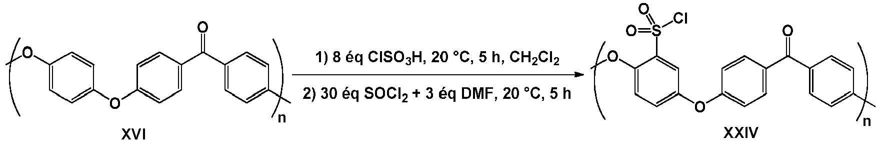

Sous atmosphère d'azote, dans un réacteur en verre cylindrique, on pèse directement 1,0 g de PEEK (XVI), puis on ajoute 160 mL de dichlorométhane distillé de manière à avoir une concentration molaire en PEEK (XVI) de 0,022 M. Tous les solvants utilisés lors de ces synthèses ont été distillés, stockés et prélevés sous atmosphère d'azote.

L'acide chlorosulfonique (3,24 g, 8 équivalents par rapport au nombre d'unités polymériques du PEEK (XVI)) est introduit à l'aide d'une seringue (1,85 mL) en prenant soin de manipuler sous flux d'azote. Le mélange réactionnel est agité à 20 °C pendant 5 h. En fin de réaction, on observe la formation d'un composé visqueux orange. Le surnageant est éliminé en prenant soin de manipuler sous flux d'azote.

On introduit ensuite le chlorure de thionyle (12,29 g, 30 équivalents par rapport au nombre d'unités polymériques du PEEK (XVI)) à l'aide d'une seringue (7,50 mL) en prenant soin de manipuler sous flux d'azote. Puis on ajoute le N,N-diméthylformamide (0,76 g, 3 équivalents par rapport au nombre d'unités polymériques du PEEK (XVI)) à l'aide d'une seringue (0,81 mL) en prenant soin de manipuler sous flux d'azote. Le mélange réactionnel est de nouveau agité à 20 °C pendant 5 h, puis on ajoute 40 mL de THF distillé. En fin de réaction, on observe une solution orange.

La solution orange est précipitée dans du propan-2-ol (250 mL), un précipité blanc se forme. Le solide est filtré, puis lavé avec 2 fois 50 mL de propan-2-ol et 2 fois 50 mL d'acétonitrile, puis séché pendant une nuit sous vide (1.10⁻² mbar) .

Le spectre RMN ¹H réalisé dans le DMSO-D6 (¹H NMR (200 MHz) δ 7, 92 - 7, 69 (m, 4H), 7,50 (d, *J* = 2,7 Hz, 1H), 7,36 - 6,83 (m, 6H)) confirme la structure attendue. L'intégration du pic à 7,50 ppm en RMN ¹H nous permet de connaître le taux de chlorosulfonation du PEEK (XVI). Le taux de chlorosulfonation des motifs di-oxoaryle est de 100%.

Le rendement pondéral en polymère PEEKSO₂Cl (XXIV) est de 98% par rapport au PEEK (XVI) engagé.

### Exemple 2-6 Préparation du polymère XXIV avec différent taux de fonctionnalisation

Selon le protocole décrit dans l'exemple 1 les polymères suivants ont été préparés :

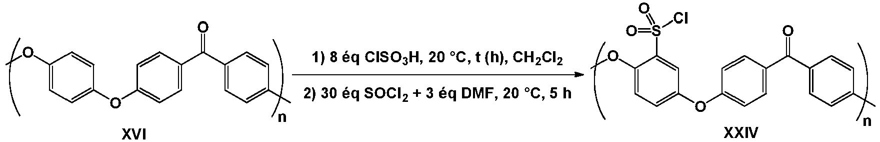

Les différences avec le protocole décrit dans l'exemple 1 sont :
- la masse de PEEK de départ
- le temps de réaction de la première étape

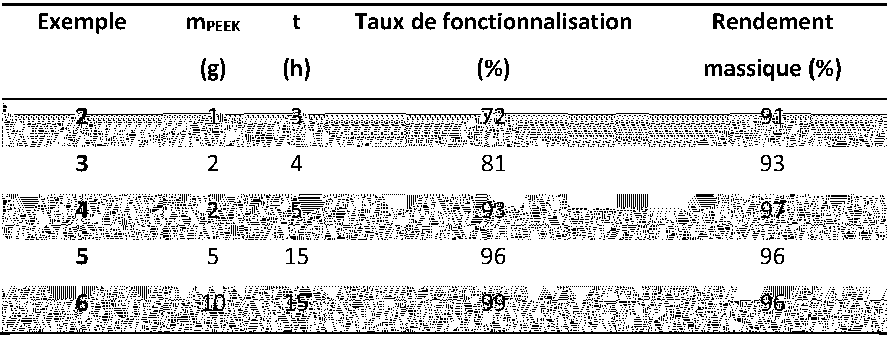

### Exemple 7 - Chlorosulfonation du PEES. Préparation du polymère XXVI

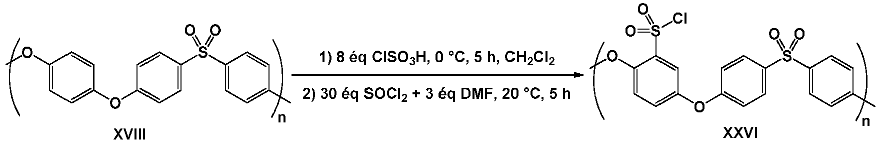

Sous atmosphère d'azote, dans un réacteur en verre cylindrique, on pèse directement 1,0 g de PEES (XVIII), puis on ajoute 160 mL de dichlorométhane distillé de manière à avoir une concentration molaire en PEES (XVIII) de 0,019 M. Tous les solvants utilisés lors de ces synthèses ont été distillés, stockés et prélevés sous atmosphère d'azote.

L'acide chlorosulfonique (2,88 g, 8 équivalents par rapport au nombre d'unités polymériques du PEES (XVIII)) est introduit à l'aide d'une seringue (1,64 mL) en prenant soin de manipuler sous flux d'azote. Le mélange réactionnel est agité à 0 °C pendant 5 h. En fin de réaction, on observe la formation d'un composé visqueux brun. Le surnageant est éliminé en prenant soin de manipuler sous flux d'azote.

On introduit ensuite le chlorure de thionyle (10,93 g, 30 équivalents par rapport au nombre d'unités polymériques du PEES (XVIII)) à l'aide d'une seringue (6,6 mL) en prenant soin de manipuler sous flux d'azote. Puis on ajoute le N,N-diméthylformamide (0,76 g, 3 équivalents par rapport au nombre d'unités polymériques du PEES (XVIII)) à l'aide d'une seringue (0,68 mL) en prenant soin de manipuler sous flux d'azote. Le mélange réactionnel est de nouveau agité à 20 °C pendant 5 h, puis on ajoute 15 mL de CH₂Cl₂ distillé. En fin de réaction, on observe une solution brune.

La solution brune est précipitée dans du propan-2-ol (250 mL), un précipité blanc se forme. Le solide est filtré, puis lavé avec 2 fois 50 mL de propan-2-ol et 2 fois 50 mL d'acétonitrile, puis séché pendant une nuit sous vide (1.10⁻² mbar) .

Le spectre RMN ¹H réalisé dans le DMSO-D6 (¹H NMR (200 MHz) δ 7,91 (ddd, J = 18,6, 8,8, 2,9 Hz, 4H), 7,44 (s, 1H), 7,18 (d, J = 7,2 Hz, 4H), 6,99 (d, J = 7,3 Hz, 2H) confirme la structure attendue.

L'intégration du pic à 7,44 ppm en RMN ¹H nous permet de connaître le taux de chlorosulfonation du PEES (XVIII). Le taux de chlorosulfonation des motifs di-oxoaryle est de 100%.

Le rendement pondéral en polymère PEESSO₂Cl (XXVI) est de 93 % par rapport au PEES (XVIII) engagé.

### Exemple 8 - Chlorosulfonation du PES. Préparation du polymère XXVII

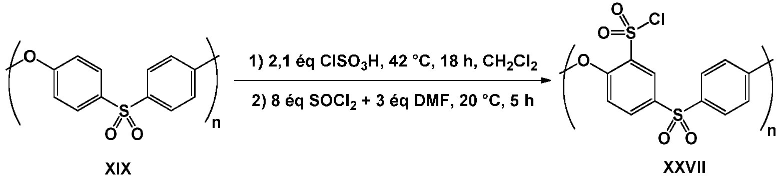

Sous atmosphère d'azote, dans un réacteur en verre cylindrique, on pèse directement 0,5 g de PES (XIX), puis on ajoute 80 mL de dichlorométhane distillé de manière à avoir une concentration molaire en PES (XIX) de 0,027 M, après 1 h sous agitation à 20 °C, le PES (XIX) est solubilisé. Tous les solvants utilisés lors de ces synthèses ont été distillés, stockés et prélevés sous atmosphère d'azote.

L'acide chlorosulfonique (0,527 g, 2,1 équivalents par rapport au nombre d'unités polymériques du PES (XIX)) est introduit à l'aide d'une seringue (0,30 mL) en prenant soin de manipuler sous flux d'azote. Le mélange réactionnel est agité à 42 °C pendant 18 h. En fin de réaction, on observe la formation d'un composé visqueux jaune. Le surnageant est éliminé en prenant soin de manipuler sous flux d'azote.

On introduit ensuite le chlorure de thionyle (2,03 g, 8 équivalents par rapport au nombre d'unités polymériques du PES (XIX)) à l'aide d'une seringue (1,24 mL) en prenant soin de manipuler sous flux d'azote. Puis on ajoute le N,N-diméthylformamide (0,47 g, 3 équivalents par rapport au nombre d'unités polymériques du PES (XIX)) à l'aide d'une seringue (0,50 mL) en prenant soin de manipuler sous flux d'azote. Le mélange réactionnel est de nouveau agité à 20 °C pendant 5 h, puis on ajoute 15 mL de CH₂Cl₂ distillé. En fin de réaction, on n'observe une solution jaune.

La solution jaune est précipitée dans du propan-2-ol (80 mL), un précipité blanc se forme. Le solide est filtré, puis lavé avec 2 fois 20 mL de propan-2-ol et 3 fois 20 mL d'acétonitrile, puis séché pendant une nuit sous vide (1.10⁻² mbar) .

Le spectre RMN 1H réalisé dans DMSO-D6 (¹H NMR (200 MHz) δ 8,29 (s, 1H), 7,92 (s, 3H), 7,19 (s, 3H)) confirme la structure attendue. L'intégration du pic à 8,29 ppm en RMN ¹H nous permet de connaître le taux de chlorosulfonation du PES (XIX). Le taux de chlorosulfonation des motifs oxoaryle est de 100%.

Le rendement pondéral en polymère PESSO₂Cl (XXVII) est de 98% par rapport au PES (XIX) engagé.

### Exemple 9 -Préparation du polymère XL : PEEKSO₂NH₂

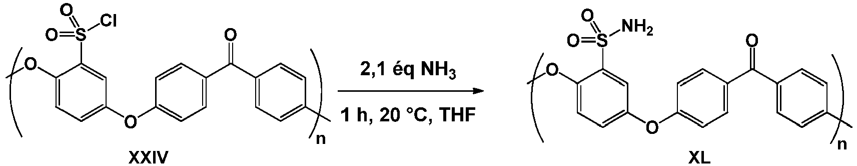

Sous atmosphère d'azote, on prépare une solution de 0,300 g de PEEKSO₂Cl (XXIV) préparé selon l'exemple 1, dans 10 mL de tétrahydrofurane distillé de manière à avoir une concentration molaire en PEEKSO₂Cl (XXIV) de 0,078 M. Tous les solvants utilisés lors de ces synthèses ont été distillés, stockés et prélevés sous atmosphère d'azote.

Cette solution est ajoutée lentement sur une solution d'ammoniac (4,2 mL, [C] = 0,5 M dans le THF, 2,1 équivalents par rapport au PEEKSO₂Cl (XXIV)) dans 10 mL de tétrahydrofurane à 0 °C, puis retour à 20 °C. Le mélange réactionnel est agité à 20 °C pendant 1 h. En fin de réaction, on observe la formation d'un précipité blanc.

Le mélange réactionnel est filtré et le solide est lavé avec 2 fois 10 mL de tétrahydrofurane. Le solvant du filtrat est évaporé à l'évaporateur rotatif, puis le produit obtenu est séché pendant une nuit sous vide (1.10⁻² mbar) .

Le spectre RMN ¹H réalisé dans le DMSO-D6 (¹H NMR (200 MHz) δ 8,07 - 7,90 (m, 4H), 7,65 - 7,29 (m, 5H) , 7,29 - 7,13 (m, 4H)) confirme la structure attendue.

Le rendement pondéral en polymère PEEKSO₂NH₂ (XL) est de 96% par rapport au polymère PEEKSO₂Cl (XXIV) engagé.

### Exemple 10 -Préparation du polymère XLII : PEESSO₂NH₂

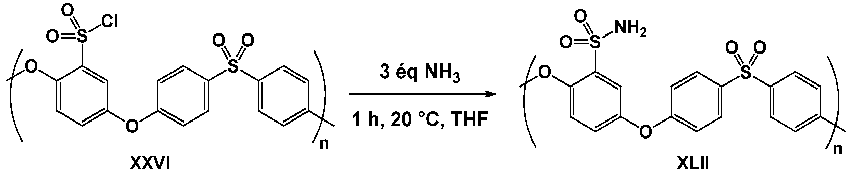

Sous atmosphère d'azote, on prépare une solution de 0,300 g de PEESSO₂Cl (XXVI) préparé selon l'exemple 7, dans 17 mL de tétrahydrofurane distillé et 3 mL de *N,N-*diméthylformamide de manière à avoir une concentration molaire en PEESSO₂Cl (XXVI) de 0,035 M. Tous les solvants utilisés lors de ces synthèses ont été distillés, stockés et prélevés sous atmosphère d'azote.

Cette solution est ajoutée lentement sur une solution d'ammoniac (8,7 mL, [C] = 0,5 M dans le THF, 3 équivalents par rapport au PEESSO₂Cl (XXVI)) dans 10 mL de tétrahydrofurane à 0 °C, puis retour à 20 °C. Le mélange réactionnel est agité à 20 °C pendant 1 h. En fin de réaction, on observe une solution laiteuse.

Le mélange réactionnel est précipité dans le méthanol, puis après filtration, le solide obtenu est lavé avec 2 fois 10 mL d'acétonitrile, puis le produit obtenu est séché pendant une nuit sous vide (1.10⁻² mbar).

Le spectre RMN 1H réalisé dans le DMSO-D6 ¹H NMR (200 MHz) δ 7,98 (dd, *J* = 8,7, 4,2 Hz, 4H), 7,63 - 7,30 (m, 5H), 7,21 (dd, *J* = 8,4, 4,7 Hz, 4H) confirme la structure attendue.

Le rendement pondéral en polymère PEESSO₂NH₂ (XLII) est de 92 % par rapport au polymère PEESSO₂Cl (XXVI) engagé.

### Exemple 11 -Préparation du polymère XLIII : PESSO₂NH₂

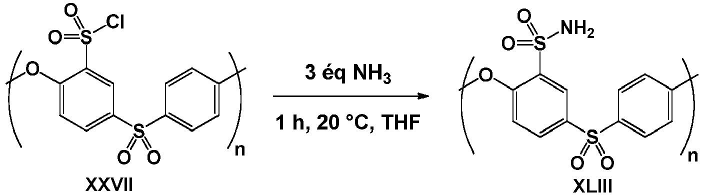

Sous atmosphère d'azote, on prépare une solution de 0,300 g de PESSO₂Cl (XXVII) préparé selon l'exemple 8, dans 10 mL de tétrahydrofurane distillé de manière à avoir une concentration molaire en PESSO₂Cl (XXVII) de 0,091 M. Tous les solvants utilisés lors de ces synthèses ont été distillés, stockés et prélevés sous atmosphère d'azote.

Cette solution est ajoutée lentement sur une solution d'ammoniac (10 mL, [C] = 0,5 M dans le THF, 3 équivalents par rapport au PESSO₂Cl (XXVII)) dans 10 mL de tétrahydrofurane à 0 °C, puis retour à 20 °C. Le mélange réactionnel est agité à 20 °C pendant 1 h. En fin de réaction, on observe la formation d'un précipité blanc.

Le mélange réactionnel est filtré et le solide est lavé avec 2 fois 10 mL de tétrahydrofurane. Le solvant du filtrat est évaporé à l'évaporateur rotatif, puis le produit obtenu est séché pendant une nuit sous vide (1.10⁻² mbar) .

Le spectre RMN 1H réalisé dans le DMSO-D6 (¹H NMR (200 MHz) δ 7,79 (s, 3H), 7,58 (s, 1H), 7,50 - 7,35 (m, 1H), 7,33 - 7,02 (m, 4H)) confirme la structure attendue.

Le rendement pondéral en PESSO₂NH₂ (XLIII) est de 98% par rapport au PESSO₂Cl (XXVII) engagé.

### Exemple 12 -Préparation du polymère Ia avec R=CH₃ et M=Li

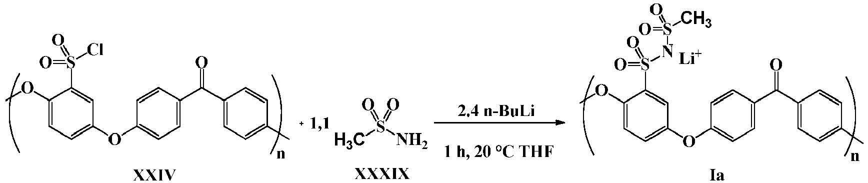

Sous atmosphère d'azote, on prépare une solution de 0,200 g de PEEKSO₂Cl (XXIV) préparé selon l'exemple 1, dans 10 mL de tétrahydrofurane distillé de manière à avoir une concentration molaire en PEEKSO₂Cl (XXIV) de 0,052 M. Tous les solvants utilisés lors de ces synthèses ont été distillés, stockés et prélevés sous atmosphère d'azote.

Sous atmosphère d'azote, dans un réacteur en verre cylindrique, on introduit successivement 0,054 g de méthanesulfonamide (CH₃SO₂NH₂ (XXXIX), 1,1 équivalents par rapport au nombre de motif SO₂Cl), 10 mL de tétrahydrofurane distillé de manière à avoir une concentration molaire en CH₃SO₂NH₂ (XXXIX) de 0,057 M et 0, 62 mL de n-BuLi ([C] = 2 M dans l'hexane, 2,4 équivalents par rapport au PEEKSO₂Cl (XXIV)) à l'aide d'une seringue en prenant soin de manipuler sous flux d'azote. Le mélange réactionnel est agité à 20 °C pendant 15 min. On introduit ensuite la solution de PEEKSO₂Cl (XXIV) préalablement préparé à l'aide d'une seringue en prenant soin de manipuler sous flux d'azote. La réaction se poursuit à 20°C pendant 1 h. En fin de réaction, on observe un précipité blanc.

Le solvant est évaporé. Le solide obtenu est lavé avec 3 fois 10 mL de tétrahydrofurane, puis le produit obtenu est séché pendant une nuit sous vide (1.10⁻² mbar).

Le spectre RMN ¹H réalisé dans le DMSO-D6 (¹H NMR (200 MHz) δ 7,97 - 7,64 (m, 4H) , 7,50 (s, 1H), 7,34 - 6,91 (m, 6H), 2,46 (s, 3H)) confirme la structure attendue.

Le spectre RMN du ¹H montre qu'il y a un groupement méthylsulfonamide par rapport au motif dioxoaryle à 2,46 ppm.

Le rendement pondéral en PEEKSO₂N⁻(Li⁺)SO₂CH₃ (Ia) est de 97% par rapport au PEEKSO₂Cl (XXIV) engagé.

### Exemples 13 à 16 - Préparation des polymères Ib - Ie avec différentes sulfonamides

Selon le protocole décrit dans l'exemple 12 les polymères suivants ont été préparés :

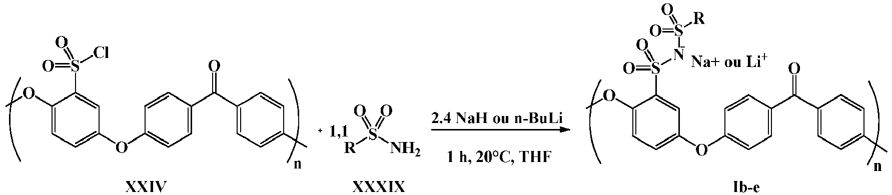

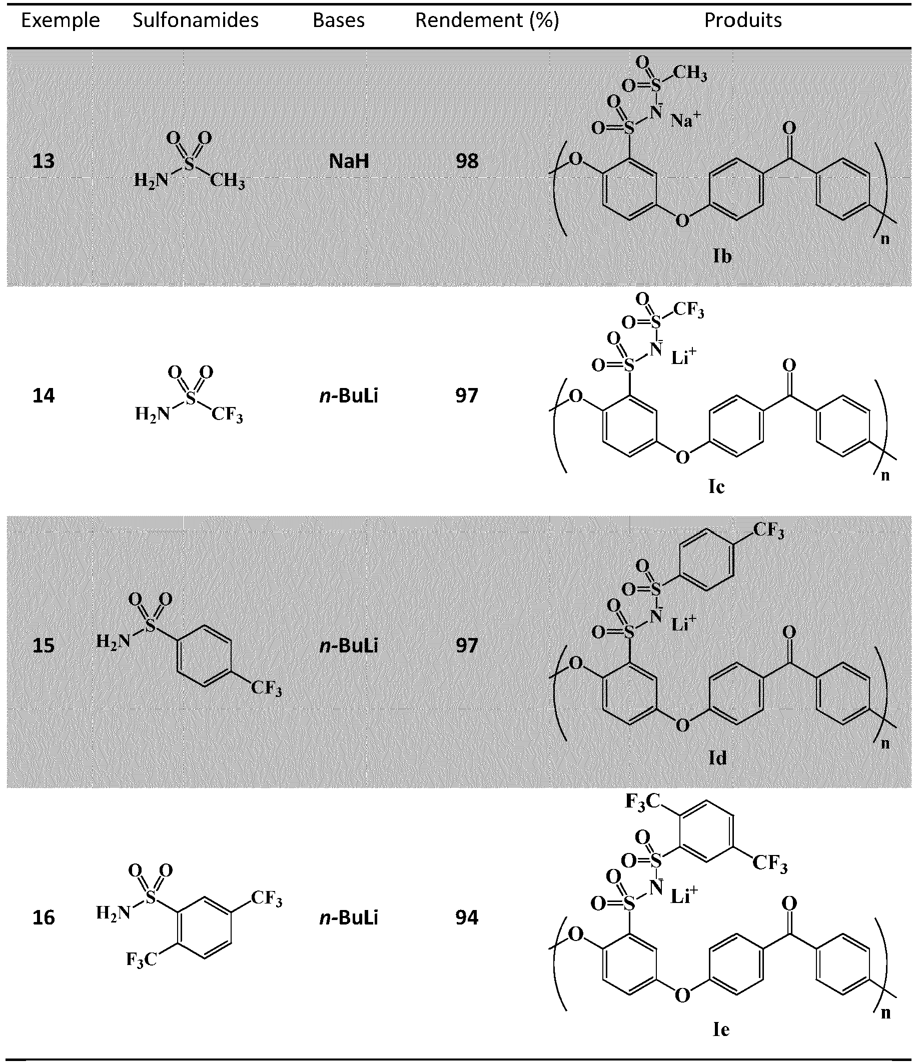

### Exemple 17 - Préparation du polymère If : bi-fonctionnalisé (Méthode 1)

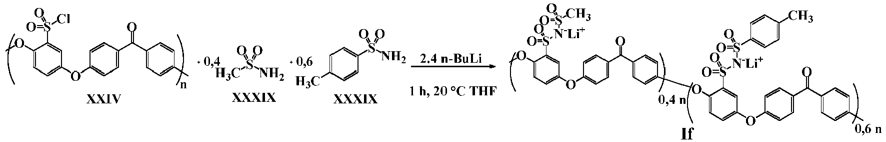

Sous atmosphère d'azote, on prépare une solution de 0,200 g de PEEKSO₂Cl (XXIV) préparé selon l'exemple 1, dans 10 mL de tétrahydrofurane distillé de manière à avoir une concentration molaire en PEEKSO₂Cl (XXIV) de 0,052 M. Tous les solvants utilisés lors de ces synthèses ont été distillés, stockés et prélevés sous atmosphère d'azote.

Sous atmosphère d'azote, dans un réacteur en verre cylindrique, on introduit successivement 0,0197 g de méthanesulfonamide (CH₃SO₂NH₂ (XXXIX), 0,4 équivalents par rapport au nombre de motif SO₂Cl), 0,0531 g de p-toluènesulfonamide (CH₃PhSO₂NH₂ (XXXIX), 0,6 équivalents par rapport au nombre de motif SO₂Cl), 10 mL de tétrahydrofurane distillé et 0, 62 mL de n-BuLi ([C] = 2 M dans l'hexane, 2,4 équivalents par rapport au PEEKSO₂Cl (XXIV)) à l'aide d'une seringue en prenant soin de manipuler sous flux d'azote. Le mélange réactionnel est agité à 20 °C pendant 15 min. On introduit ensuite la solution de PEEKSO₂Cl (XXIV) préalablement préparé à l'aide d'une seringue en prenant soin de manipuler sous flux d'azote. La réaction se poursuit à 20°C pendant 30 min. En fin de réaction, on observe un précipité blanc.

Le solvant est évaporé. Le solide obtenu est lavé avec 3 fois 10 mL de tétrahydrofurane et 2 fois 20 mL CH₃CN, puis le produit obtenu est séché pendant une nuit sous vide (1.10⁻² mbar) .

Le spectre RMN ¹H réalisé dans le DMSO-D6 ¹H NMR (200 MHz) δ 7,91 - 7,66 (m, 4H), 7,57 - 7,41 (m, 2H) , 7,31 - 6,92 (m, 7H), 2,43 (s, 0,75H), 2,27 (s, 1,5H), nous permet de déduire la structure suivante :

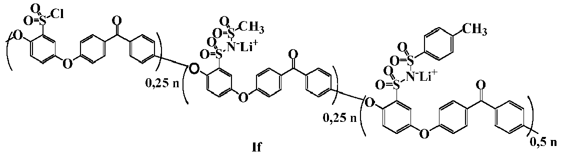

Le rendement pondéral en PEEK (SO₂Cl) _{0,25n} (SO₂N⁻ (Li⁺) SO₂CH₃) _{0,25n} (SO2N⁻ (Li⁺) SO₂PhCH₃) _{0,5n} (If) est de 91% par rapport au PEEKSO₂Cl (XXIV) engagé.

### Exemple 18 - Préparation du polymère Ig : bi-fonctionnalisé (Méthode 2)

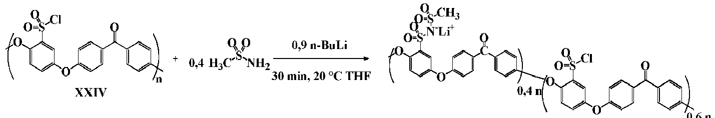

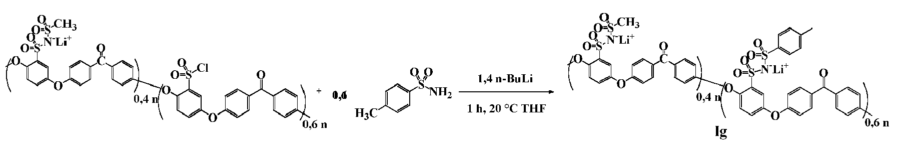

Sous atmosphère d'azote, on prépare une solution de 0,200 g de PEEKSO₂Cl (XXIV) préparé selon l'exemple 1, dans 10 mL de tétrahydrofurane distillé de manière à avoir une concentration molaire en PEEKSO₂Cl (XXIV) de 0,052 M. Tous les solvants utilisés lors de ces synthèses ont été distillés, stockés et prélevés sous atmosphère d'azote.

Sous atmosphère d'azote, dans un réacteur en verre cylindrique, on introduit successivement 0,0197 g de méthanesulfonamide (CH₃SO₂NH₂ (XXXIX), 0,4 équivalents par rapport au nombre de motifs SO₂Cl) et 10 mL de tétrahydrofurane distillé et 0, 26 mL de n-BuLi ([C] = 2 M dans l'hexane, 0,9 équivalents par rapport au PEEKSO₂Cl (XXIV)) à l'aide d'une seringue en prenant soin de manipuler sous flux d'azote. Le mélange réactionnel est agité à 20 °C pendant 15 min. On introduit ensuite la solution de PEEKSO₂Cl (XXIV) préalablement préparée à l'aide d'une seringue en prenant soin de manipuler sous flux d'azote. La réaction se poursuit à 20°C pendant 30 min.

On introduit ensuite successivement 0,0197 g de p-toluènesulfonamide (CH₃PhSO₂NH₂ (XXXIX), 0,6 équivalents par rapport au nombre de motif SO₂Cl) et 0, 36 mL de n-BuLi ([C] = 2 M dans l'hexane, 1,4 équivalents par rapport au PEEKSO₂Cl (XXIV)) à l'aide d'une seringue en prenant soin de manipuler sous flux d'azote. Le mélange réactionnel est agité à 20 °C pendant 15 min. On introduit ensuite la solution de PEEKSO₂Cl (XXIV) préalablement préparé à l'aide d'une seringue en prenant soin de manipuler sous flux d'azote. La réaction se poursuit à 20°C pendant 1 h. En fin de réaction, on observe un précipité blanc.

Le solvant est évaporé. Le solide obtenu est lavé avec 3 fois 10 mL de tétrahydrofurane, puis le produit obtenu est séché pendant une nuit sous vide (1.10⁻² mbar).

Le spectre RMN ¹H réalisé dans le DMSO-D6 ¹H NMR (200 MHz) δ 7,91 - 7,69 (m, 4H), 7,60 - 7,43 (m, 2,2H), 7,31 - 6,95 (m, 7,2H), 2,44 (s, 1,2H), 2,27 (s, 1,8H) confirme la structure attendue.

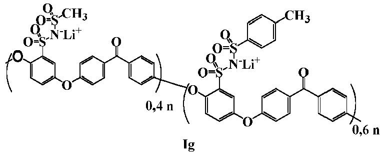

Le rendement pondéral en PEEK (SO₂N⁻ (Li⁺) SO₂CH₃) _{0,4n} (SO₂N⁻ (Li⁺) SO₂PhCH₃) _{0,6n} (Ig) est de 89 % par rapport au PEEKSO₂Cl (XXIV) engagé.

### Exemple 19 -Préparation du polymère IIIa avec R=CH₃ et M=Li

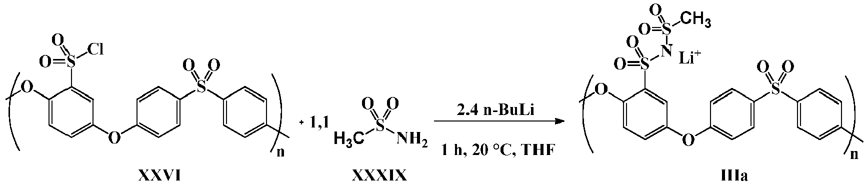

Sous atmosphère d'azote, on prépare une solution de 0,200 g de PEESSO₂Cl (XXVI) préparé selon l'exemple 7, dans 9 mL de tétrahydrofurane distillé et 1 mL *N,N-*diméthylformamide distillé de manière à avoir une concentration molaire en PEESSO₂Cl (XXVI) de 0,052 M. Tous les solvants utilisés lors de ces synthèses ont été distillés, stockés et prélevés sous atmosphère d'azote.

Sous atmosphère d'azote, dans un réacteur en verre cylindrique, on introduit successivement 0,045 g de méthanesulfonamide (CH₃SO₂NH₂ (XXXIX), 1,1 équivalents par rapport au nombre de motif SO₂Cl), 10 mL de tétrahydrofurane distillé de manière à avoir une concentration molaire en CH₃SO₂NH₂ (XXXIX) de 0,0472 M et 0, 57 mL de n-BuLi ([C] = 2 M dans l'hexane, 2,4 équivalents par rapport au PEESSO₂Cl (XXVI)) à l'aide d'une seringue en prenant soin de manipuler sous flux d'azote. Le mélange réactionnel est agité à 20 °C pendant 15 min. On introduit ensuite la solution de PEESSO₂Cl (XXVI) préalablement préparée à l'aide d'une seringue en prenant soin de manipuler sous flux d'azote. La réaction se poursuit à 20°C pendant 1 h. En fin de réaction, on observe un précipité blanc.

Le solvant est évaporé. Le solide obtenu est lavé avec 3 fois 10 mL de tetrahydrofurane, puis séché pendant une nuit sous vide (1.10⁻² mbar).

Le spectre RMN ¹H réalisé dans le DMSO-D6 (¹H NMR (200 MHz) δ 8, 05 - 7, 78 (m, 4H), 7,44 (s, 1H), 7,33 - 6,90 (m, 6H), 2,44 (s, 3H)) confirme la structure attendue. Le spectre RMN du ¹H montre qu'il y a un groupement méthylsulfonamide par rapport au motif dioxoaryle à 2,44 ppm.

Le rendement pondéral en PEESSO₂N⁻(Li⁺) SO₂CH₃ (IIIa) est de 97% par rapport au PEESSO₂Cl (XXVI) engagé.

### Exemples 20 - Préparation des polymères IIIa-b avec différentes sulfonamides

Selon le protocole décrit dans l'exemple 19 les polymères suivants ont été préparés :

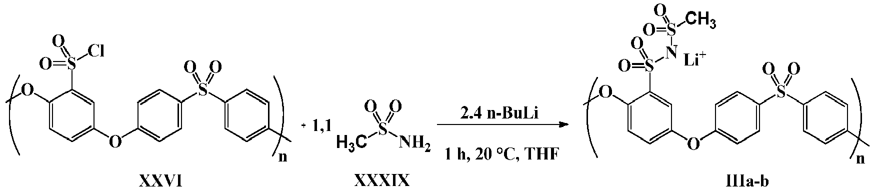

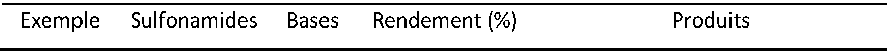

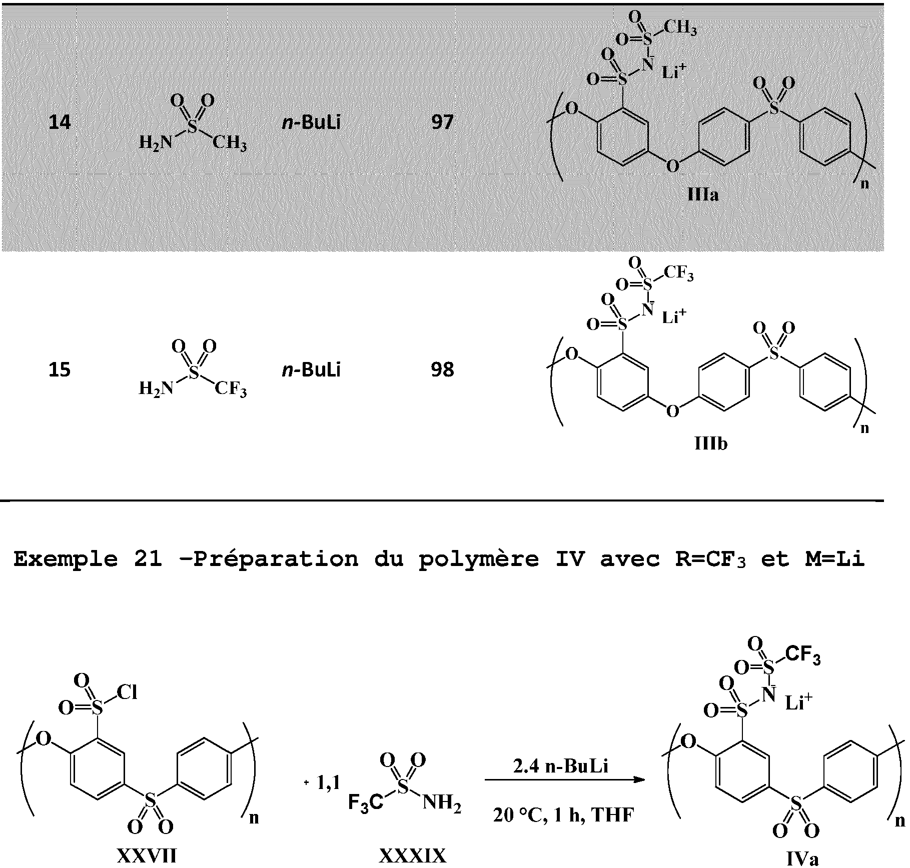

Sous atmosphère d'azote, on prépare une solution de 0,200 g de PESSO₂Cl (XXVII) préparé selon l'exemple 8, dans 10 mL de tétrahydrofurane distillé de manière à avoir une concentration molaire en PESSO₂Cl (XXVII) de 0,060 M. Tous les solvants utilisés lors de ces synthèses ont été distillés, stockés et prélevés sous atmosphère d'azote.

Sous atmosphère d'azote, dans un réacteur en verre cylindrique, on introduit successivement 0,099 g de méthanesulfonamide (CF₃SO₂NH₂ (XXXIX), 1,1 équivalents par rapport au nombre de motif SO₂Cl), 10 mL de tétrahydrofurane distillé de manière à avoir une concentration molaire en CH₃SO₂NH₂ (XXXIX) de 0,066 M et 0, 72 mL de *n*-BuLi ([C] = 2 M dans l'hexane, 2,4 équivalents par rapport au PESSO₂Cl (XXVII)) à l'aide d'une seringue en prenant soin de manipuler sous flux d'azote. Le mélange réactionnel est agité à 20 °C pendant 15 min. On introduit ensuite la solution de PESSO₂Cl (XXVII) préalablement préparé à l'aide d'une seringue en prenant soin de manipuler sous flux d'azote. La réaction se poursuit à 20°C pendant 1 h. En fin de réaction, on observe un précipité blanc.

Le solvant est évaporé. Le solide obtenu est lavé avec 3 fois 10 mL de tétrahydrofurane, puis obtenu est séché pendant une nuit sous vide (1.10⁻² mbar).
Les spectres RMN ¹H et du ¹⁹F réalisés dans le DMSO-D6 (¹H NMR (200 MHz) δ 8,40 - 8,22 (m, 1H), 8,11 - 7,83 (m, 3H), 7,40 - 7,01 (m, 3H). ¹⁹F NMR (188 MHz) δ -77,81 (s) confirment la structure attendue.
Le spectre RMN du ¹⁹F montre un seul pic correspondant au trifluorométhylsulfonamide polymérique.

Le rendement pondéral en PESSO₂N⁻(Li⁺)SO₂CF₃ (IVa) est de 83% par rapport au PESSO₂Cl (XXVII) engagé.

### Exemples 22 à 24 - Préparation des polymères IVb-d avec différentes sulfonamides

Selon le protocole décrit dans l'exemple 21 les polymères suivants ont été préparés :

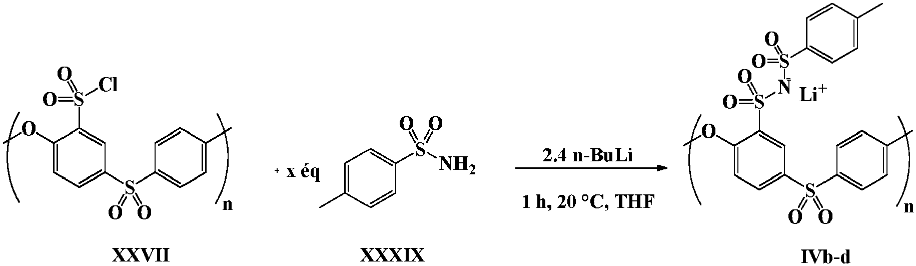

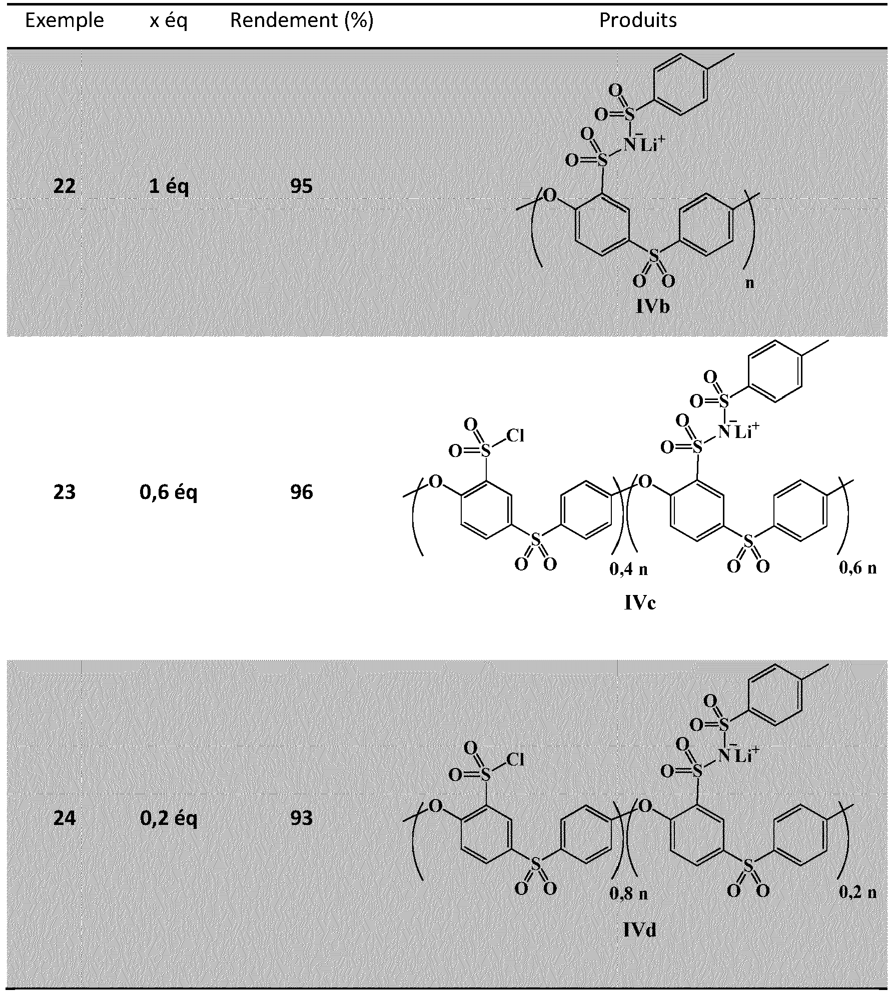

### Exemples 25 -Préparation alternative du polymère Ia avec R=CH₃ et M=Li

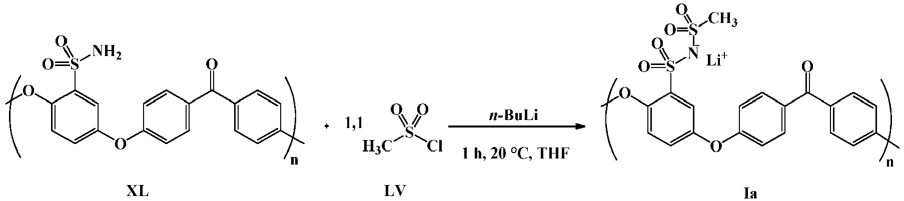

Sous atmosphère d'azote, on prépare une solution de 0,200 g de PEEKSO₂NH₂ (XL) préparé selon l'exemple 9, dans 10 mL de tétrahydrofurane distillé de manière à avoir une concentration molaire en PEEKSO₂NH₂ (XL) de 0,057 M. Tous les solvants utilisés lors de ces synthèses ont été distillés, stockés et prélevés sous atmosphère d'azote. Après solubilisation du PEEKSO₂NH₂, on ajoute 0,68 mL de *n*-BuLi ([C] = 2 M dans l'hexane, 2,4 équivalents par rapport au PEEKSO₂NH₂ (XL)) à l'aide d'une seringue en prenant soin de manipuler sous flux d'azote. Après 15 min à température ambiante, on introduit 0,0783 g le chlorure de méthanesulfonyle (CH₃SO₂Cl (LV), 1,2 équivalent par rapport au nombre de motif SO₂NH₂). La réaction se poursuit à 20°C pendant 1 h. En fin de réaction, on observe un précipité blanc.

Le solvant est évaporé. Le solide obtenu est lavé avec 3 fois 10 mL de tétrahydrofurane, puis le produit obtenu est séché pendant une nuit sous vide (1.10⁻² mbar).

Le spectre RMN ¹H réalisé dans le DMSO-D6 (¹H NMR (200 MHz) δ 7,97 - 7,64 (m, 4H) , 7,50 (s, 1H), 7,34 - 6,91 (m, 6H), 2,46 (s, 3H)) confirme la structure attendue.

Le spectre RMN du ¹H montre qu'il y a un groupement méthylsulfonamide par rapport au motif dioxoaryle à 2,46 ppm.

Le rendement pondéral en PEEKSO₂N⁻ (Li⁺) SO₂CH₃ (Ia) est de 35 % par rapport au PEEKSO₂NH₂ (XL) engagé.

### Exemples 26-28 - Préparation de films de polymère

Sous atmosphère d'azote, dans un réacteur en verre cylindrique, on pèse directement 100 mg de polymère I, III ou IV, puis on ajoute 3 mL de diméthylesulfoxyde distillé. Tous les solvants utilisés lors de ces synthèses ont été distillés, stockés et prélevés sous atmosphère d'azote. Après solubilisation complète du polymère, la solution est introduite dans une boite de pétri de 5 cm de diamètre. La boite de pétri est déposée sur une plaque chauffante à 50 °C. Après une nuit, le solvant est totalement évaporé et on obtient un film cylindrique de 5 cm de diamètre d'une épaisseur de l'ordre de 100 µm. Ce film est un film transparent présente une résistance mécanique suffisante pour pouvoir être extrait de la boîte de Pétri au moyen d'une pince et manipulé par un opérateur sans déchirure.

### Exemples 29 - Mesures de conductivités

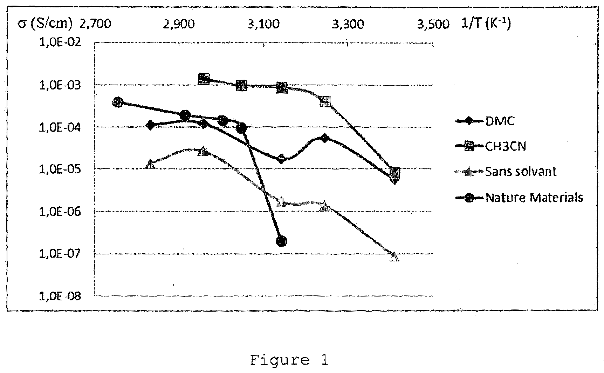

Les conductivités ioniques des polymères préparés dans les exemples 12-16 ont été déterminées par spectroscopie d'impédance. Les résultats obtenus avec le polymère décrit dans l'exemple 7 sont rapportés dans la figure 1 des dessins, qui montre l'évolution de la conductivité du polymère décrit dans l'exemple 7 en fonction de la température et comparaison avec un électrolyte polymère décrit dans la littérature (Nature Materials), ces résultats étant confrontés aux résultats obtenus dans la publication de D. Gigmes et coll. dans Nature Materials, 12, 452-457 (2013).

On peut remarquer qu'à basse température (< 45 °C), les conductivités sont supérieures aux conductivités publiées dans le brevet FR 2979630 et la publication de D. Gigmes et coll. dans Nature Materials, 12, 452-457 (2013), même sans ajout de solvant. De plus, les conductivités obtenues en présence d'un solvant plastifiant, comme l'acétonitrile ou le diméthylecarbonate (DMC), sont du même ordre de grandeur voire supérieures aux résultats décrits dans le brevet FR 2979630 et la publication de D. Gigmes et coll. dans Nature Materials, 12, 452-457 (2013) sur toute la gamme de température étudiée.

## Revendications

1. Polymères de la famille des polyaryle éther cétones ou polymères polyéther sulfones contenant des sels de lithium ou de sodium de bis(sulfonyl)imides greffés répondant aux formules I , II, III, IV, V, VI, VII, VIII, IX, X, XI, XII, XIII, XIV et XV. 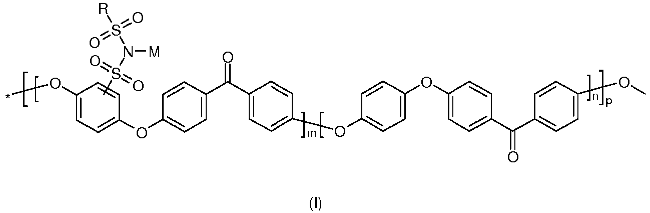 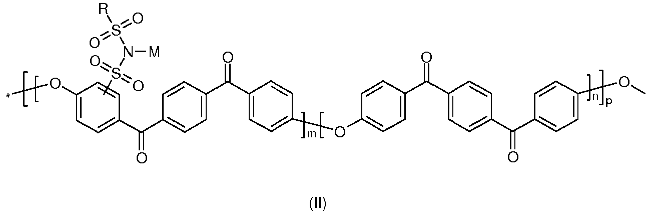 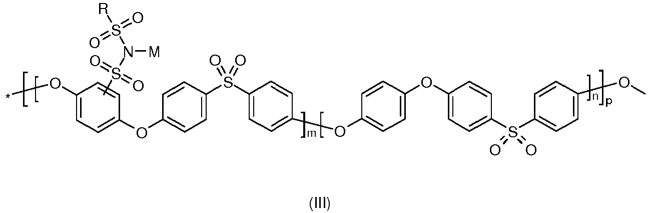 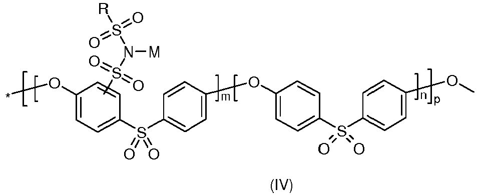 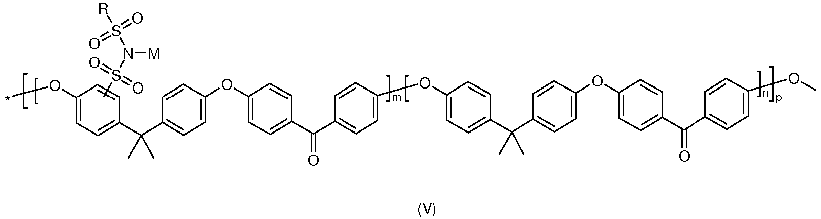 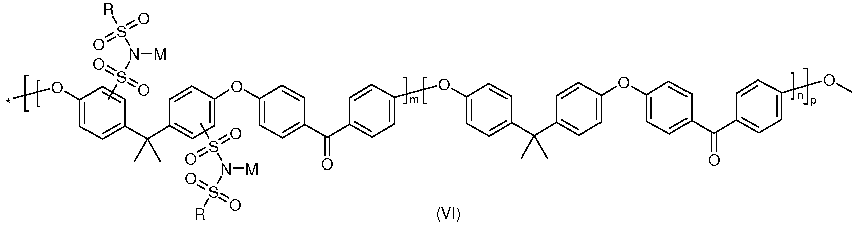 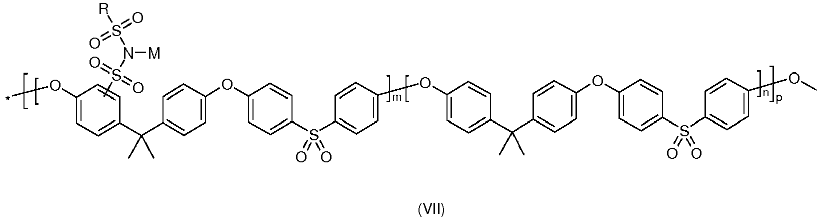 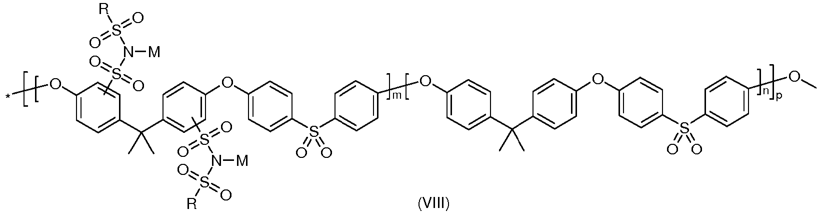 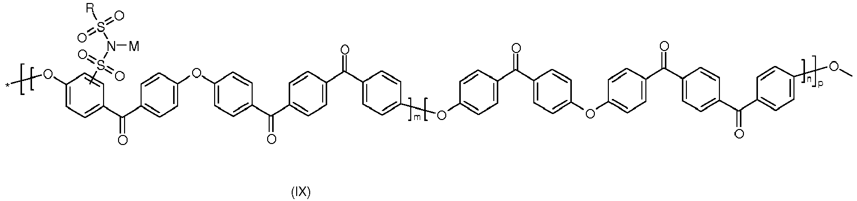 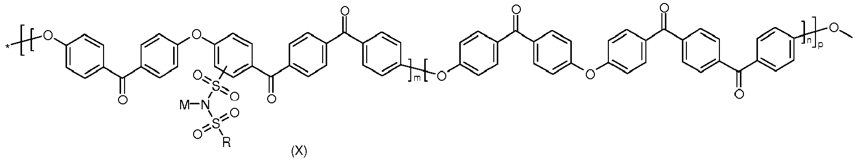 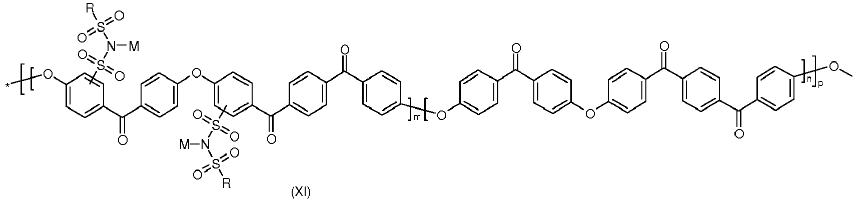 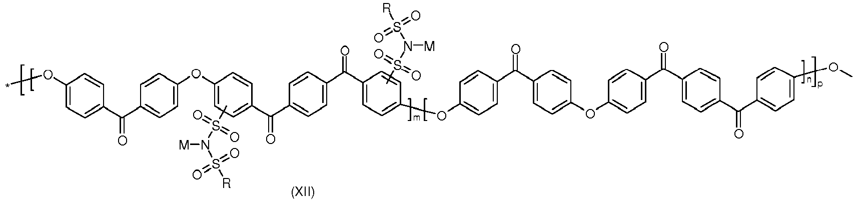 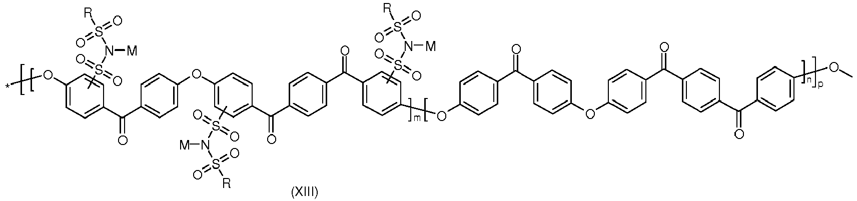 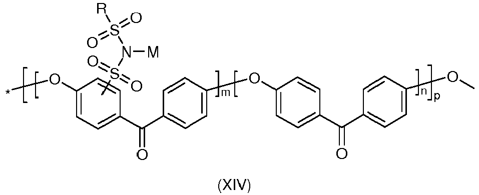 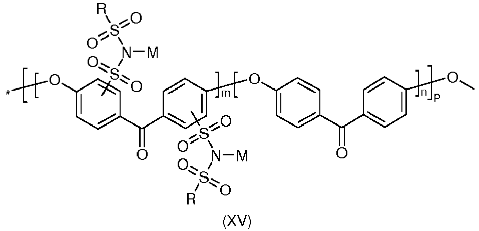 dans lesquelles :
- M représente un atome de lithium ou de sodium
- R représente un groupement ou des groupements différents choisi(s) parmi :
• un groupement alkyle ou cycloalkyle ayant de 1 à 30 atomes de carbone linéaire ou ramifié éventuellement substitué par un motif cycloalkyle, aryle, perfluoroalkyle, polyfluoroalkyle, mono ou polyéthoxylé ;
• un groupement perfluoro- ou polyfluoroalkyle éventuellement substitué par des groupes aromatiques,
• un groupement aryle ou polyarylique éventuellement substitué par des motifs alkyles, cycloalkyles, polyfluoro- ou perfluoroalkyles, par des fonctions nitriles, des fonctions alkyl- ou alkylsulfonyles, par des atomes de fluor ;
- m représente le pourcentage d'unités polymériques ayant un motif oxoaryle ou dioxoaryle possédant un sel de bis(sulfonyl)imidure greffé, ce pourcentage variant entre 50 et 100%, plus préférentiellement variant entre 90 et 100% ;
- n représente le pourcentage d'unités polymériques ayant aucun motif oxoaryle ou dioxoaryle fonctionnalisé par un motif bis(sulfonyl)imide, ce pourcentage variant entre 0 et 50%, plus préférentiellement variant entre 0 et 10% ;
- p représente le nombre d'unités polymériques du polymère, p variant de 40 à 300.

2. Polymères selon la revendication 1, **caractérisés en ce que**:
- M représente un atome de lithium ou de sodium,
- R représente un groupement ou des groupements différents choisi(s) parmi :
• un alkyle de 1 à 10 atomes de carbone comme les groupes méthyle, éthyle, propyle, butyle, pentyle, hexyle, cyclohexyle, éthylhexyle ;
• un groupe trifluorométhyle, pentafluoroéthyle, nonafluorobutyle, 1,1,2,2-tétrafluoroéthyle ;
• un groupe aryle de type phényle, tolyle, naphtyle, trifluorométhylphényle, bis(trifluorométhyl)phényle, cyanophényle, alkylsulfonylphényle, arylsulfonylphényle, méthoxyphenyle, butoxyphényle, pentafluorophényle, alkylsulfonylphényle, fluorophényle,
- m représente le pourcentage d'unités polymériques ayant un motif oxoaryle ou dioxoaryle fonctionnalisé par un motif bis(sulfonyl)imide, ce pourcentage variant entre 90 et 100%,
- n représente le pourcentage d'unités polymériques ayant un motif oxoaryle ou dioxoaryle non fonctionnalisé par un motif bis(sulfonyl)imide, ce pourcentage variant entre 0 et 10%,
- p représente le nombre d'unités polymériques du polymère, p variant de 60 à 200.

3. Polymères selon l'une des revendications 1 à 2, **caractérisés en ce que**:
- M représente un atome de lithium ou de sodium,
- R est un groupe méthyle, éthyle, propyle, cyclopropyle, butyle, 1-décyle, 1-dodécyle, 1-hexanedécyl, 1-octyldécyle, (7,7-diméthyl-2-oxobicyclo[2.2.1]heptan-1-yl)méthyle, ((1R)-7,7-diméthyl-2-oxobicyclo[2.2.1]heptan-1-yl)méthyle, (1S)-(7,7-diméthyl-2-oxobicyclo[2.2.1]heptan-1-yl)méthyle, cyclohexyleméthyle, trifluorométhyle, phényle, tolyle, naphtyle, 4-trifluorométhylphényle, 3,5-bis(trifluorométhyl)phényle, 4-cyanophényle, 1,1,2,2,2-pentafluoroéthanyle, nonafluorobutyle, pentaflurophényle, 2,3,5,6-tétrafluorophényle, 4-fluorophényle, 2,4-difluorophényle, 3,5-difluorophényle, 2,3,4,5,6-pentafluorophényle, 4-cyanophényle, 4-(trifluorométhyl)phényle, 3-(trifluorométhyl)phényle, 2-(trifluorométhyl)phényle, 4-méthylphényle, 1-naphtyle, le 2-naphtyle, 3,5-difluorobenzyle, 4-fluorobenzyle, 3-trifluorométhylbenzyle, 4-trifluorométhylbenzyle, 2,5-diméthylbenzyle, 2-phényléthyle, 4-méthoxyphényle, 4-n-butylphényle, 4-t-butylphényle, 4-butoxyphényle, 2-fluoro-5-(trifluorométhyl)phényle, 4-éthylphényle,
- m représente le pourcentage d'unités polymériques ayant un motif dioxoaryle fonctionnalisé par un bis(sulfonyl)imide, ce pourcentage variant entre 90 et 100%,
- n représente le pourcentage d'unités polymériques ayant un motif dioxoaryle non fonctionnalisé par un bis(sulfonyl)imide, ce pourcentage variant entre 0 et 10%.
- p représente le nombre d'unités polymériques du polymère, p variant de 60 à 200.

4. Procédé de synthèse des polymères selon l'une des revendications 1 à 3, **caractérisé en ce que** :
on réalise dans une première étape la chlorosulfonation d'un polymère de formules XVI, XVII, XVIII, XIX, XX, XXI, XXII, XXIII par un mélange d'acide chlorosulfonique, de chlorure de thionyle et d'un formamide 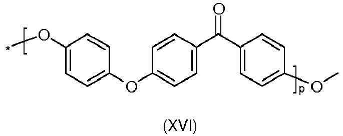 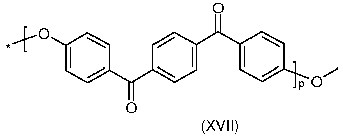 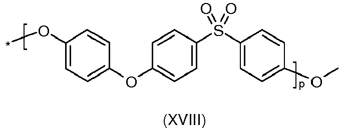 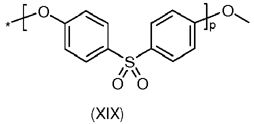 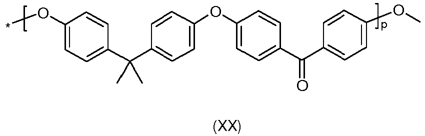 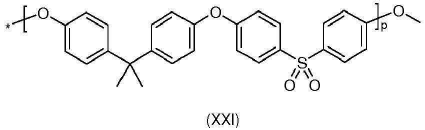 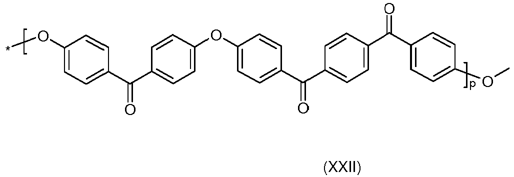 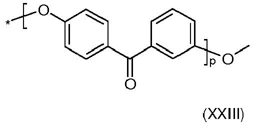 dans lesquelles :
p représente le nombre d'unités polymériques du polymère, p variant de 40 à 300, préférentiellemnt entre 60 et 200,
pour obtenir les polymères de formules XXIV, XXV, XXVI, XVII, XXVIII, XIX, XXX, XXXI, XXXII, XXXIII, XXXIV, XXXV, XXXVI, XXXVII et XXXVIII 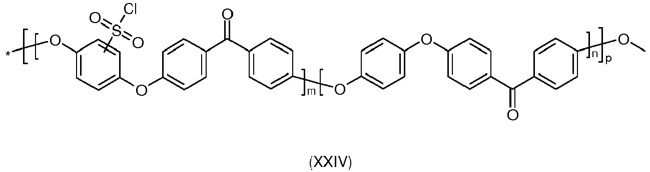 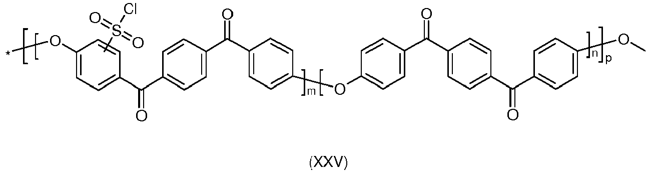 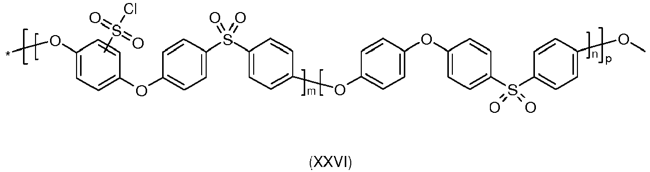 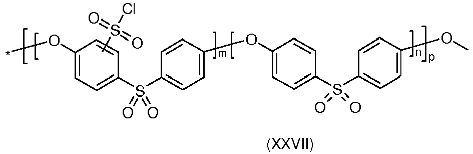 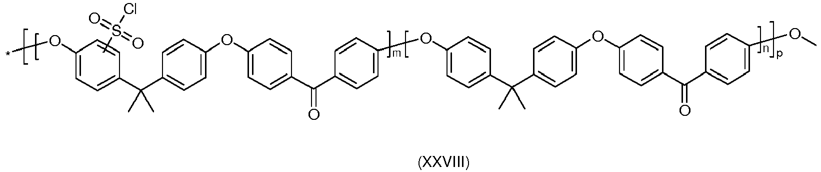 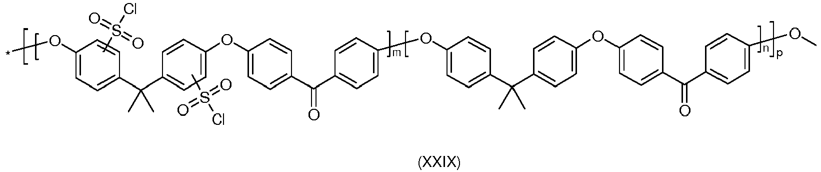 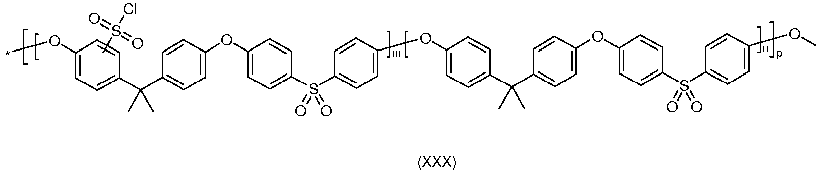 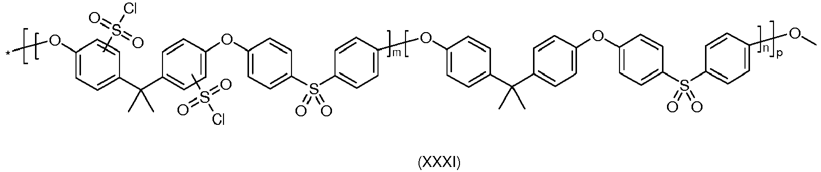 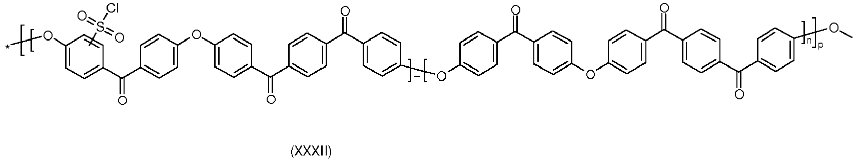 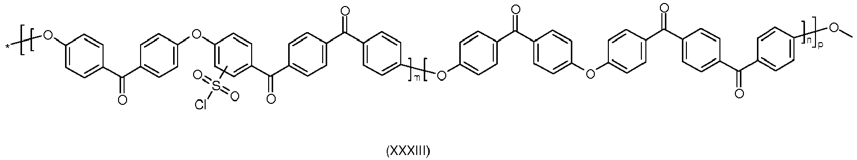 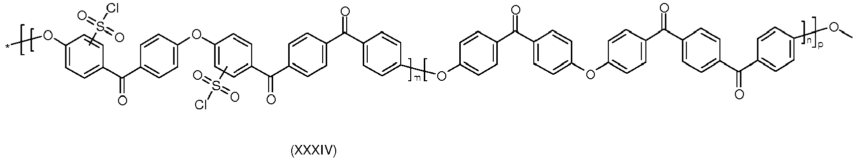 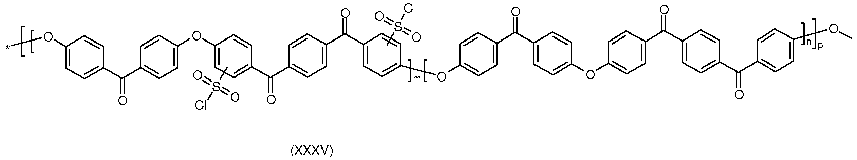 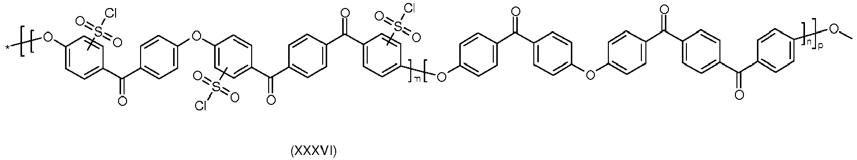 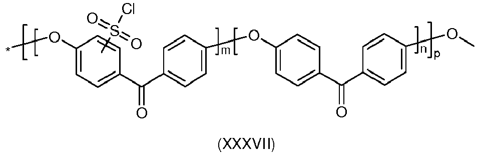 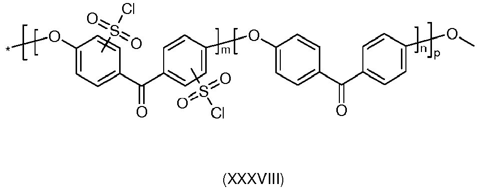 dans lesquelles :
- m représente le pourcentage d'unités polymériques ayant un motif oxoaryle ou dioxoaryle fonctionnalisé par un groupement chlorosulfoné, ce pourcentage variant entre 50 et 100%, plus préférentiellement variant entre 90 et 100% ;
- n représente le pourcentage d'unités polymériques ayant un motif dioxoaryle non fonctionnalisé par un groupement chlorosulfoné, ce pourcentage variant entre 0 et 50%, plus préférentiellement variant entre 0 et 10% ;
- p représente le nombre d'unités polymériques du polymère, p variant de 40 à 300, plus préférentiellement p variant entre 60 et 200 ;
dans une deuxième étape, on fait réagir sur les polymères de formules XXIV, XXV, XXVI, XVII, XXVIII, XIX, XXX, XXXI, XXXII, XXXIII, XXXIV, XXXV, XXXVI, XXXVII et XXXVIII un sulfonamide de formule XXXIX en milieu solvant 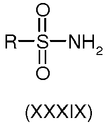 dans lesquelles :
- R représente un groupement ou des groupements différents choisi(s) parmi:
• un groupement alkyle ou cycloalkyle ayant de 1 à 30 atomes de carbone linéaire ou ramifié éventuellement substitué par un motif cycloalkyle, aryle, perfluoroalkyle, polyfluoroalkyle, mono ou polyéthoxylé ;
• un groupement perfluoro- ou polyfluoroalkyle éventuellement substitué par des groupes aromatiques;
• un groupement aryle ou polyaryliques éventuellement substitués par des motifs alkyles, cycloalkyles, polyfluoro- ou perfluoroalkyles, par des fonctions nitriles, des fonctions alkyl- ou alkylsulfonyles, par des atomes de fluor ;
- m représente le pourcentage d'unités polymériques ayant un motif oxoaryle ou dioxoaryle possédant un sel de bis(sulfonyl)imidure greffé, ce pourcentage variant entre 50 et 100%,
en présence d'une base lithiée ou sodée.

5. Procédé selon la revendication 4, **caractérisé en ce que** le groupemant R du sulfonamide XXXIX est choisi parmi les groupes méthyle, éthyle, propyle, cyclopropyle, butyle, 1-décyle, 1-dodécyle, 1-hexanedécyle, 1-octyldécyle, (7,7-diméthyl-2-oxobicyclo[2.2.1]heptan-1-yl)méthyle, ((1R)-7,7-diméthyl-2-oxobicyclo[2.2.1]heptan-1-yl)méthyle, (1S)-(7,7-diméthyl-2-oxobicyclo[2.2.1]heptan-1-yl)méthyle, cyclohéxylmethyle, trifluorométhyle, phényle, tolyle, naphtyle, 4-trifluorométhylphényle, 3,5-bis(trifluorométhyl)phényle, 2,5-bis(trifluorométhyl)phényle, 4-cyanophényle, 1,1,2,2,2-pentafluoroéthanyle, nonafluorobutyle, pentafluorophényle, 2,3,5,6-tétrafluorophényle, 4-fluorophényle, 2,4-difluorophényle, 3,5-difluorophényle, 2,3,4,5,6-pentafluorophényle, 4-cyanophényle, 3-(trifluorométhyl)phényle, 2-(trifluorométhyl)phényle, 4-méthylphényle, 1-naphtyle, le 2-naphtyle, 3,5-difluorobenzyle, 4-fluorobenzyle, 3-trifluorométhylbenzyle, 4-trifluorométhylbenzyle, 2,5-diméthylbenzyle, 2-phényléthyle, 4-méthoxyphényle, 4-n-butylphényle, 4-t-butylphényle, 4-butoxyphényle, 2-fluoro-5-(trifluorométhyl)phényle, 4-éthylphényle.

6. Procédé de synthèse des polymères selon l'une des revendications 1 à 3, **caractérisé en ce que** :
dans une première étape, on réalise la chlorosulfonation d'un polymère de formules XVI, XVII, XVIII, XIX, XX, XXI, XXII et XXIII dans lesquelles :
- p représente le nombre d'unités polymériques du polymère, p variant de 40 à 300,
pour obtenir les polymères chlorosulfonés de formules XXIV, XXV, XXVI, XXVII, XXVIII, XXIX, XXX, XXXI, XXXII, XXXIII, XXXIV, XXXV, XXXVI, XXXVII et XXXVIII dans lesquels :
- m représente le pourcentage d'unités polymériques ayant un motif dioxoaryle fonctionnalisé par un groupement chlorosulfoné, ce pourcentage variant entre 50 et 100%,
- n représente le pourcentage d'unités polymériques ayant un motif dioxoaryle non fonctionnalisé par un groupement chlorosulfoné, ce pourcentage variant entre 0 et 50%,
- p représente le nombre d'unités polymériques du polymère, p variant de 40 à 300,
dans un deuxième temps, on fait réagir sur les polymères de formules XXIV, XXV, XXVI, XXVII, XXVIII, XIX, XXX, XXXI, XXXII, XXXIII, XXXIV, XXXV, XXXVI, XXXVII et XXXVIII en solution de l'ammoniac gaz ou une solution d'ammoniac pour obtenir les polymères de formules XL, XLI, XLII, XLIII, XLIV, XLV, XLVI, XLVII, XLVIII, XLIX, L, LI, LII, LIII et LIV, 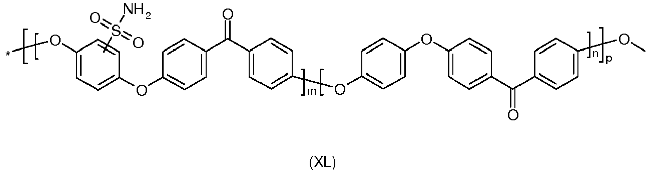 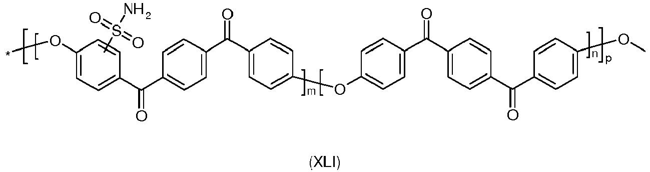 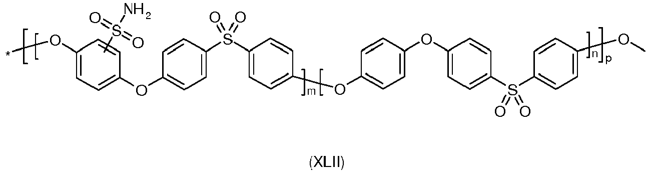 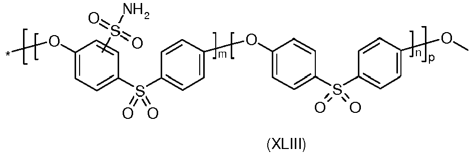 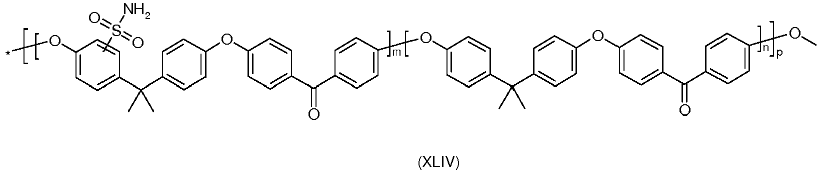 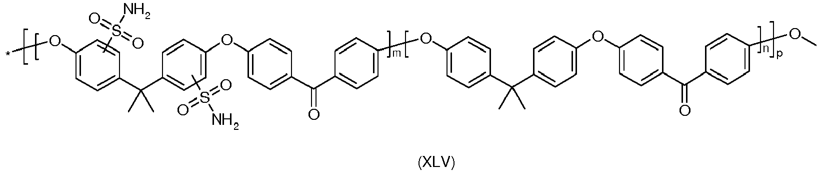 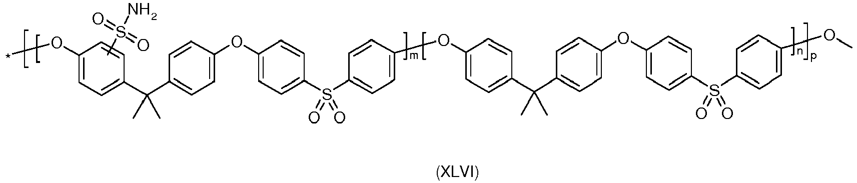 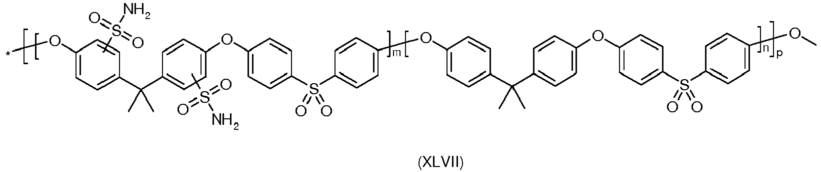 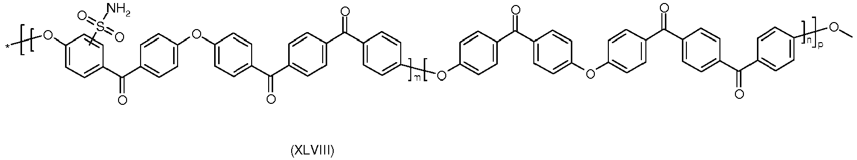 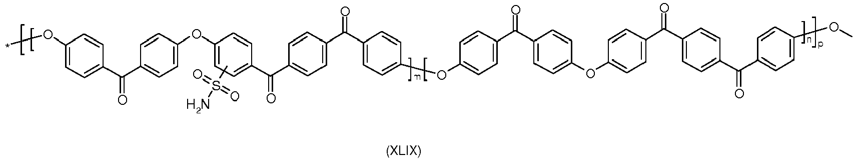 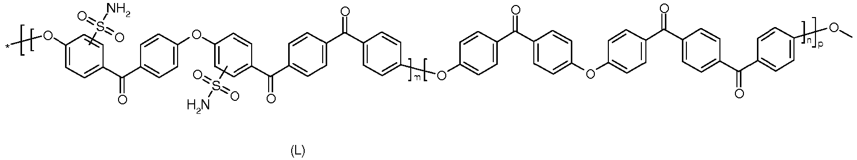 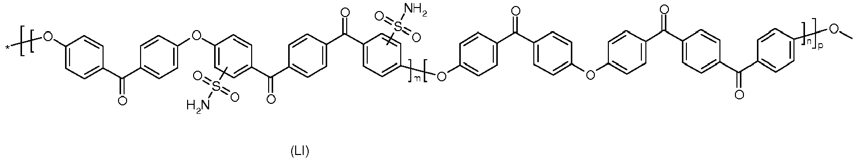 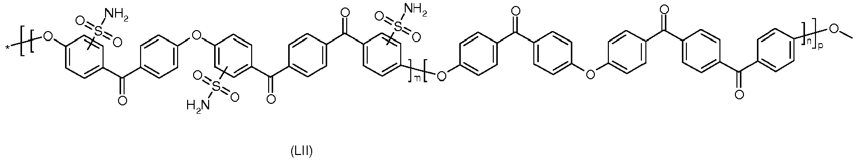 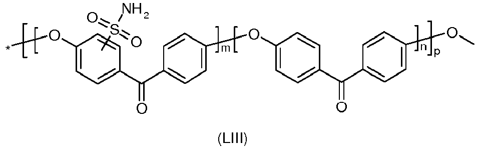 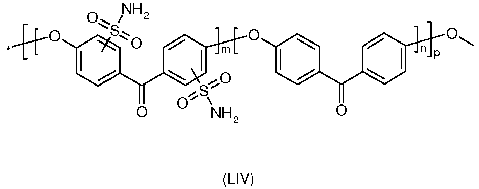 dans lesquelles :
- m représente le pourcentage d'unités polymériques ayant un motif oxoaryle ou dioxoaryle fonctionnalisées possèdant une fonction sulfonamide, ce pourcentage variant entre 50 et 100%,
- n représente le pourcentage d'unités polymériques ayant un motif oxoaryle ou dioxoaryle non fonctionnalisé par une fonction sulfonamide, ce pourcentage variant entre 0 et 50%,
- p représente le nombre d'unités polymériques du polymère, p variant de 40 à 300.
dans un troisième temps, on fait réagir sur les polymères de formules XL, XLI, XLII, XLIII, XLIV, XLV, XLVI, XLVII, XLVIII, XLIX, L, LI, LII, LIII et LIV, un halogénure de sulfonyle de formule LV 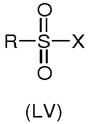 dans laquelle :
- X représente un atome de fluor ou de chlore ou de brome ou un groupe groupe trifluorométhanesulfonyle ou alkylsulfonyle ou arylsulfonyle;
- R représente un groupement ou des groupements différents choisi(s) parmi :
• un groupement alkyle ayant de 1 à 30 atomes de carbone, plus préférentiellement ayant 1 à 10 atomes de carbone, linéaire ou ramifié éventuellement substitué par un motif cycloalkyle, aryle, perfluoroalkyle, polyfluoroalkyle, mono ou polyéthoxylé ; un groupement cycloalkyle ayant ayant de 1 à 30 atomes de carbone linéaire ou ramifié éventuellement substitué par un motif cycloalkyle, aryle, perfluoroalkyle, polyfluoroalkyle, mono ou polyéthoxylé ;
• un groupement perfluoro- ou polyfluoroalkyle éventuellement substitué par des groupes aromatiques,
• un groupement aryle ou polyaryliques éventuellement substitués par des motifs alkyles, cycloalkyles, polyfluoro- ou perfluoroalkyles, par des fonctions nitriles, des fonctions alkyl- ou alkylsulfonyles, par des atomes de fluor ;
en présence d'une base lithiée ou sodée à une température comprise entre 0 et 80°C, préférentiellement entre 20 et 60 °C en milieu solvant.

7. Procédé selon la revendication 6, **caractérisé en ce que** le groupement R de l'halogénure de sulfonyle est un groupe méthyle, éthyle, propyle, cyclopropyle, butyle, 1-décyle, 1-dodécyle, 1-hexanedécyl, 1-octyldécyle, (7,7-diméthyl-2-oxobicyclo[2.2.1]heptan-1-yl)méthyle, ((1R)-7,7-diméthyl-2-oxobicyclo[2.2.1]heptan-1-yl)méthyle, (1S)-(7,7-diméthyl-2-oxobicyclo[2.2.1]heptan-1-yl)méthyle, cyclohexyleméthyle, trifluorométhyle, phényle, tolyle, naphtyle, 4-trifluorométhylphényle, 3,5-bis(trifluorométhyl)phényle, trifluorophenyle, 4-cyanophényle, 1,1,2,2,2-pentafluoroéthanyle, nonafluorobutyle, pentaflurophényle, 2,3,5,6-tétrafluorophényle, 4-fluorophényle, 2,4-difluorophényle, 3,5-difluorophényle, 2,3,4,5,6-pentafluorophényle, 4-(trifluorométhyl)phényle, 3-(trifluorométhyl)phényle, 2-(trifluorométhyl)phényle, 4-méthylphényle, 1-naphtyle, le 2-naphtyle, 3,5-difluorobenzyle, 4-fluorobenzyle, 3-trifluorométhylbenzyle, 4-trifluorométhylbenzyle, 2,5-diméthylbenzyle, 2-phényléthyle, 4-méthoxyphényle, 4-n-butylphényle, 4-t-butylphényle, 4-butoxyphényle, 2-fluoro-5-(trifluorométhyl)phényle, 4-éthylphényle

8. Procédé selon l'une des revendications 4 à 7, **caractérisé en ce que** la chlorosulfonation est réalisée à une température comprise entre 0 et 80°C par un mélange de 1 à 10 équivalents d'acide chlorosulfonique, 1 à 30 équivalents de chlorure de thionyle en présence de 1 à 10 équivalents d'un amide.

9. Procédé selon l'une des revendications 4 à 8, **caractérisé en ce que** la base est choisie parmi la lithine, la soude, le méthylate de lithium, le méthylate de sodium, l'éthylate de lithium, l'éthylate de sodium, l'isopropylate de lithium, l'isopropylate de sodium, le tertiobutylate de lithium, le tertiobutylate de sodium, l'hydrure de lithium, l'hydrure de sodium, le n-butyllithium, le n-butylsodium, le s-butyllithium, le diisopropylamidure de lithium, le tert-butyllithium, le méthyllithium le phényllithium, le phénylsodium, le benzyllithium, le benzylsodium, le dimesylate de lithium, le dimesylate de sodium, le carbonate de lithium, le carbonate de sodium, l'acétate de lithium, l'acétate de sodium, les bases préférées étant celles qui ne forment pas d'eau lors de la réaction.

10. Procédé selon l'une des revendications 4 à 9, **caractérisé en ce que** la chlorosulfonation est réalisée en présence d'un amide préférentiellement le *N,N-*diméthylformamide.

11. Procédé selon l'une des revendications 4 à 10 **caractérisé en ce que** la réaction de chorosulfonation est effectuée dans un solvant de préférence le THF, le méthylTHF, le dichlorométhane, le dichloroéthane ou un mélange de solvants.

12. Procédé selon l'une des revendications 6 à 11, **caractérisé en ce que** la reaction de l'amination des polymères chlorosulfonés de formules XXIV, XXV, XXVI, XXVII, XXVIII, XIX, XXX, XXXI, XXXII, XXXIII, XXXIV, XXXV, XXXVI, XXXVII et XXXVIII pour former les polymères sulfonamides de formules XL, XLI, XLII, XLIII, XLIV, XLV, XLVI, XLVII, XLVIII, XLIX, L, LI, LII, LIII et LIV est réalisée en milieu solvant par de l'ammoniac gaz ou par une solution d'ammoniac dans un solvant tel que le THF, le méthylTHF, le méthanol, le dioxane, l'isopropanol.

13. Procédé selon l'une des revendications 6 à 12, **caractérisé en ce que** la réaction de l'amination des polymères chlorosulfonés de formules XXIV, XXV, XXVI, XXVII, XXVIII, XIX, XXX, XXXI, XXXII, XXXIII, XXXIV, XXXV, XXXVI, XXXVII et XXXVIII avec le sulfonamide de formule XXXIX est réalisée à une température comprise entre -20 et 60°C.

14. Intermédiaires de synthèse pour la préparation des polymères selon l'une des revendication 1 à 3, **caractérisés en ce que** les intermédiaires de synthèse répondant aux formules XL, XLI, XLII, XLIII, XLIV, XLV, XLVI, XLVII, XLVIII, XLIX, L, LI, LII, LIII et LIV 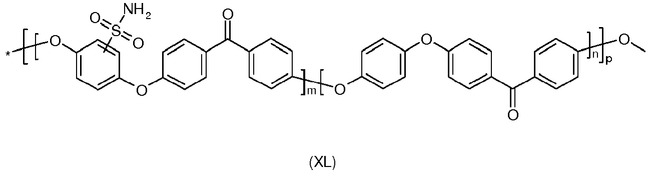 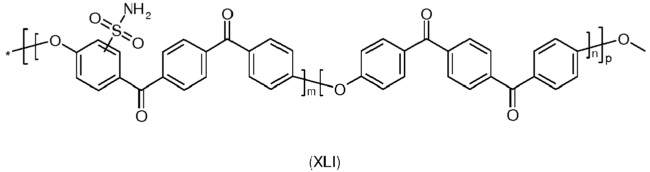 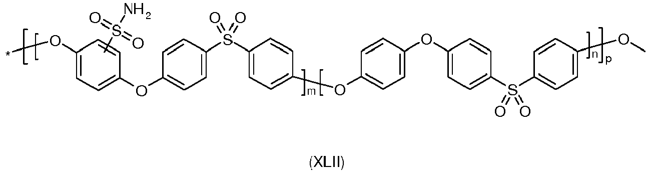 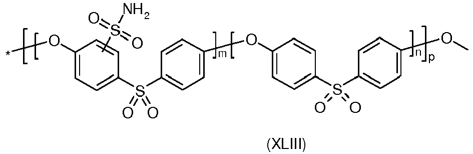 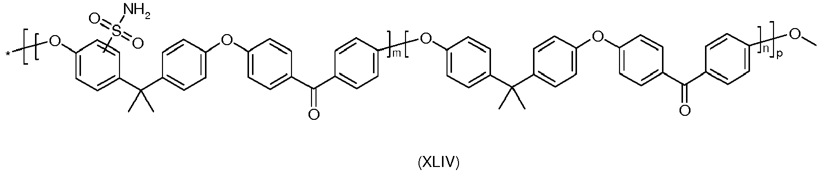 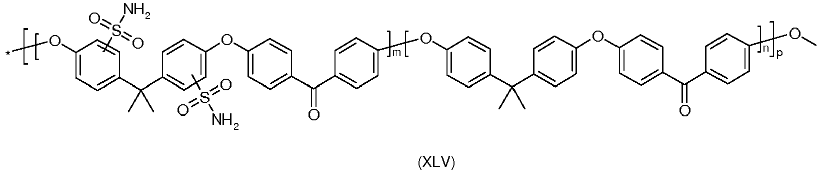 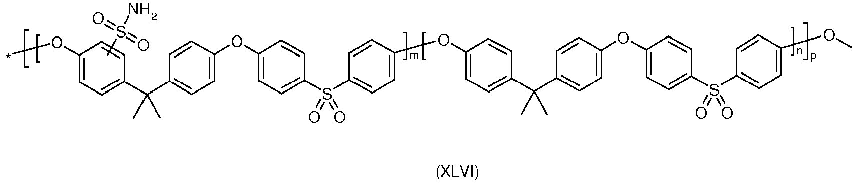 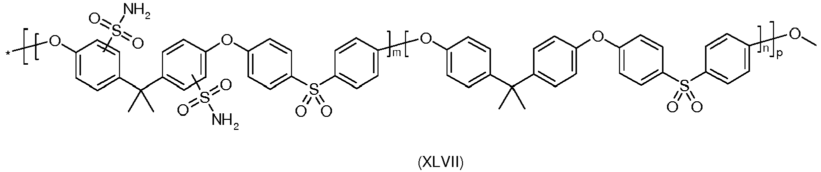 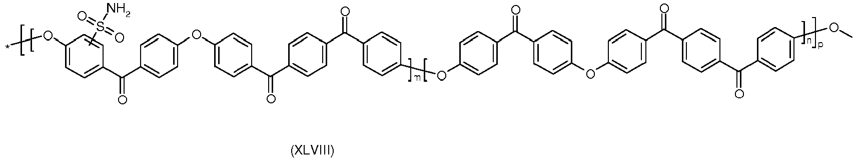 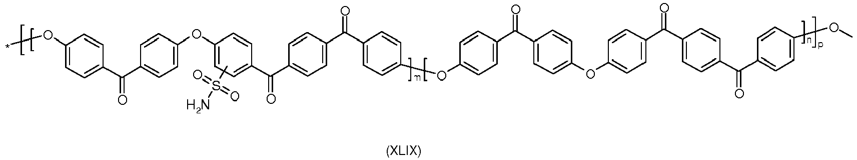 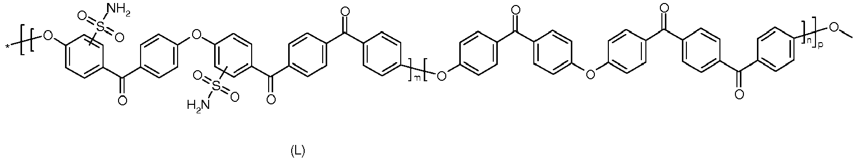 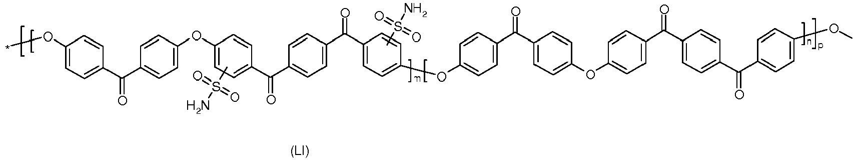 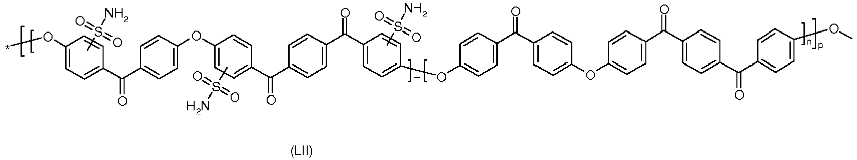 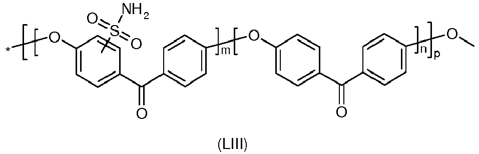 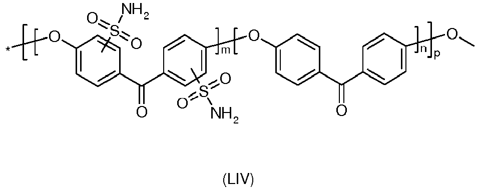 dans lesquelles :
- m représente le pourcentage d'unités polymériques ayant un motif oxoaryle ou dioxoaryle fonctionnalisé possèdant une fonction sulfonamide, ce pourcentage variant entre 50 et 100%, plus préférentiellement variant entre 90 et 100%;
- n représente le pourcentage d'unités polymériques ayant un motif oxoaryle ou dioxoaryle non fonctionnalisé par une fonction sulfonamide, ce pourcentage variant entre 0 et 50%, plus préférentiellement variant entre 0 et 10% ;
- p représente le nombre d'unités polymériques du polymère, p variant de 40 à 300, plus préférentiellement p variant entre 60 et 200.

15. Utilisation des polymères selon l'une des revendications 1 à 3 pour former des films d'une épaisseur comprise entre 10 µm et 200 µm.

16. Procédé de préparation de films servant d'électrolytes pour batteries, **caractérisé en ce que** l'on opère dans un milieu en l'absence de traces d'eau et d'humidité en solubilisant un des polymères selon l'une des revendications 1 à 3 dans un solvant anhydre, en déposant sur un support solide la solution de polymères et ensuite en évaporant le solvant, par chauffage à une température comprise entre 20 et 80°C, par balayage d'un gaz inerte ou par mise sous pression réduite.

17. Procédé selon la revendication 16 **caractérisé en ce que** le solvant est le DMSO.

18. Electrolytes pour batteries, **caractérisés en ce qu'**ils comportent des films de polymères selon l'une des revendications 1 à 3, et **en ce qu'**ils présentent une conductivité comprise entre 10⁻⁸ et 2 X 10⁻³ S/cm en milieu solvant et sans solvant.

19. Electrolytes pour batteries, **caractérisés en ce qu'**ils comportent des films de polymères selon l'une des revendications 1 à 3 et sont utilisés dans une gamme de température comprise entre 20 et 100°C.

## Patentansprüche

1. Polymere der Familie der Polyaryletherketone oder Polyethersulfon-Polymere, enthaltend Lithium- oder Natriumsalze von gepfropften Bis(sulfonyl)imiden, die den Formeln I, II, III, IV, V, VI, VII, VIII, IX, X, XI, XII, XIII, XIV und XV entsprechen: 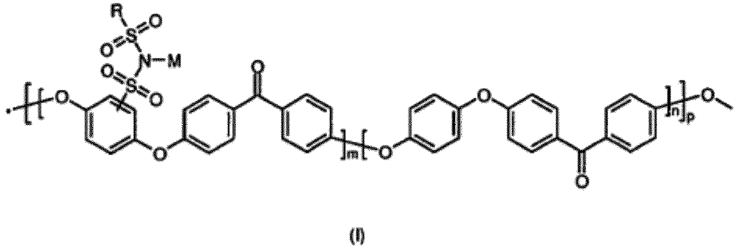 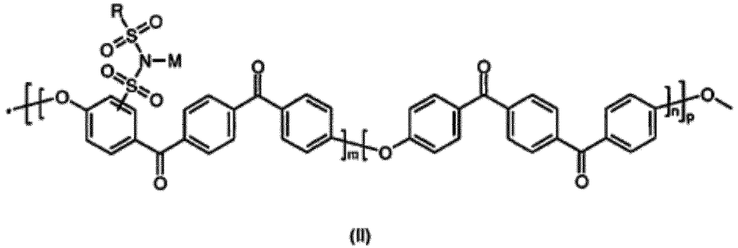 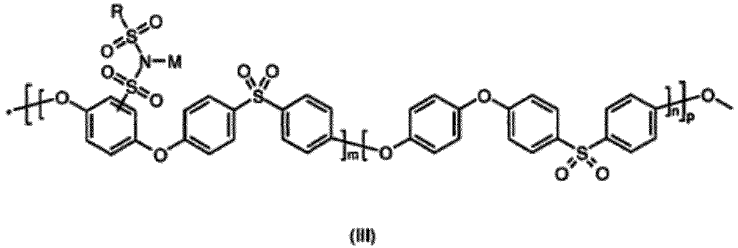 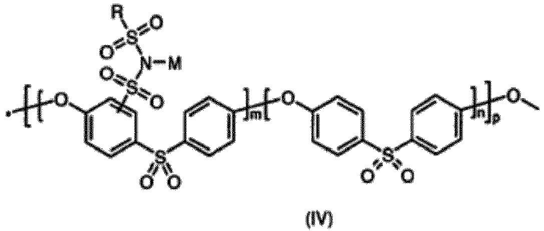 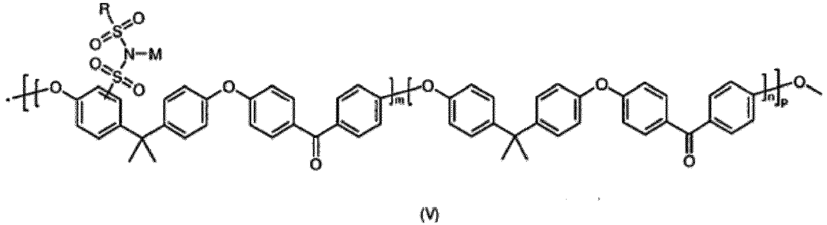 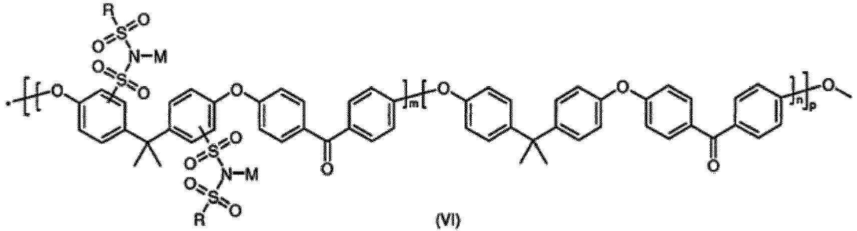 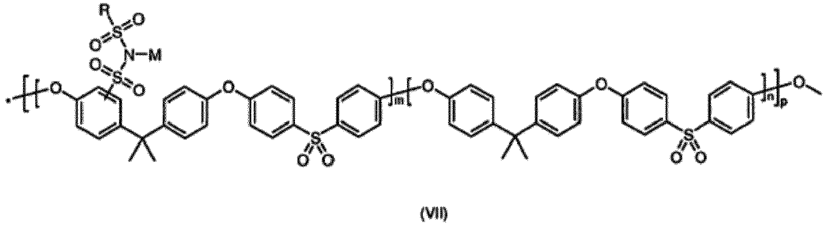 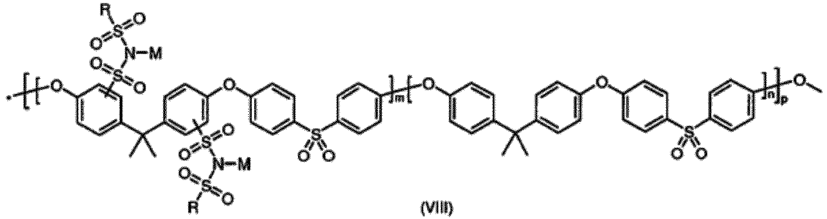 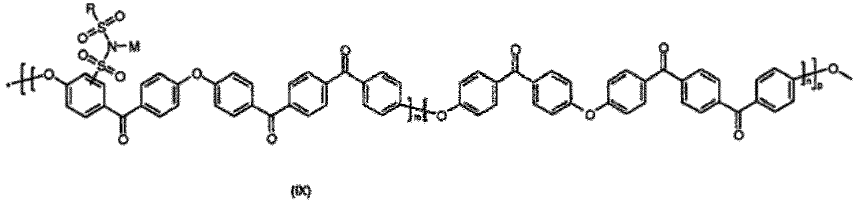 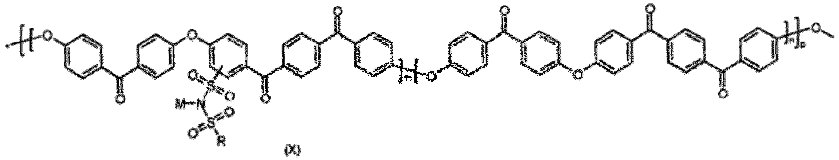 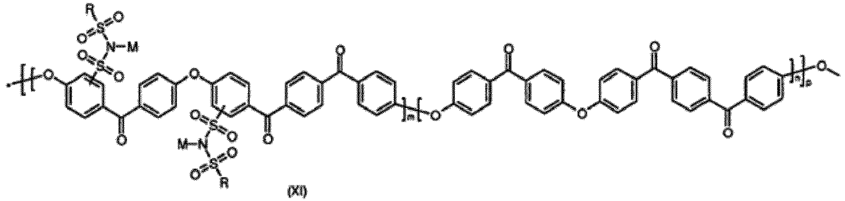 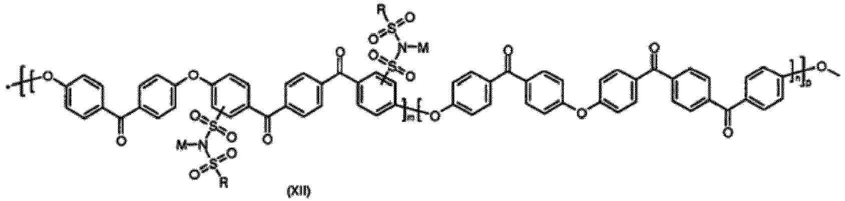 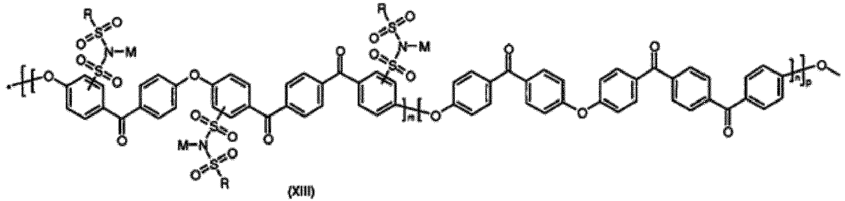 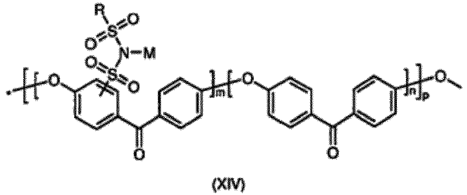 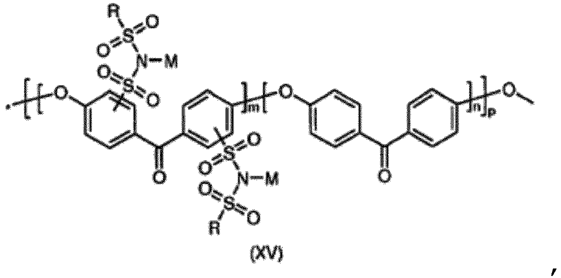 wobei:
- M für ein Lithium- oder Natriumatom steht,
- R für eine Gruppierung oder unterschiedliche Gruppierungen steht, die ausgewählt sind aus:
• einer Alkyl- oder Cycloalkylgruppierung mit 1 bis 30 Kohlenstoffatomen, linear oder verzweigt, gegebenenfalls durch ein Cycloalkyl-, Aryl-, Perfluoralkyl-, Polyfluoralkyl-, Mono- oder Polyethoxyl-Motiv substituiert;
• einer Perfluor- oder Polyfluoralkylgruppierung, gegebenenfalls durch aromatische Gruppen substituiert;
• einer Aryl- oder Polyarylgruppierung, gegebenenfalls durch Alkyl-, Cycloalkyl-, Polyfluor- oder Perfluoralkyl-Motive, durch Nitrilfunktionen, Alkyl- oder Alkylsulfonylfunktionen, durch Fluoratome substituiert;
- m für den Prozentanteil an polymeren Einheiten, die ein Oxoaryl- oder Dioxoaryl-Motiv aufweisen, das über ein Salz von gepfropftem Bis(sulfonyl)imid, steht, wobei dieser Prozentanteil zwischen 50 und 100 % variiert, mehr bevorzugt zwischen 90 und 100 % variiert;
- n für den Prozentanteil an polymeren Einheiten, die kein Oxoaryl- oder Dioxoaryl-Motiv aufweisen, das durch ein Bis(sulfonyl)imid-Motiv funktionalisiert ist, steht, wobei dieser Prozentanteil zwischen 0 und 50 % variiert, mehr bevorzugt zwischen 0 und 10 % variiert;
- p für die Anzahl von polymeren Einheiten des Polymers steht, wobei p von 40 bis 300 variiert.

2. Polymere nach Anspruch 1, **dadurch gekennzeichnet, dass**:
- M für ein Lithium- oder Natriumatom steht,
- R für eine Gruppierung oder unterschiedliche Gruppierungen steht, die ausgewählt sind aus:
• einem Alkyl mit 1 bis 10 Kohlenstoffatomen, wie die Methyl-, Ethyl-, Propyl-, Butyl-, Pentyl-, Hexyl-, Cyclohexyl-, Ethylhexylgruppen;
• einer Trifluormethyl-, Pentafluorethyl-, Nonafluorbutyl-, 1,1,2,2-Tetrafluorethylgruppe;
• einer Arylgruppe vom Phenyl-, Tolyl-, Naphthyl-, Trifluormethylphenyl-, Bis(trifluormethyl)phenyl-, Cyanophenyl-, Alkylsulfonylphenyl-, Arylsulfonylphenyl-, Methoxyphenyl-, Butoxyphenyl-, Pentafluorphenyl-, Alkylsulfonylphenyl-, Fluorphenyl-Typ,
- m für den Prozentanteil an polymeren Einheiten, die ein Oxoaryl- oder Dioxoaryl-Motiv aufweisen, das durch ein Bis(sulfonyl)imid-Motiv funktionalisiert ist, steht, wobei dieser Prozentanteil zwischen 90 und 100 % variiert,
- n für den Prozentanteil an polymeren Einheiten, die ein Oxoaryl- oder Dioxoaryl-Motiv aufweisen, das nicht durch ein Bis(sulfonyl)imid-Motiv funktionalisiert ist, steht, wobei dieser Prozentanteil zwischen 0 und 10 % variiert,
- p für die Anzahl von polymeren Einheiten des Polymers steht, wobei p von 60 bis 200 variiert.

3. Polymere nach einem der Ansprüche 1 bis 2, **dadurch gekennzeichnet, dass**:
- M für ein Lithium- oder Natriumatom steht,
- R eine Methyl-, Ethyl-, Propyl-, Cyclopropyl-, Butyl-, 1-Decyl-, 1-Dodecyl-, 1-Hexandecyl-, 1-Octyldecyl-, (7,7-Dimethyl-2-oxobicyclo[2.2.1]heptan-1-yl)methyl-, ((1R)-7,7-Dimethyl-2-oxobicyclo[2.2.1]heptan-1-yl)methyl-, (1S)-(7,7-Dimethyl-2-oxobicyclo[2.2.1]heptan-1-yl)methyl-, Cyclohexylmethyl-, Trifluormethyl-, Phenyl-, Tolyl-, Naphthyl-, 4-Trifluormethylphenyl-, 3,5-Bis(trifluormethyl)phenyl-, 4-Cyanophenyl-, 1,1,2,2,2-Pentafluorethanyl-, Nonafluorbutyl-, Pentafluorphenyl-, 2,3,5,6-Tetrafluorphenyl-, 4-Fluorphenyl-, 2,4-Difluorphenyl-, 3,5-Difluorphenyl-, 2,3,4,5,6-Pentafluorphenyl-, 4-Cyanophenyl-, 4-(Trifluormethyl)phenyl-, 3-(Trifluormethyl)phenyl-, 2-(Trifluormethyl)phenyl-, 4-Methylphenyl-, 1-Naphthyl-, 2-Naphthyl-, 3,5-Difluorbenzyl-, 4-Fluorbenzyl-, 3-Trifluormethylbenzyl-, 4-Trifluormethylbenzyl-, 2,5-Dimethylbenzyl-, 2-Phenylethyl-, 4-Methoxyphenyl-, 4-n-Butylphenyl-, 4-t-Butylphenyl-, 4-Butoxyphenyl-, 2-Fluor-5-(trifluormethyl)phenyl-, 4-Ethylphenylgruppe ist;
- m für den Prozentanteil an polymeren Einheiten, die ein Dioxoaryl-Motiv aufweisen, das durch ein Bis(sulfonyl)imid funktionalisiert ist, steht, wobei dieser Prozentanteil zwischen 90 und 100 % variiert;
- n für den Prozentanteil an polymeren Einheiten, die ein Dioxoaryl-Motiv aufweisen, das nicht durch ein Bis(sulfonyl)imid funktionalisiert ist, steht, wobei dieser Prozentanteil zwischen 0 und 10 % variiert;
- p für die Anzahl von polymeren Einheiten des Polymers steht, wobei p von 60 bis 200 variiert.

4. Verfahren zur Synthese von Polymeren nach einem der Ansprüche 1 bis 3, **dadurch gekennzeichnet, dass**:
in einem ersten Schritt die Chlorsulfonierung eines Polymers der Formeln XVI, XVII, XVIII, XIX, XX, XXI, XXII, XXIII durch ein Gemisch von Chlorsulfonsäure, Thionylchlorid und einem Formamid durchgeführt wird: 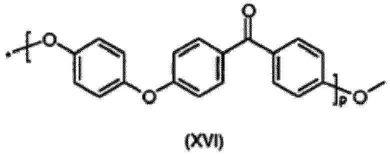 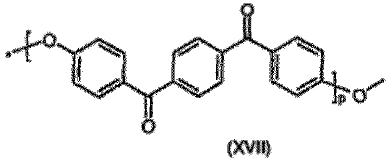 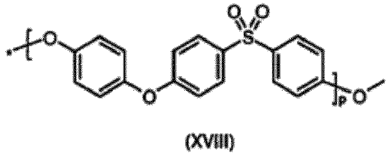 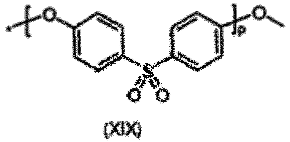 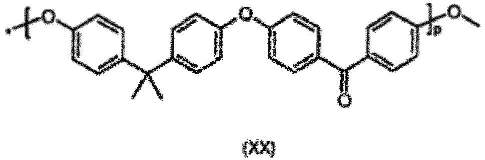 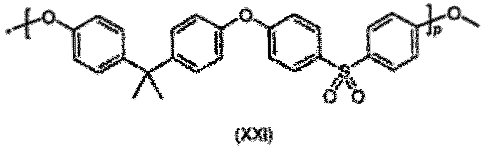 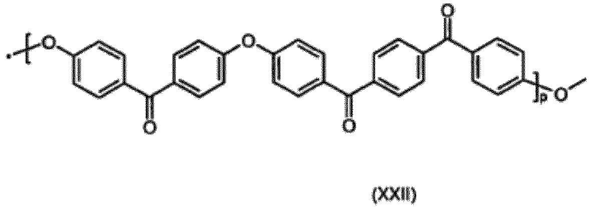 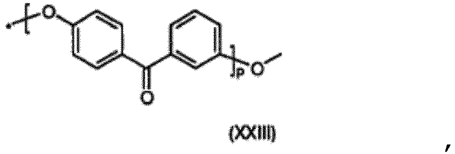 wobei:
p für die Anzahl von polymeren Einheiten des Polymers steht, wobei p von 40 bis 300, vorzugsweise zwischen 60 und 200 variiert,
um die Polymere der Formeln XXIV, XXV, XXVI, XVII, XXVIII, XIX, XXX, XXXI, XXXII, XXXIII, XXXIV, XXXV, XXXVI, XXXVII und XXXVIII zu erhalten: 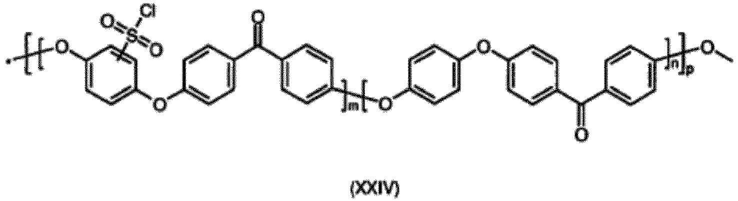 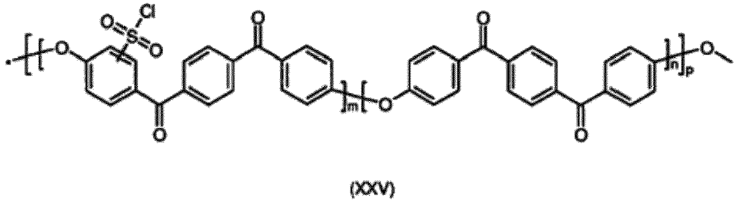 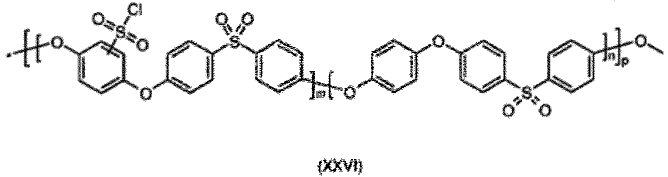 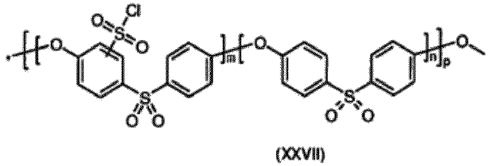 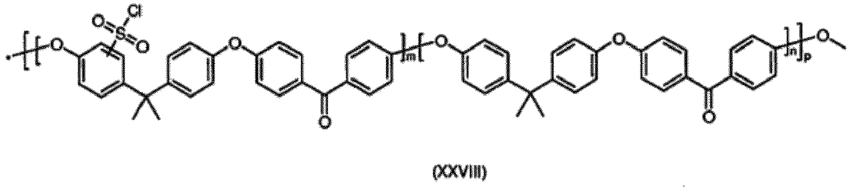 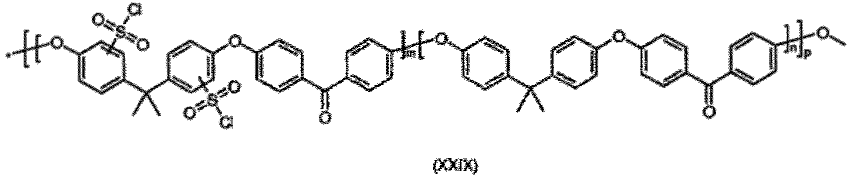 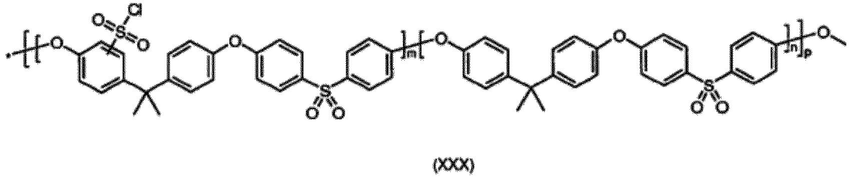 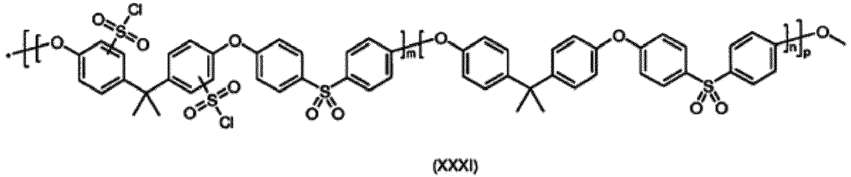 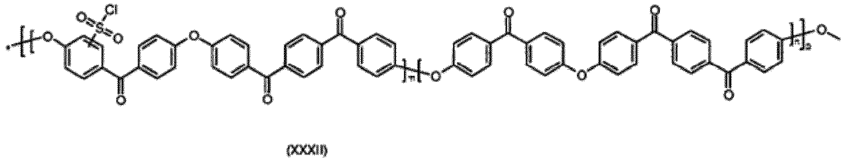 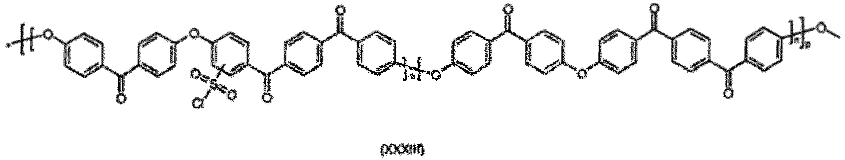 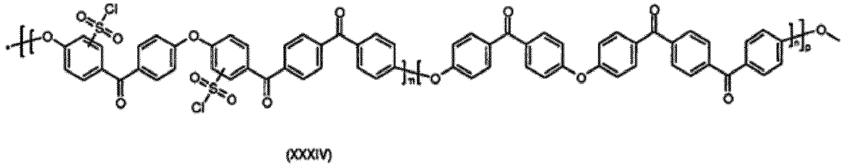 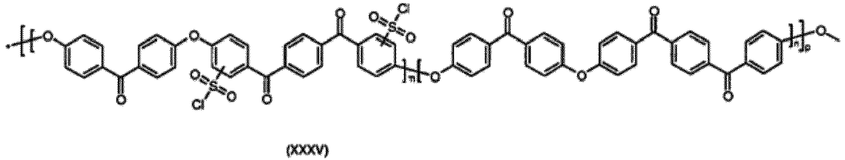 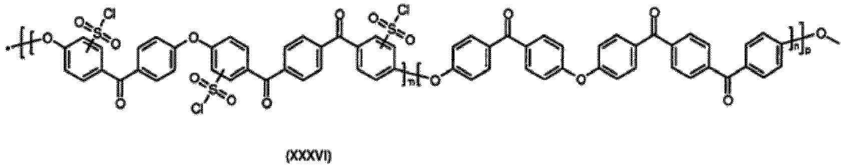 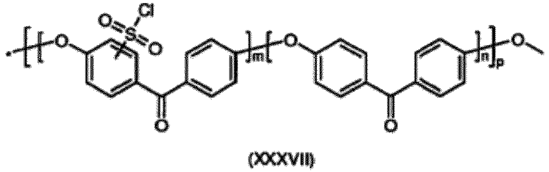 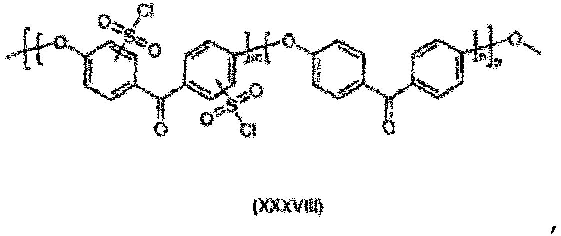 wobei:
- m für den Prozentanteil an polymeren Einheiten, die ein Oxoaryl- oder Dioxoaryl-Motiv aufweisen, das durch eine Chlorsulfongruppierung funktionalisiert ist, steht, wobei dieser Prozentanteil zwischen 50 und 100 % variiert, mehr bevorzugt zwischen 90 und 100 % variiert;
- n für den Prozentanteil an polymeren Einheiten, die ein Dioxoaryl-Motiv aufweisen, das nicht durch eine Chlorsulfongruppierung funktionalisiert ist, steht, wobei dieser Prozentanteil zwischen 0 und 50 % variiert, mehr bevorzugt zwischen 0 und 10 % variiert;
- p für die Anzahl von polymeren Einheiten des Polymers steht, wobei p von 40 bis 300 variiert, mehr bevorzugt p zwischen 60 und 200 variiert;
in einem zweiten Schritt die Polymere der Formeln XXIV, XXV, XXVI, XVII, XXVIII, XIX, XXX, XXXI, XXXII, XXXIII, XXXIV, XXXV, XXXVI, XXXVII und XXXVIII mit einem Sulfonamid der Formel XXXIX in einem Lösungsmittelmedium reagiert werden: 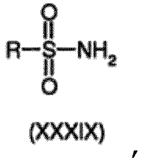 wobei:
- R für eine Gruppierung oder unterschiedliche Gruppierungen steht, die ausgewählt sind aus:
• einer Alkyl- oder Cycloalkylgruppierung mit 1 bis 30 Kohlenstoffatomen, linear oder verzweigt, gegebenenfalls durch ein Cycloalkyl-, Aryl-, Perfluoralkyl-, Polyfluoralkyl-, Mono- oder Polyethoxyl-Motiv substituiert;
• einer Perfluor- oder Polyfluoralkylgruppierung, gegebenenfalls durch aromatische Gruppen substituiert;
• einer Aryl- oder Polyarylgruppierung, gegebenenfalls durch Alkyl-, Cycloalkyl-, Polyfluor- oder Perfluoralkyl-Motive, durch Nitrilfunktionen, Alkyl- oder Alkylsulfonylfunktionen, durch Fluoratome substituiert;
- m für den Prozentanteil an polymeren Einheiten, die ein Oxoaryl- oder Dioxoaryl-Motiv aufweisen, das über ein Salz von gepfropftem Bis(sulfonyl)imid verfügt, steht, wobei dieser Prozentanteil zwischen 50 und 100 % variiert, in Gegenwart einer Lithium- oder Natriumbase.

5. Verfahren nach Anspruch 4, **dadurch gekennzeichnet, dass** die R-Gruppierung des Sulfonamids XXXIX aus den Methyl-, Ethyl-, Propyl-, Cyclopropyl-, Butyl-, 1-Decyl-, 1-Dodecyl-, 1-Hexandecyl-, 1-Octyldecyl-, (7,7-Dimethyl-2-oxobicyclo[2.2.1]heptan-1-yl)methyl-, ((1R)-7,7-Dimethyl-2-oxobicyclo[2.2.1]heptan-1-yl)methyl-, (1S)-(7,7-Dimethyl-2-oxobicyclo[2.2.1]heptan-1-yl)methyl-, Cyclohexylmethyl-, Trifluormethyl-, Phenyl-, Tolyl-, Naphthyl-, 4-Trifluormethylphenyl-, 3,5-Bis(trifluormethyl)phenyl-, 2,5-Bis(trifluormethyl)phenyl-, 4-Cyanophenyl-, 1,1,2,2,2-Pentafluorethanyl-, Nonafluorbutyl-, Pentafluorphenyl-, 2,3,5,6-Tetrafluorphenyl-, 4-Fluorphenyl-, 2,4-Difluorphenyl-, 3,5-Difluorphenyl-, 2,3,4,5,6-Pentafluorphenyl-, 4-Cyanophenyl-, 3-(Trifluormethyl)phenyl-, 2-(Trifluormethyl)phenyl-, 4-Methylphenyl-, 1-Naphthyl-, 2-Naphthyl-, 3,5-Difluorbenzyl-, 4-Fluorbenzyl-, 3-Trifluormethylbenzyl-, 4-Trifluormethylbenzyl-, 2,5-Dimethylbenzyl-, 2-Phenylethyl-, 4-Methoxyphenyl-, 4-n-Butylphenyl-, 4-t-Butylphenyl-, 4-Butoxyphenyl-, 2-Fluor-5-(trifluormethyl)phenyl-, 4-Ethylphenylgruppen ausgewählt ist.

6. Verfahren zur Synthese von Polymeren nach einem der Ansprüche 1 bis 3, **dadurch gekennzeichnet, dass**:
in einem ersten Schritt die Chlorsulfonierung eines Polymers der Formeln XVI, XVII, XVIII, XIX, XX, XXI, XXII, XXIII durchgeführt wird, wobei:
- p für die Anzahl von polymeren Einheiten des Polymers steht, wobei p von 40 bis 300 variiert,
um die chlorsulfonierten Polymere der Formeln XXIV, XXV, XXVI, XXVII, XXVIII, XXIX, XXX, XXXI, XXXII, XXXIII, XXXIV, XXXV, XXXVI, XXXVII und XXXVIII zu erhalten, wobei:
- m für den Prozentanteil an polymeren Einheiten, die ein Oxoaryl- oder Dioxoaryl-Motiv aufweisen, das durch eine Chlorsulfongruppierung funktionalisiert ist, steht, wobei dieser Prozentanteil zwischen 50 und 100 % variiert,
- n für den Prozentanteil an polymeren Einheiten, die ein Dioxoaryl-Motiv aufweisen, das nicht durch eine Chlorsulfongruppierung funktionalisiert ist, steht, wobei dieser Prozentanteil zwischen 0 und 50 % variiert,
- p für die Anzahl von polymeren Einheiten des Polymers steht, wobei p von 40 bis 300 variiert,
zu einer zweiten Zeit die Polymere der Formeln XXIV, XXV, XXVI, XXVII, XXVIII, XIX, XXX, XXXI, XXXII, XXXIII, XXXIV, XXXV, XXXVI, XXXVII und XXXVIII in Ammoniakgaslösung oder einer Ammoniaklösung reagiert werden, um die Polymere der Formeln XL, XLI, XLII, XLIII, XLIV, XLV, XLVI, XLVII, XLVIII, XLIX, L, LI, LII, LIII und LIV zu erhalten, 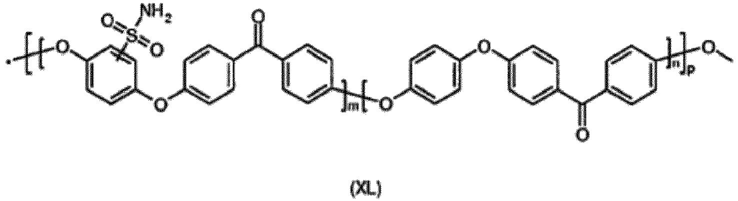 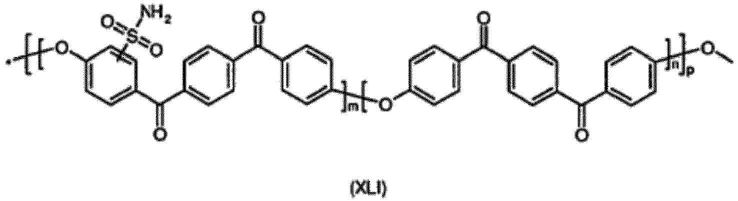 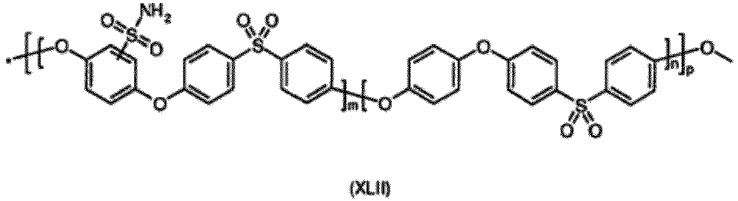 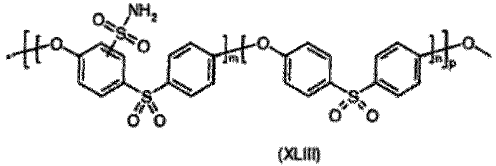 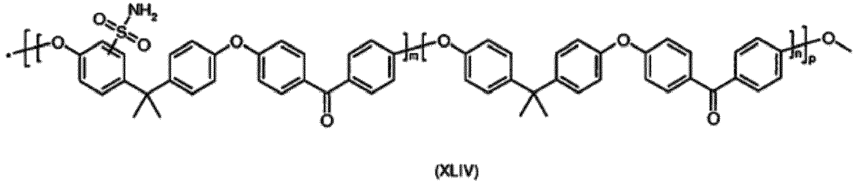 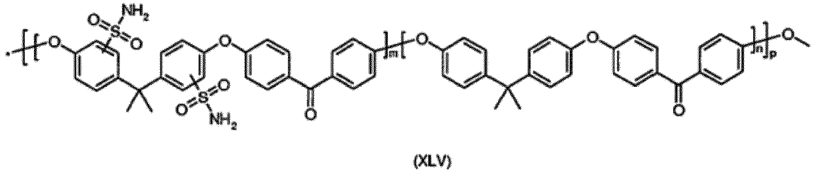 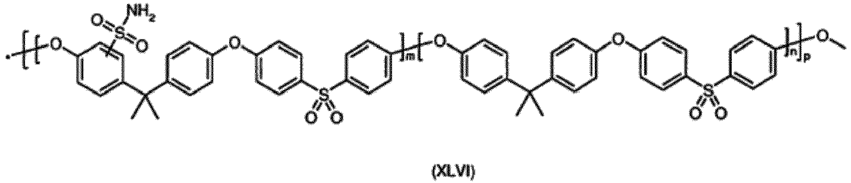 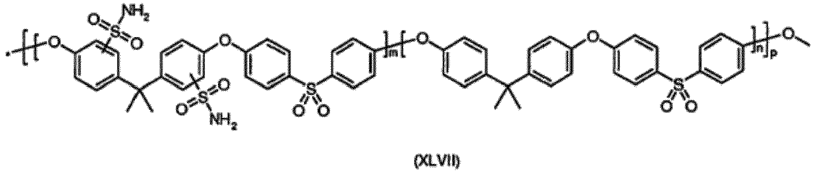 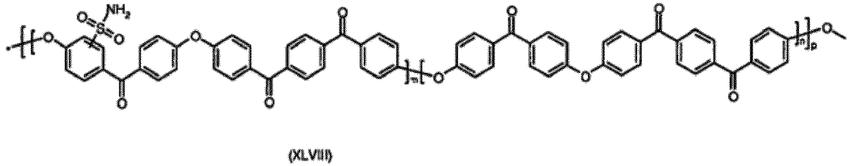 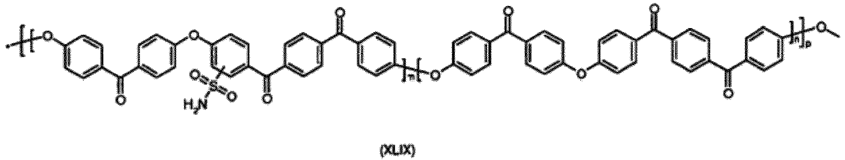 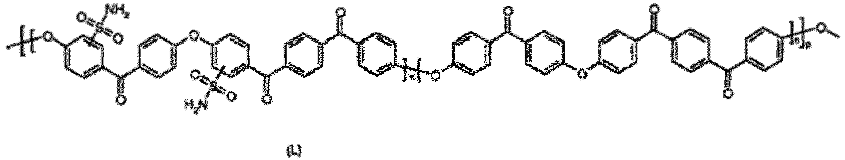 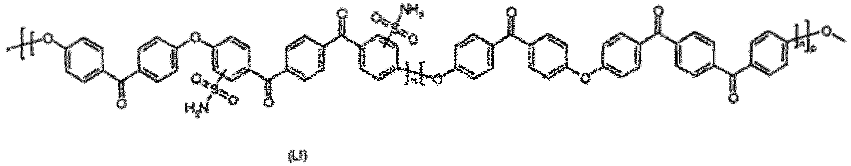 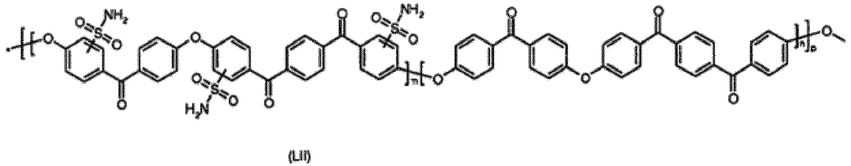 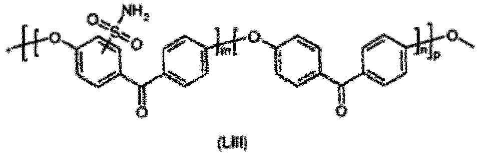 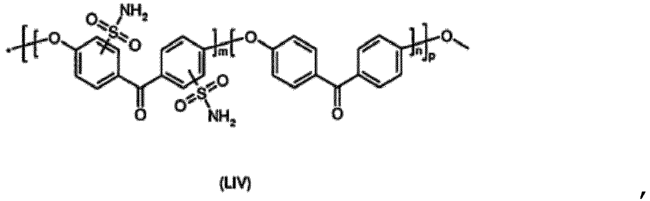 wobei:
- m für den Prozentanteil an polymeren Einheiten, die ein funktionalisiertes Oxoaryl- oder Dioxoaryl-Motiv aufweisen, das über eine Sulfonamidfunktion verfügt, steht, wobei dieser Prozentanteil zwischen 50 und 100 % variiert,
- n für den Prozentanteil an polymeren Einheiten, die ein Oxoaryl- oder Dioxoaryl-Motiv aufweisen, das nicht durch eine Sulfonamidfunktion funktionalisiert ist, steht, wobei dieser Prozentanteil zwischen 0 und 50 % variiert,
- p für die Anzahl von polymeren Einheiten des Polymers steht, wobei p von 40 bis 300 variiert,
zu einer dritten Zeit die Polymere der Formeln XL, XLI, XLII, XLIII, XLIV, XLV, XLVI, XLVII, XLVIII, XLIX, L, LI, LII, LIII und LIV mit einem Sulfonylhalogenid der Formel LV reagiert werden 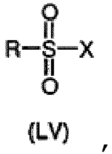 wobei:
- X für ein Fluor- oder Chlor- oder Bromatom oder eine Trifluormethansulfonyl- oder Alkylsulfonyl- oder Arylsulfonylgruppe steht;
- R für eine Gruppierung oder unterschiedliche Gruppierungen steht, die ausgewählt sind aus:
• einer Alkylgruppierung mit 1 bis 30 Kohlenstoffatomen, mehr bevorzugt mit 1 bis 10 Kohlenstoffatomen, linear oder verzweigt, gegebenenfalls durch ein Cycloalkyl-, Aryl-, Perfluoralkyl-, Polyfluoralkyl-, Mono- oder Polyethoxyl-Motiv substituiert; einer Cycloalkylgruppierung mit 1 bis 30 Kohlenstoffatomen, linear oder verzweigt, gegebenenfalls durch ein Cycloalkyl-, Aryl-, Perfluoralkyl-, Polyfluoralkyl-, Mono- oder Polyethoxyl-Motiv substituiert;
• einer Perfluor- oder Polyfluoralkylgruppierung, gegebenenfalls durch aromatische Gruppen substituiert;
• einer Aryl- oder Polyarylgruppierung, gegebenenfalls durch Alkyl-, Cycloalkyl-, Polyfluor- oder Perfluoralkyl-Motive, durch Nitrilfunktionen, Alkyl- oder Alkylsulfonylfunktionen, durch Fluoratome substituiert;
in Gegenwart einer Lithium- oder Natriumbase bei einer Temperatur, die zwischen 0 und 80 °C, vorzugsweise zwischen 20 und 60 °C liegt, in einem Lösungsmittelmedium.

7. Verfahren nach Anspruch 6, **dadurch gekennzeichnet, dass** die R-Gruppierung des Sulfonylhalogenids eine Methyl-, Ethyl-, Propyl-, Cyclopropyl-, Butyl-, 1-Decyl-, 1-Dodecyl-, 1-Hexandecyl-, 1-Octyldecyl-, (7,7-Dimethyl-2-oxobicyclo[2.2.1]heptan-1-yl)methyl-, ((1R)-7,7-Dimethyl-2-oxobicyclo[2.2.1]heptan-1-yl)methyl-, (1S)-(7,7-Dimethyl-2-oxobicyclo[2.2.1]heptan-1-yl)methyl-, Cyclohexylmethyl-, Trifluormethyl-, Phenyl-, Tolyl-, Naphthyl-, 4-Trifluormethylphenyl-, 3,5-Bis(trifluormethyl)phenyl-, Trifluorphenyl-, 4-Cyanophenyl-, 1,1,2,2,2-Pentafluorethanyl-, Nonafluorbutyl-, Pentafluorphenyl-, 2,3,5,6-Tetrafluorphenyl-, 4-Fluorphenyl-, 2,4-Difluorphenyl-, 3,5-Difluorphenyl-, 2,3,4,5,6-Pentafluorphenyl-, 4-(Trifluormethyl)phenyl-, 3-(Trifluormethyl)phenyl-, 2-(Trifluormethyl)phenyl-, 4-Methylphenyl-, 1-Naphthyl-, 2-Naphthyl-, 3,5-Difluorbenzyl-, 4-Fluorbenzyl-, 3-Trifluormethylbenzyl-, 4-Trifluormethylbenzyl-, 2,5-Dimethylbenzyl-, 2-Phenylethyl-, 4-Methoxyphenyl-, 4-n-Butylphenyl-, 4-t-Butylphenyl-, 4-Butoxyphenyl-, 2-Fluor-5-(trifluormethyl)phenyl-, 4-Ethylphenylgruppe ist.

8. Verfahren nach einem der Ansprüche 4 bis 7, **dadurch gekennzeichnet, dass** die Chlorsulfonierung bei einer Temperatur, die zwischen 0 und 80 °C liegt, durch ein Gemisch von 1 bis 10 Äquivalenten Chlorsulfonsäure, 1 bis 30 Äquivalenten Thionylchlorid, in Gegenwart von 1 bis 10 Äquivalenten eines Amids durchgeführt wird.

9. Verfahren nach einem der Ansprüche 4 bis 8, **dadurch gekennzeichnet, dass** die Base aus Lithiumhydroxid, Natriumhydroxid, Lithiummethylat, Natriummethylat, Lithiumethylat, Natriumethylat, Lithiumisopropylat, Natriumisopropylat, Lithium-tert.-butoxid, Natrium-tert.-butoxid, Lithiumhydrid, Natriumhydrid, n-Butyllithium, n-Butylnatrium, s-Butyllithium, Lithiumdiisopropylamid, tert.-Butyllithium, Methyllithium, Phenyllithium, Phenylnatrium, Benzyllithium, Benzylnatrium, Lithiumdimesylat, Natriumdimesylat, Lithiumcarbonat, Natriumcarbonat, Lithiumacetat, Natriumacetat ausgewählt ist, wobei die bevorzugten Basen jene sind, die während der Reaktion kein Wasser bilden.

10. Verfahren nach einem der Ansprüche 4 bis 9, **dadurch gekennzeichnet, dass** die Chlorsulfonierung in Gegenwart eines Amids, vorzugsweise N,N-Dimethylformamid, durchgeführt wird.

11. Verfahren nach einem der Ansprüche 4 bis 10, **dadurch gekennzeichnet, dass** die Chlorsulfonierungsreaktion in einem Lösungsmittel, vorzugsweise THF, Methyl-THF, Dichlormethan, Dichlorethan oder einem Lösungsmittelgemisch, vorgenommen wird.

12. Verfahren nach einem der Ansprüche 6 bis 11, **dadurch gekennzeichnet, dass** die Aminierungsreaktion von chlorsulfonierten Polymeren der Formeln XXIV, XXV, XXVI, XXVII, XXVIII, XIX, XXX, XXXI, XXXII, XXXIII, XXXIV, XXXV, XXXVI, XXXVII und XXXVIII, um die Sulfonamid-Polymere der Formeln XL, XLI, XLII, XLIII, XLIV, XLV, XLVI, XLVII, XLVIII, XLIX, L, LI, LII, LIII und LIV zu bilden, in einem Lösungsmittelmedium in einem Lösungsmittelmedium durch Ammoniakgas oder durch eine Ammoniaklösung in einem Lösungsmittel wie THF, Methyl-THF, Methanol, Dioxan, Isopropanol durchgeführt wird.

13. Verfahren nach einem der Ansprüche 6 bis 12, **dadurch gekennzeichnet, dass** die Aminierungsreaktion von chlorsulfonierten Polymeren der Formeln XXIV, XXV, XXVI, XXVII, XXVIII, XIX, XXX, XXXI, XXXII, XXXIII, XXXIV, XXXV, XXXVI, XXXVII und XXXVIII mit dem Sulfonamid der Formel XXXIX bei einer Temperatur, die zwischen -20 und 60 °C liegt, durchgeführt wird.

14. Synthesezwischenverbindungen zur Herstellung von Polymeren nach einem der Ansprüche 1 bis 3, **dadurch gekennzeichnet, dass** die Synthesezwischenverbindungen den Formeln XL, XLI, XLII, XLIII, XLIV, XLV, XLVI, XLVII, XLVIII, XLIX, L, LI, LII, LIII und LIV entsprechen: 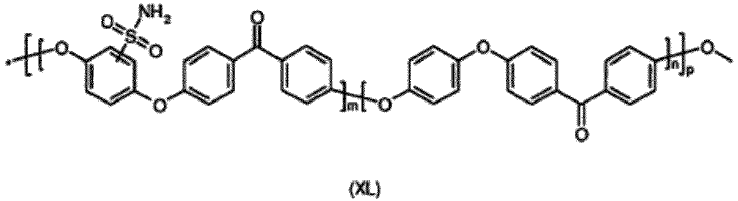 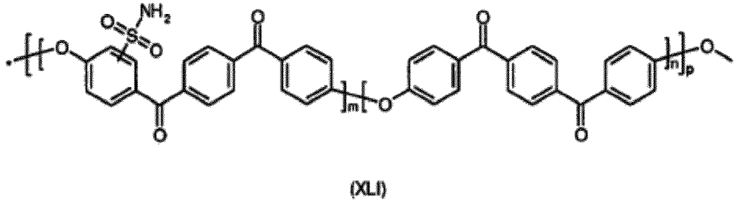 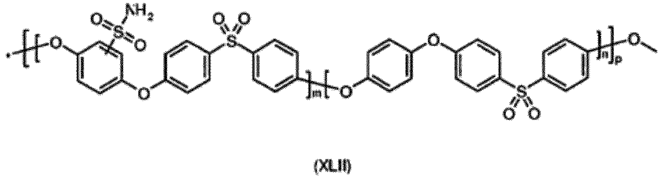 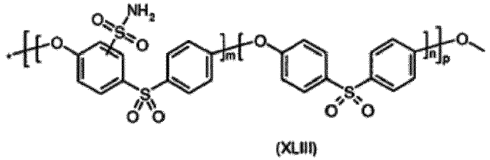 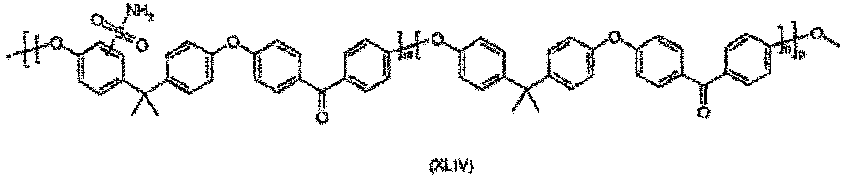 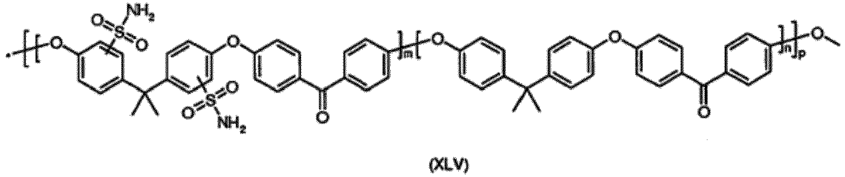 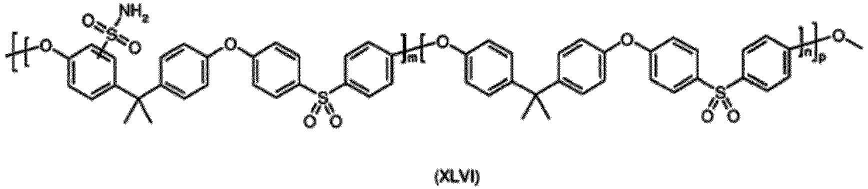 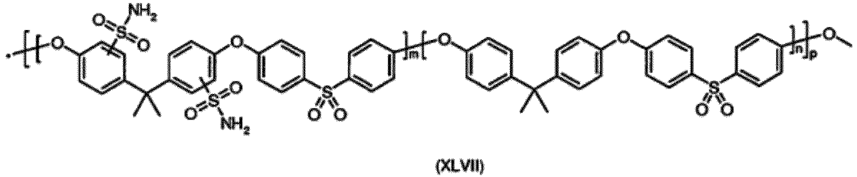 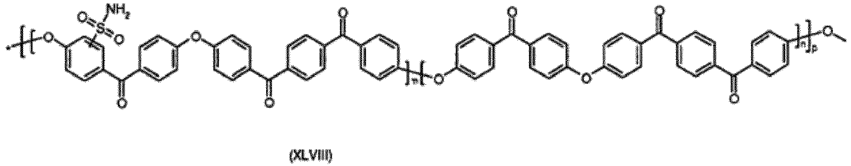 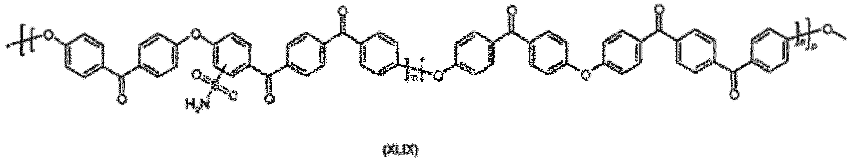 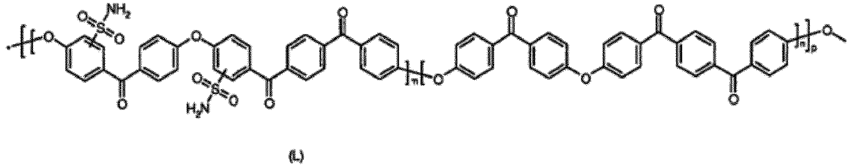 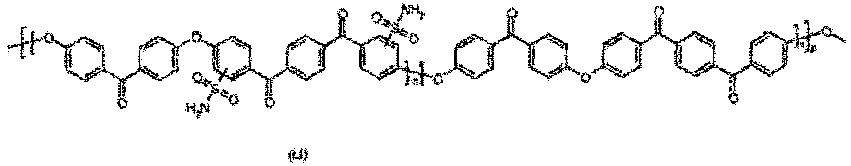 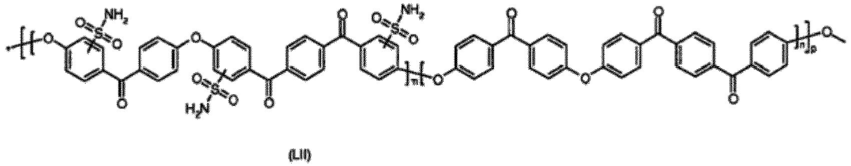 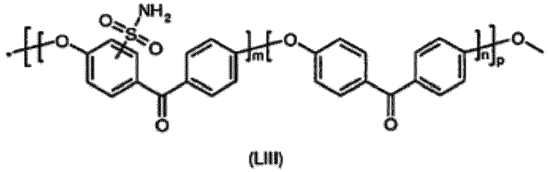 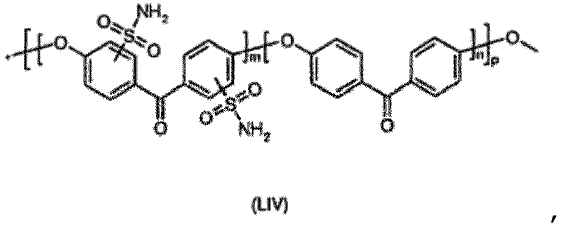 wobei:
- m für den Prozentanteil an polymeren Einheiten, die ein funktionalisiertes Oxoaryl- oder Dioxoaryl-Motiv aufweisen, das über eine Sulfonamidfunktion verfügt, steht, wobei dieser Prozentanteil zwischen 50 und 100 % variiert, mehr bevorzugt zwischen 90 und 100 % variiert;
- n für den Prozentanteil an polymeren Einheiten, die ein Oxoaryl- oder Dioxoaryl-Motiv aufweisen, das nicht durch eine Sulfonamidfunktion funktionalisiert ist, steht, wobei dieser Prozentanteil zwischen 0 und 50 % variiert, mehr bevorzugt zwischen 0 und 10 % variiert;
- p für die Anzahl von polymeren Einheiten des Polymers steht, wobei p von 40 bis 300 variiert, mehr bevorzugt p zwischen 60 und 200 variiert.

15. Verwendung von Polymeren nach einem der Ansprüche 1 bis 3 zum Bilden von Filmen mit einer Dicke, die zwischen 10 µm und 200 µm liegt.

16. Verfahren zur Herstellung von Filmen, die als Elektrolyten für Batterien dienen, **dadurch gekennzeichnet, dass** in einem Medium in Abwesenheit von Spuren von Wasser und Feuchtigkeit gearbeitet wird, wobei eines der Polymere nach einem der Ansprüche 1 bis 3 in einem wasserfreien Lösungsmittel solubilisiert wird, die Polymerlösung auf einem festen Träger abgeschieden wird und anschließend das Lösungsmittel durch Erhitzen auf eine Temperatur, die zwischen 20 und 80 °C liegt, Spülen mit einem inerten Gas oder Beaufschlagen mit einem verminderten Druck verdampft wird.

17. Verfahren nach Anspruch 16, **dadurch gekennzeichnet, dass** das Lösungsmittel DMSO ist.

18. Elektrolyten für Batterien, **dadurch gekennzeichnet, dass** sie Filme von Polymeren nach einem der Ansprüche 1 bis 3 umfassen und dass sie eine Leitfähigkeit, die zwischen 10⁻⁸ und 2 x 10⁻³ S/cm liegt, in einem Lösungsmittelmedium und ohne Lösungsmittel zeigen.

19. Elektrolyten für Batterien, **dadurch gekennzeichnet, dass** sie Filme von Polymeren nach einem der Ansprüche 1 bis 3 umfassen und in einem Temperaturbereich, der zwischen 20 und 100 °C liegt, verwendet werden.

## Claims

1. Polymers of the polyaryl ether ketone family or polyether sulfone polymers containing grafted bis(sulfonyl)imide lithium or sodium salts satisfying formulas I, II, III, IV, V, VI, VII, VIII, IX, X, XI, XII, XIII, XIV and XV 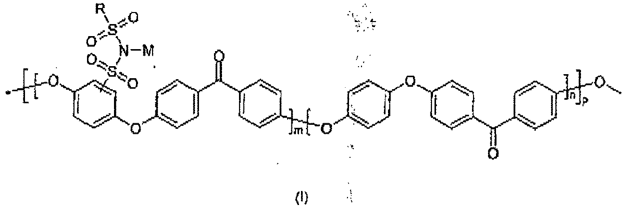 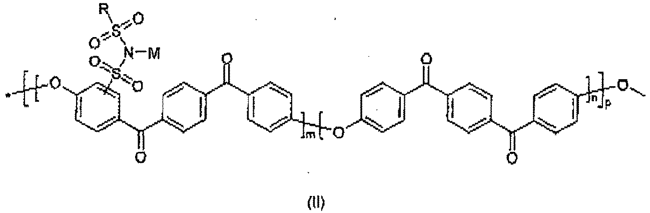 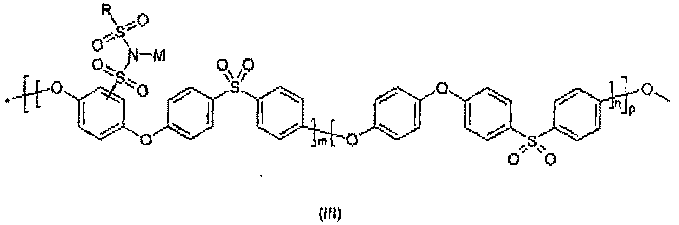 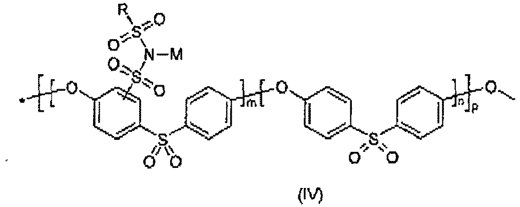 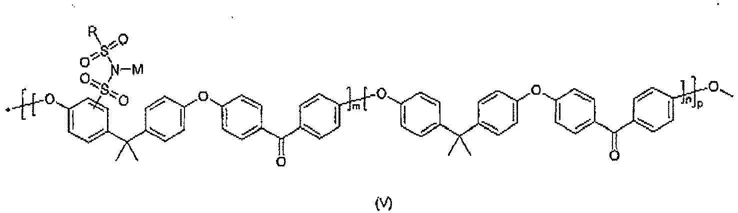 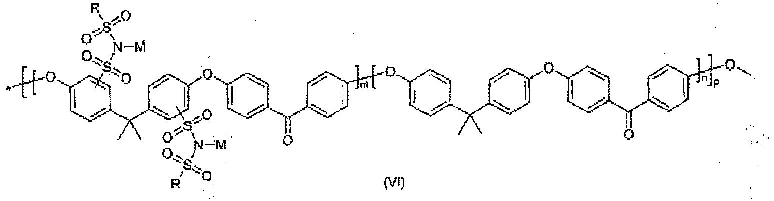 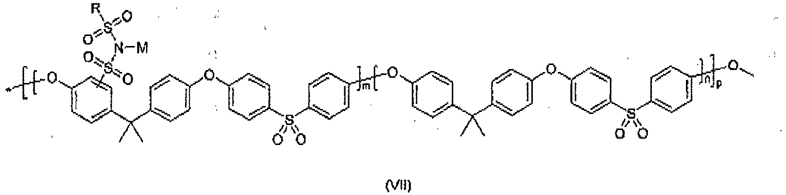 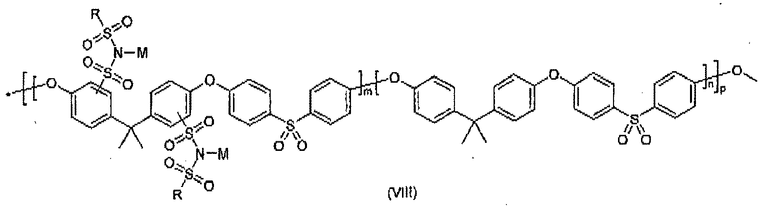 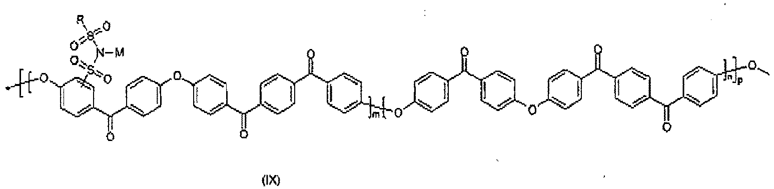 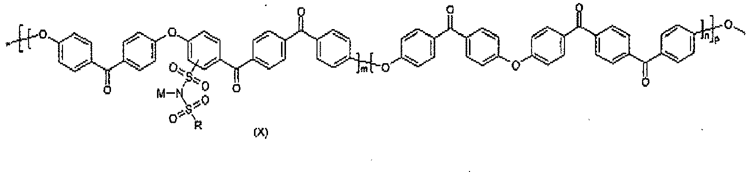 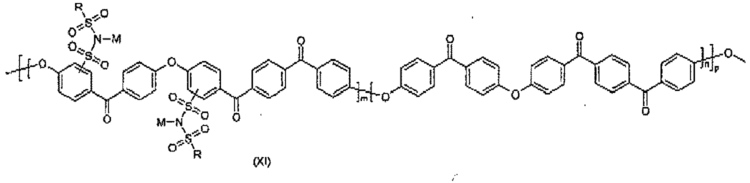 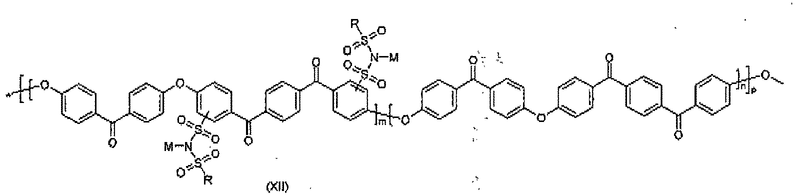 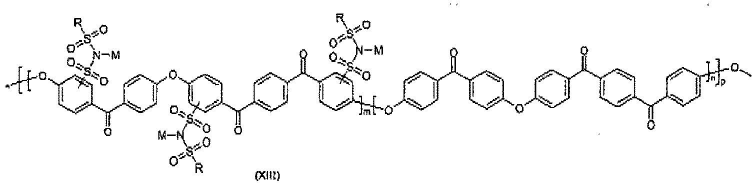 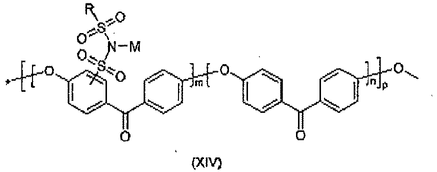 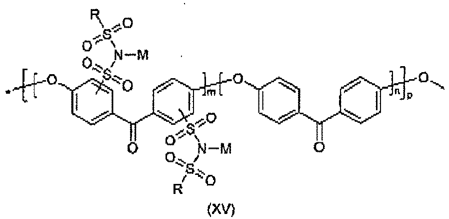 wherein:
- M represents a lithium or sodium atom
- R represents a group or different groups chosen from:
-- an alkyl or cycloalkyl group having 1 to 30 linear or branched carbon atoms optionally substituted by a cycloalkyl, aryl, perfluoroalkyl, polyfluoroalkyl, mono or polyethoxylated motif;
-- a perfluoro- or polyfluoroalkyl group optionally substituted by aromatic groups;
-- an aryl or polyaryl group optionally substituted by alkyl, cycloalkyl, polyfluoro- or perfluoroalkyl motifs, nitrile functions, alkyl or alkylsulfonyl functions, fluorine atoms;
- m represents the percentage of polymer units having an oxoaryl or dioxoaryl motif having a grafted bis(sulfonyl)imidide salt, this percentage varying between 50 and 100%, more preferably varying between 90 and 100%,
- n represents the percentage of polymer units having no oxoaryl or dioxoaryl motif functionalized by a bis(sulfonyl)imide motif, this percentage varying between 0 and 50%, more preferably varying between 0 and 10%,
- p represents the number of polymer units of the polymer; p varying from 40 to 300.

2. Polymers according to claim 1, **characterized in that**:
- M represents a lithium or sodium atom;
- R represents one or more different groups chosen from:
-- an alkyl group with 1 to 10 carbon atoms such as the methyl, ethyl, propyl, butyl, pentyl, hexyl, cyclohexyl, ethylhexyl groups;
-- a trifluoromethyl, pentafluoroethyl, nonafluorobutyl, 1,1,2,2-tetrafluoroethyl group;
-- an aryl group of the phenyl, tolyl, naphthyl, trifluoromethylphenyl, bis(trifluoromethyl)phenyl, cyanophenyl, alkylsulfonylphenyl, arylsulfonylphenyl, methoxyphenyl, butoxyphenyl, pentafluorophenyl, alkylsulfonylphenyl, fluorophenyl type,
- m represents the percentage of polymer units having an oxoaryl or dioxoaryl motif functionalized by a bis(sulfonyl)imide motif, this percentage varying between 90 and 100%;
- n represents the percentage of polymer units having an oxoaryl or a dioxoaryl motif non-functionalized by a bis(sulfonyl)imide motif, this percentage varying between 0 and 10%;
- p represents the number of polymer units of the polymer; p varying from 60 to 200.

3. Polymers according to one of claims 1 to 2, **characterized in that**:
- M represents a lithium or sodium atom,
- R is a methyl, ethyl, propyl, cyclopropyl, butyl, 1-decyl, 1-dodecyl, 1-hexanedecyl, 1-octyldecyl, (7,7-dimethyl-2-oxobicyclo[2.2.1]heptan-1-yl) methyl, ((1R)-7, 7-dimethyl-2-oxobicyclo[2.2.1]heptan-1-yl) methyl, (1S) - (7,7-dimethyl-2-oxobicyclo[2.2.1]heptan-1-yl) methyl, cyclohexylmethyl, trifluoromethyl, phenyl, tolyl, naphthyl, 4-trifluoromethylphenyl, 3,5-bis(trifluoromethyl)phenyl, 4-cyanophenyl, 1,1,2,2,2-pentafluoroethanyl, nonafluorobutyl, pentafluorophenyl, 2,3,5,6-tetrafluorophenyl, 4-fluorophenyl, 2,4-difluorophenyl, 3,5-difluorophenyl, 2,3,4,5,6-pentafluorophenyl, 4-cyanophenyl, 4-(trifluoromethyl)phenyl, 3-(trifluoromethyl)phenyl, 2-(trifluoromethyl)phenyl, 4-methylphenyl, 1-naphthyl, 2-naphthyl, 3,5-difluorobenzyl, 4-fluorobenzyl, 3-trifluoromethylbenzyl, 4-trifluoromethylbenzyl, 2,5-dimethylbenzyl, 2-phenylethyl, 4-methoxyphenyl, 4-n-butylphenyl, 4-t-butylphenyl, 4-butoxyphenyl, 2-fluoro-5-(trifluoromethyl)phenyl, or 4-ethylphenyl group;
- m represents the percentage of polymer units having a dioxoaryl motif functionalized by a bis(sulfonyl)imide, this percentage varying between 90 and 100%;
- n represents the percentage of polymer units having a dioxoaryl motif non-functionalized by a bis(sulfonyl)imide, this percentage varying between 0 and 10%;
- p represents the number of polymer units of the polymer, p varying from 60 to 200.

4. Method for synthesis of polymers according to one of claims 1 to 3, **characterized in that**:
in a first step, the chlorosulfonation of a polymer of formulas XVI, XVII, XVIII, XIX, XX, XXI, XXII, XXIII by a mixture of chlorosulfonic acid, thionyl chloride and a formamide 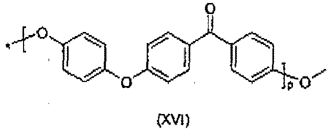 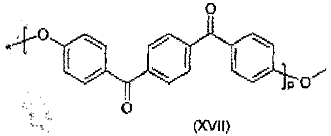 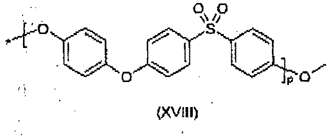 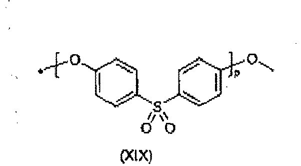 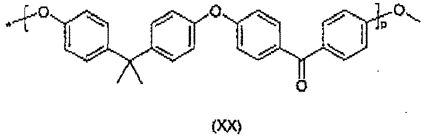 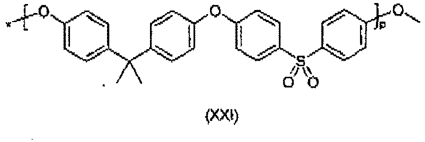 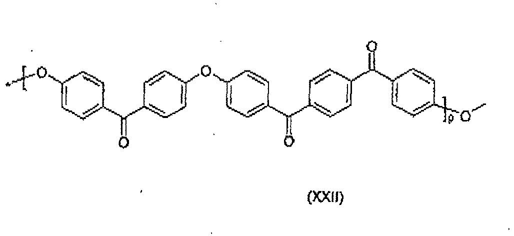 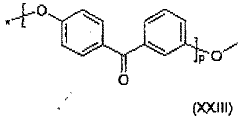 wherein:
- p represents the number of polymer units of the polymer, p varying from 40 to 300, and preferably between 60 and 200,
in order to obtain the polymers of formulas XXIV, XXV, XXVI, XVII, XXVIII, XIX, XXX, XXXI, XXXII, XXXIII, XXXIV, XXXV, XXXVI, XXXVII and XXXVIII 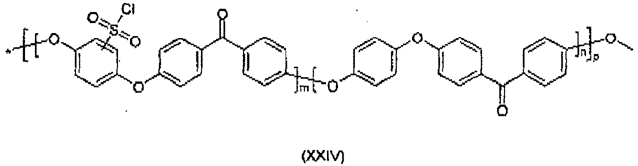 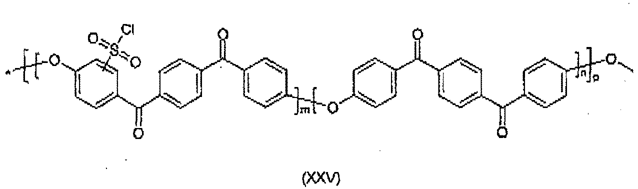 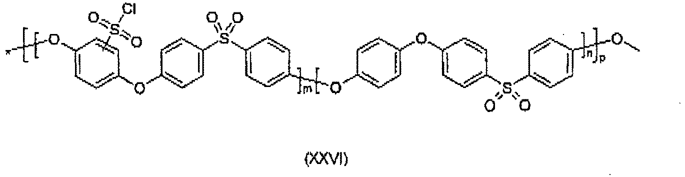 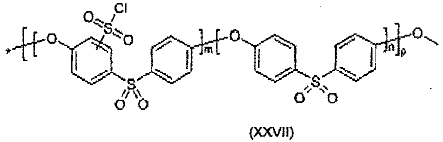 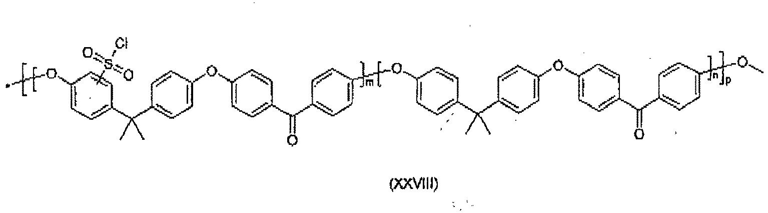 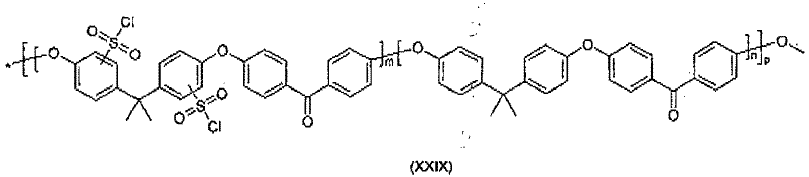 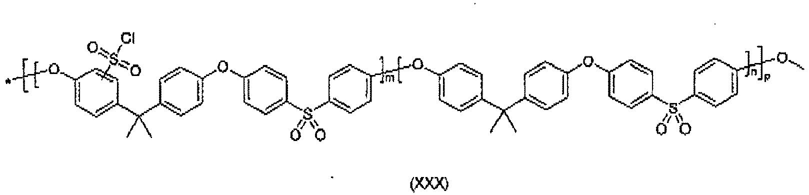 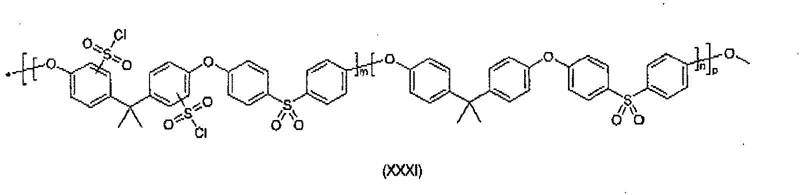 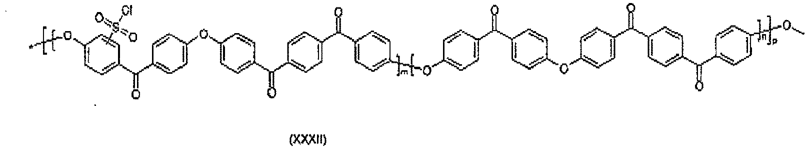 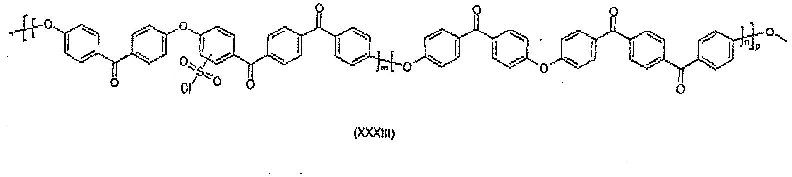 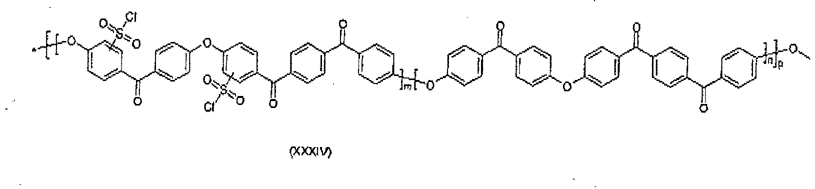 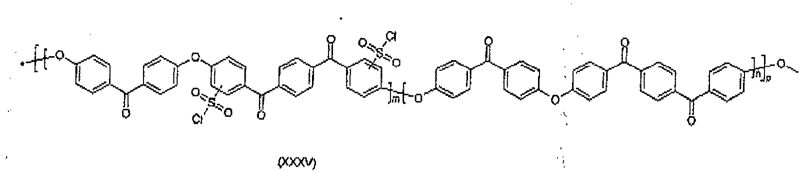 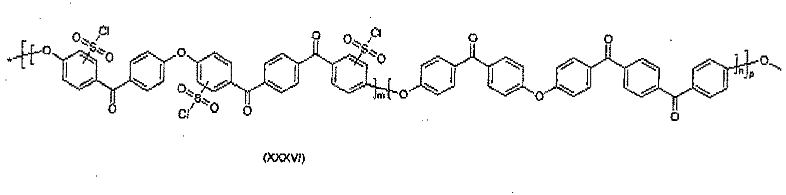 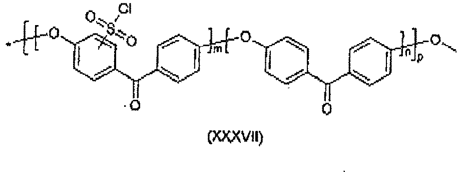 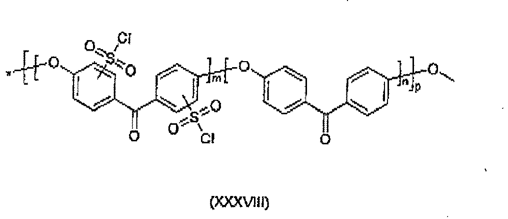 wherein:
- m represents the percentage of polymer units having an oxoaryl or dioxoaryl motif functionalized by a chlorosulfonated group, this percentage varying between 50 and 100%, more preferably varying between 90 and 100%,
- n represents the percentage of polymer units having a dioxoaryl motif non-functionalized by a chlorosulfonated group, this percentage varying between 0 and 50%, more preferably varying between 0 and 10%,
- p represents the number of polymer units of the polymer, p varying from 40 to 300, more preferably p varying between 60 and 200,
in a second step, a reaction is produced on the polymers of formulas XXIV, XXV, XXVI, XVII, XXVIII, XIX, XXX, XXXI, XXXII, XXXIII, XXXIV, XXXV, XXXVI, XXXVII and XXXVIII with a sulfonamide of formula XXXIX in a solvent medium 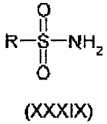 wherein
- R represents a group or different groups chosen from:
-- an alkyl or cycloalkyl group having 1 to 30 linear or branched carbon atoms, optionally substituted by a cycloalkyl, aryl, perfluoroalkyl, polyfluoroalkyl, mono or polyethoxyl motif;
-- a perfluoro- or polyfluoroalkyl group optionally substituted by aromatic groups;
-- an aryl or polyaryl group optionally substituted by alkyl, cycloalkyl, polyfluoro- or perfluoroalkyl motifs, by nitrile functions, by alkyl- or alkylsulfonyl functions, by fluorine atoms;
- m represents the percentage of polymer units having an oxoaryl or dioxoaryl motif having a grafted bis(sulfonyl)imidide salt, this percentage varying between 50 and 100%,
in the presence of a lithium or sodium base.

5. Method according to claim 4, **characterized in that** the R group of the XXXIX sulfonamide is chosen from the methyl, ethyl, propyl, cyclopropyl, butyl, 1-decyl, 1-dodecyl, 1-hexanedecyl, 1-octyldecyl, (7,7-dimethyl-2-oxobicyclo[2.2.1]heptan-1-yl) methyl, ((1R)-7,7-dimethyl-2-oxobicyclo[2.2.1]heptan-1-yl) methyl, (1S) - (7,7-dimethyl-2-oxobicyclo[2.2.1]heptan-1-yl) methyl, cyclohexylmethyl, trifluoromethyl, phenyl, tolyl, naphthyl, 4-trifluoromethylphenyl, 3,5-bis (trifluoromethyl) phenyl, 2,5-bis (trifluoromethyl) phenyl, 4-cyanophenyl, 1,1,2,2,2-pentafluoroethanyl, nonafluorobutyl, pentafluorophenyl, 2,3,5,6-tetrafluorophenyl, 4-fluorophenyl, 2,4-difluorophenyl, 3,5-difluorophenyl, 2,3,4,5,6-pentafluorophenyl, 4-cyanophenyl, 3-(trifluoromethyl) phenyl, 2-(trifluoromethyl) phenyl, 4-methylphenyl, 1-naphthyl, 2-naphthyl, 3,5-difluorobenzyl, 4-fluorobenzyl, 3-trifluoromethylbenzyl, 4-trifluoromethylbenzyl, 2,5-dimethylbenzyl, 2-phenylethyl, 4-methoxyphenyl, 4-n-butylphenyl, 4-t-butylphenyl, 4-butoxyphenyl, 2-fluoro-5-(trifluoromethyl) phenyl, or 4-ethylphenyl groups.

6. Method for synthesis of polymers according to one of claims 1 to 3, **characterized in that**:
in a first step, the chlorosulfonation of a polymer of formulas XVI, XVII, XVIII, XIX, XX, XXI, XXII and XXIII is performed, wherein:
- p represents the number of polymer units of the polymer, p varying from 40 to 300,
in order to obtain the chlorosulfonated polymers of formulas XXIV, XXV, XXVI, XVII, XXVIII, XIX, XXX, XXXI, XXXII, XXXIII, XXXIV, XXXV, XXXVI, XXXVII and XXXVIII, wherein:
- m represents the percentage of polymer units having an oxoaryl or dioxoaryl motif functionalized by a chlorosulfonated group, this percentage varying between 50 and 100%,
- n represents the percentage of polymer units having a dioxoaryl motif non-functionalized by a chlorosulfonated group, this percentage varying between 0 and 50%,
- p represents the number of polymer units of the polymer, p varying from 40 to 300,
in a second step, a reaction is produced on the polymers of formulas XXIV, XXV, XXVI, XVII, XXVIII, XIX, XXX, XXXI, XXXII, XXXIII, XXXIV, XXXV, XXXVI, XXXVII and XXXVIII in solution with ammonia gas or in an ammonia solution in order to obtain the polymers of formulas XL, XLI, XLII, XLIII, XLIV, XLV, XLVI, XLVII, XLVIII, XLIX, L, LI, LII, LIII and LIV, 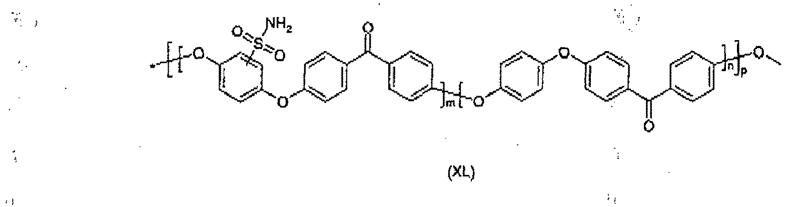 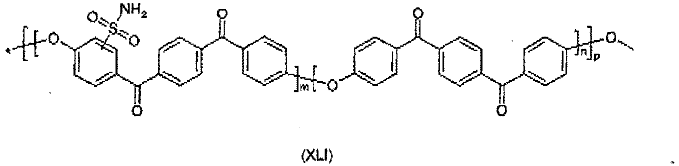 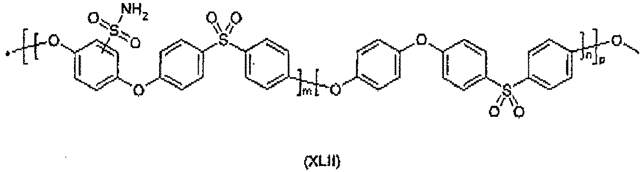 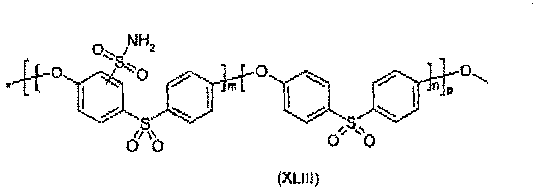 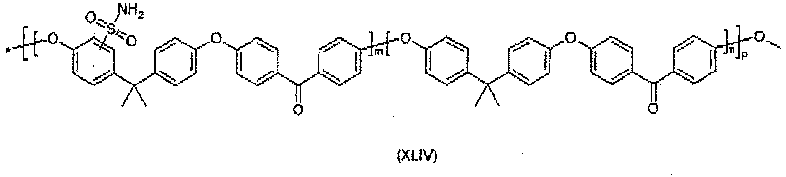 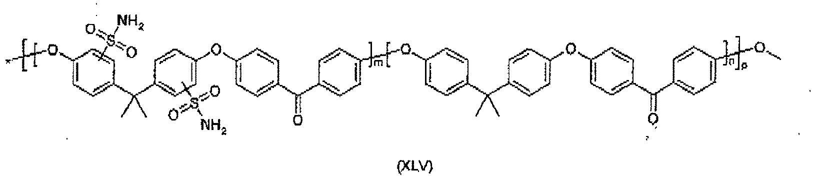 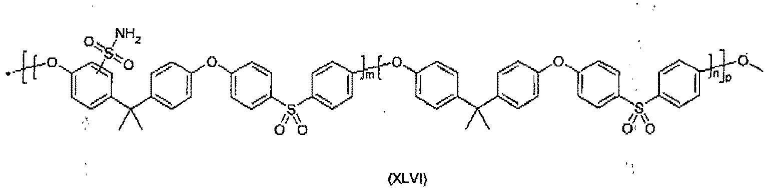 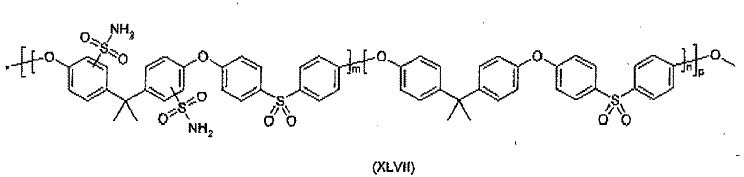 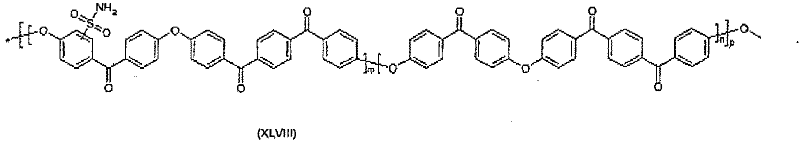 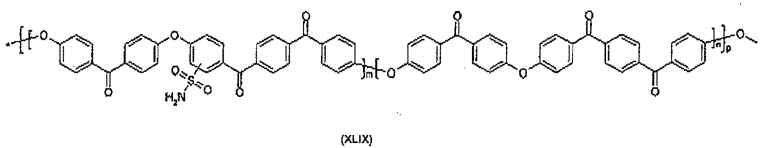 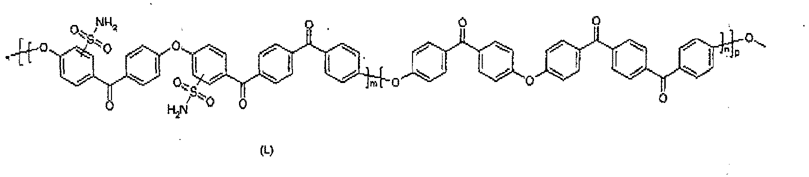 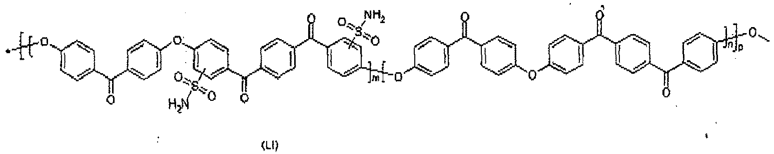 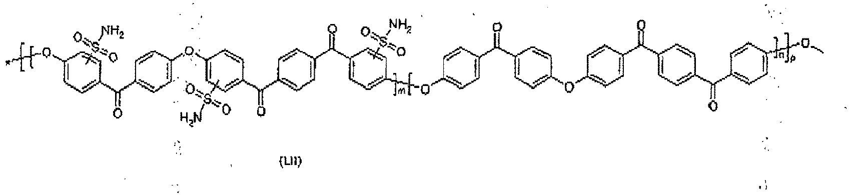 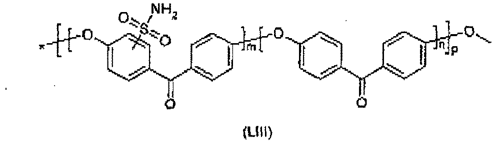 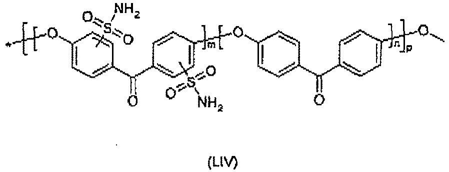 wherein:
- m represents the percentage of polymer units having a functionalized oxoaryl or dioxoaryl motif having a sulfonamide function, this percentage varying between 50 and 100%,
- n represents the percentage of polymer units having an oxoaryl or dioxoaryl motif non-functionalized by a sulfonamide function, this percentage varying between 0 and 50%,
- p represents the number of polymer units of the polymer, p varying from 40 to 300,
in a third step, a reaction is produced on the polymers of formula XL, XLI, XLII, XLIII, XLIV, XLV, XLVI, XLVII, XLVIII, XLIX, L, LI, LII, LIII and LIV with a sulfonyl halogenide of formula LV 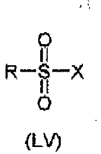 wherein
- X represents a fluorine or chlorine or bromine atom or a trifluoromethanesulfonyl or alkylsulfonyl or arylsulfonyl group;
- R represents a group or different groups chosen from:
-- an alkyl group having 1 to 30 carbon atoms, more preferably having 1 to 10 carbon atoms, linear or branched, optionally substituted by a cycloalkyl, aryl, perfluoroalkyl, polyfluoroalkyl, mono or polyethoxyl motif; a cycloalkyl group having 1 to 30 linear or branched carbon atoms, optionally substituted by a cycloalkyl, aryl or perfluoralkyl motif, mono- or polyethoxylated;
-- a perfluoro- or polyfluoroalkyl group optionally substituted by aromatic groups;
-- an aryl or polyaryl group optionally substituted by alkyl, cycloalkyl, polyfluoro- or perfluoroalkyl motifs, by nitrile functions, by alkyl- or alkylsulfonyl functions, by fluorine atoms;
in the presence of a lithium or sodium base at a temperature of between 0 and 80°C, preferably between 20 and 60°C in a solvent medium.

7. Method according to claim 6, **characterized in that** the R group of the sulfonyl halogenide is a methyl, ethyl, propyl, cyclopropyl, butyl, 1-decyl, 1-dodecyl, 1-hexanedecyl, 1-octyldecyl, (7,7-dimethyl-2-oxobicyclo[2.2.1]heptan-1-yl) methyl, ((1R)-7,7-dimethyl-2-oxobicyclo[2.2.1]heptan-1-yl) methyl, (1S)-(7,7-dimethyl-2-oxobicyclo[2.2.1]heptan-1-yl) methyl, cyclohexylmethyl, trifluoromethyl, phenyl, tolyl, naphthyl, 4-trifluoromethylphenyl, 3,5-bis (trifluoromethyl) phenyl, trifluorophenyl, 4-cyanophenyl, 1,1,2,2,2-pentafluoroethanyl, nonafluorobutyl, pentafluorophenyl, 2,3,5,6-tetrafluorophenyl, 4-fluorophenyl, 2,4-difluorophenyl, 3,5-difluorophenyl, 2,3,4,5,6-pentafluorophenyl, 4-(trifluoromethyl) phenyl, 3-(trifluoromethyl) phenyl, 2-(trifluoromethyl) phenyl, 4-methylphenyl, 1-naphthyl, 2-naphthyl, 3,5-difluorobenzyl, 4-fluorobenzyl, 3-trifluoromethylbenzyl, 4-trifluoromethylbenzyl, 2,5-dimethylbenzyl, 2-phenylethyl, 4-methoxyphenyl, 4-n-butylphenyl, 4-t-butylphenyl, 4-butoxyphenyl, 2-fluoro-5-(trifluoromethyl) phenyl, or 4-ethylphenyl group.

8. Method according to one of claims 4 to 7, **characterized in that** the chlorosulfonation is performed at a temperature of between 0 and 80°C by a mixture of 1 to 10 equivalents of chlorosulfonic acid, 1 to 30 equivalents of thionyl chloride in the presence of 1 to 10 equivalents of an amide.

9. Method according to one of claims 4 to 8, **characterized in that** the base is chosen from lithine, soda, lithium methylate, sodium methylate, lithium ethylate, sodium ethylate, lithium isopropylate, sodium isopropylate, lithium tertiobutylate, sodium tertiobutylate, lithium hydride, sodium hydride, n-butyllithium, n-butylsodium, s-butyllithium, lithium diisopropylamidure, tert-butyllithium, methyllithium, phenyllithium, phenylsodium, benzyllithium, benzylsodium, lithium dimsylate, sodium dimsylate, lithium carbonate, sodium carbonate, lithium acetate and sodium acetate, the preferred bases being those that do not form water during the reaction.

10. Method according to one of claims 4 to 9, **characterized in that** the chlorosulfonation is performed in the presence of an amide, preferably N,N-dimethylformamide.

11. Method according to one of claims 4 to 10, **characterized in that** the chlorosulfonation reaction is performed in a solvent, preferably THF, methyl THF, dichloromethane, dichloroethane or a mixture of solvents.

12. Method according to one of claims 6 to 11, **characterized in that** the amination reaction of the chlorosulfonated polymers of formulas XXIV, XXV, XXVI, XVII, XXVIII, XIX, XXX, XXXI, XXXII, XXXIII, XXXIV, XXXV, XXXVI, XXXVII and XXXVIII, in order to form the sulfonamide polymers of formulas XL, XLI, XLII, XLIII, XLIV, XLV, XLVI, XLVII, XLVIII, XLIX, L, LI, LII, LIII and LIV is performed in a solvent medium with ammonia gas or an ammonia solution in a solvent such as THF, methyl THF, methanol, dioxane and isopropanol.

13. Method according to one of claims 6 to 12, **characterized in that** the amination reaction of the polymers of formulas XXIV, XXV, XXVI, XVII, XXVIII, XIX, XXX, XXXI, XXXII, XXXIII, XXXIV, XXXV, XXXVI, XXXVII and XXXVIII with the sulfonamide of formula XXXIX is performed at a temperature of between -20°C and 60°C.

14. Synthesis intermediates for the preparation of polymers according to one of claims 1 to 3, **characterized in that** the synthesis intermediates satisfy formulas XL, XLI, XLII, XLIII, XLIV, XLV, XLVI, XLVII, XLVIII, XLIX, L, LI, LII, LIII and LIV 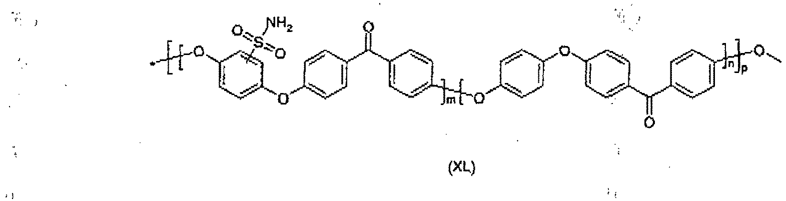 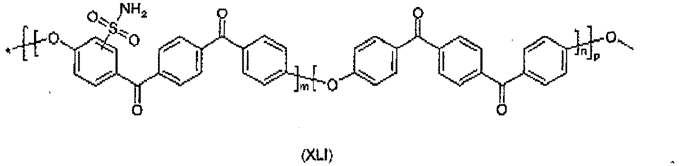 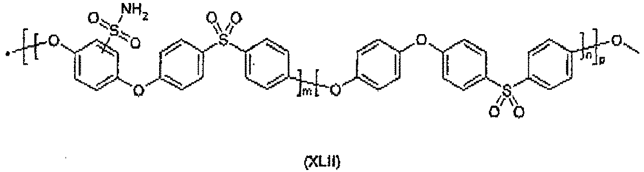 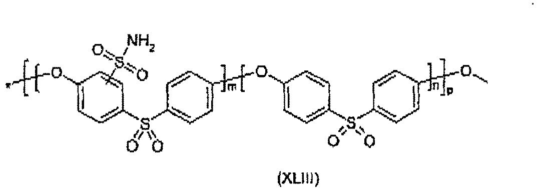 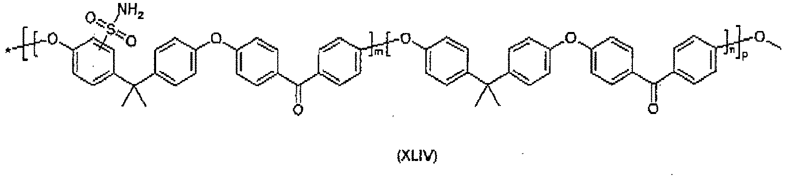 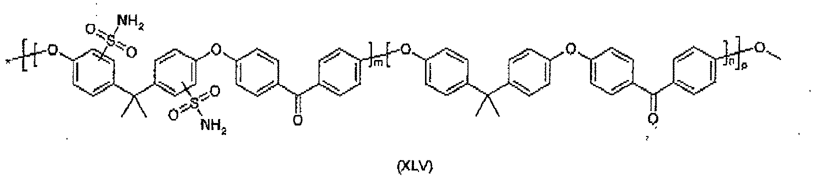 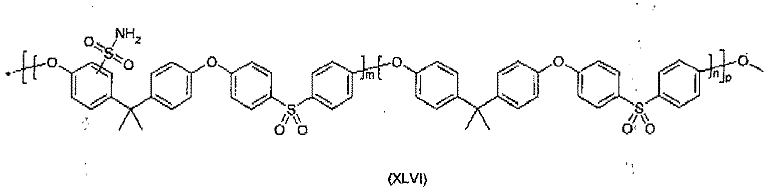 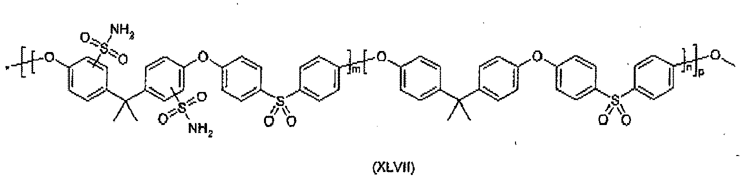 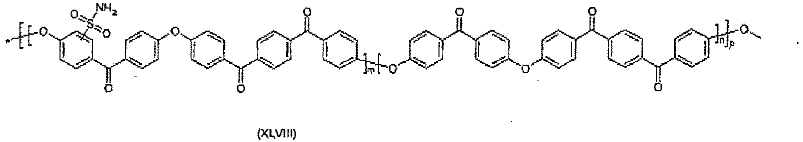 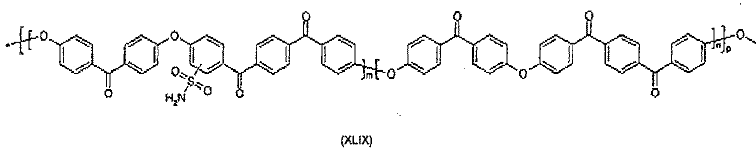 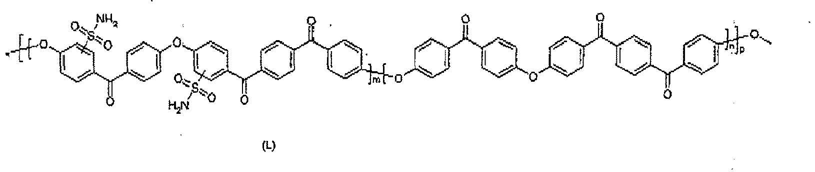 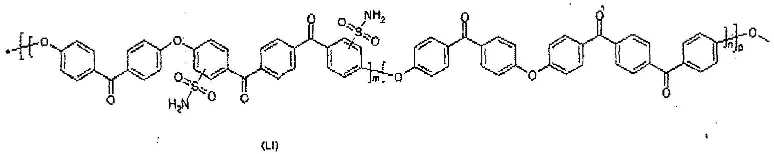 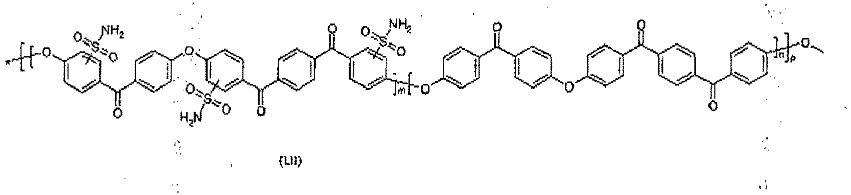 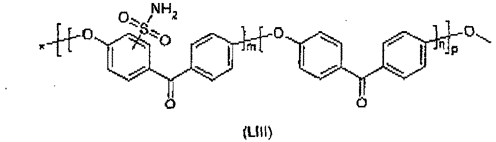 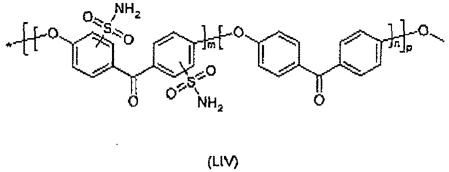 wherein:
- m represents the percentage of polymer units having a functionalized oxoaryl or dioxoaryl motif having a sulfonamide function, this percentage varying between 50 and 100%, more preferably varying between 90 and 100%,
- n represents the percentage of polymer units having an oxoaryl or dioxoaryl motif non-functionalized by a sulfonamide function, this percentage varying between 0 and 50%, more preferably varying between 0 and 10%,
- p represents the number of polymer units of the polymer, p varying from 40 to 300, more preferably p varying between 60 and 200.

15. Use of the polymers according to one of claims 1 to 3 in order to form films having a thickness of between 10 µm and 200 µm.

16. Method for preparing films serving as electrolytes for batteries, **characterized in that** it is performed in a medium in the absence of traces of water and moisture by solubilizing one of the polymers according to one of claims 1 to 3 in an anhydrous solvent, depositing the polymer solution on a solid support and then evaporating the solvent, by heating at a temperature of between 20 and 100°C, by inert gas sweeping or by applying reduced pressure.

17. Method according to claim 16 **characterized in that** the solvent is DMSO.

18. Electrolytes for batteries, **characterized in that** they comprise polymer films according to one of claims 1 to 3, and **in that** they have a conductivity between 10⁻⁸ and 2 X 10⁻³ S/cm in a solvent medium and without solvent.

19. Electrolytes for batteries, **characterized in that** they comprise polymer films according to one of claims 1 to 3 and are used in a temperature range of between 20 and 100°C.
